# EUROPEAN PATENT APPLICATION

(11) **EP 4 538 790 A1**
(43) Date of publication of application: **16.04.2025**
(21) Application number: 23820113.1
(22) Date of filing: 08.06.2023
(51) Int. Cl.: G03B 17/12, G03B 30/00, G02B 7/02, H04N 23/55, H04N 23/57, H04N 23/54, G03B 5/04, G03B 3/00, G03B 13/36

(54) **CAMERA ACTUATOR AND CAMERA MODULE INCLUDING SAME**

(30) Priority: 10.06.2022 KR 20220070585; 04.08.2022 KR 20220097352
(71) Applicant: LG INNOTEK CO. LTD, Gangseo-gu Seoul 07796 (KR)
(72) Inventor: LEE, Sung Guk, Seoul 07796 (KR); SHIN, Yeo Jeong, Seoul 07796 (KR)
(74) Representative: Plasseraud IP
(86) International application number: PCT/KR2023/007865
(87) International publication number: WO 2023/239178

(57) **Abstract**

Embodiments of the present disclosure disclose a camera actuator including a housing, a first lens assembly and a second lens assembly configured to move in an optical axis direction with respect to the housing, a first driving unit configured to move the first lens assembly, a second driving unit configured to move the second lens assembly, and a first yoke disposed to overlap the first driving unit in a direction perpendicular to the optical axis direction, wherein the first yoke includes a first region and a second region having a different thickness from the first region.

## Description

### [Technical Field]

The present disclosure relates to a camera actuator and a camera module including the same.

### [Background Art]

A camera is a device for taking pictures or videos of subjects and is mounted on a mobile device, a drone, a vehicle, etc. A camera module may have an image stabilization (IS) function of correcting or preventing the image shake caused by the movement of a user in order to improve the quality of the image, an auto focusing (AF) function of aligning a focal length of a lens by automatically adjusting an interval between an image sensor and the lens, and a zooming function of capturing a remote subject by increasing or decreasing the magnification of the remote subject through a zoom lens.

Meanwhile, a pixel density of the image sensor increases as a resolution of the camera increases, and thus a size of the pixel becomes smaller, and as the pixel becomes smaller, the amount of light received for the same time decreases. Therefore, as the camera has a higher pixel density, the image shake caused by hand shaking due to a shutter speed decreased in a dark environment may more severely occur. As a representative IS technique, there is an optical image stabilizer (OIS) technique of correcting motion by changing a path of light.

According to a general OIS technique, the motion of a camera may be detected through a gyro sensor or the like, and a lens may tilt or move, or a camera module including a lens and an image sensor may tilt or move based on the detected motion. When a camera module including a lens or a lens and an image sensor tilts or moves for an OIS, it is necessary to additionally secure a space for tilting or moving around the lens or the camera module.

Meanwhile, an actuator for OIS may be disposed around the lens. In this case, the actuator for OIS may include actuators in charge of two axes (i.e., an X-axis and a Y-axis perpendicular to a Z-axis which is an optical axis) tiling.

However, according to the needs of ultra-slim and ultra-small camera modules, there is a large space constraint for arranging actuators for OIS, and it may be difficult to secure a sufficient space where a camera module including a lens or a lens and an image sensor itself may be tilted or moved for OIS. In addition, as a camera has a higher pixel density, it is preferable that a size of the lens be increased to increase the amount of received light, and there may be a limit to increasing the size of a lens due to a space occupied by actuators for OIS.

In addition, when a zooming function, an AF function, and an OIS function are all included in a camera module, there is also a problem that an OIS magnet and an AF/zoom magnet are disposed close to each other to cause magnetic field interference. In addition, a problem that there is a difficulty in connecting to a board in a miniaturized camera module is present. Furthermore, there is also an increasing demand on protecting circuit elements from an inflow of foreign substances, that is, an improvement in reliability.

### [Disclosure]

### [Technical Problem]

The present disclosure is directed to providing a camera actuator and a camera module, which have minimized magnetic field interference.

In addition, the present disclosure is directed to providing a camera actuator and a camera module in which auto focusing and zooming (magnification) are accurately and precisely performed by reducing a magnetic force generated from a magnet of an auto focus (AF)/zoom camera actuator or the like.

In addition, the present disclosure is directed to providing an AF/zoom camera actuator in which the influence of an optical image stabilizer (OIS) camera actuator is minimized and a camera module including the same.

In addition, the present disclosure is directed to providing a camera actuator and a camera module which have an optimized friction force on movements of first and second lens assemblies.

In addition, the present disclosure is directed to providing a camera actuator and a camera module in which a sufficient space for connection with a main board is secured in a camera module composed of two actuators.

In addition, the present disclosure is directed to providing a camera actuator and a camera module which have improved reliability by protecting circuit elements or the like from an inflow of foreign substances.

In addition, the present disclosure is directed to providing a camera actuator and a camera module which easily secure an element mounting space and have an improved strength due to an increase in a bonding area for connection.

The present disclosure is directed to providing a camera actuator applicable to ultra-slim, ultra-small, and high-resolution cameras.

The object of embodiments is not limited thereto and may also include objects or effects that may be identified from the configurations or embodiments to be described below.

### [Technical Solution]

A camera actuator according to an embodiment of the present disclosure includes a housing, a first lens assembly and a second lens assembly configured to move in an optical axis direction with respect to the housing, a first driving unit configured to move the first lens assembly, a second driving unit configured to move the second lens assembly, and a first yoke disposed to overlap the first driving unit in a direction perpendicular to the optical axis direction, wherein the first yoke includes a first region and a second region having a different thickness from the first region.

The second region may be thicker than the first region.

A length of the second region may be smaller than a length of the first region in the optical axis direction.

The first driving unit may include a first magnet, and the first magnet includes a first pole region, a neutral region, and a second pole region sequentially disposed in the optical axis direction.

When the first magnet maximally moves in the optical axis direction, the first pole region of the first magnet may be disposed to overlap the first region.

When the first magnet maximally moves in a direction opposite to the optical axis direction, the first pole region of the first magnet may be disposed to overlap the second region.

When the first magnet maximally moves in a direction opposite to the optical axis direction, a length of the second region may be greater than a length of an overlapping region between the second region and the first pole region.

When the first magnet maximally moves in a direction opposite to the optical axis direction, a length of the second region may be smaller than the sum of a length of an overlapping region between the second region and the first pole region and a length of the neutral region.

A length of the first pole region may be different from a length of the second region.

A length of the second region may be smaller than a length of the first magnet.

The first yoke may include a boundary region between the first region and the second region, and when the first magnet maximally moves in a direction opposite to the optical axis direction, the boundary region may overlap the neutral region.

The camera actuator may include a second yoke disposed to overlap the second driving unit in the direction perpendicular to the optical axis direction, wherein a first region of the second yoke may have a different thickness from a second region of the second yoke.

The second region and the first region of the first yoke may be sequentially disposed in the optical axis direction.

The second region of the first yoke may protrude outward or inward from the first region.

The first driving unit may include a first magnet and a first coil facing the first magnet, and the first coil may include a hollow.

The second region may not overlap the hollow.

The second region of the first yoke may overlap the second region of the second yoke.

At least a part of the second region of the first yoke may be misaligned with the second region of the second yoke.

A length of the second region may be in the range of 20% to 50% of a length of the first yoke in the optical axis direction.

A thickness of the second region of the first yoke may be 1.2 to 1.7 times a thickness of the first region thereof.

A camera actuator according to an embodiment includes a housing, a first lens assembly and a second lens assembly disposed in the housing, a first driving unit configured to move the first lens assembly in an optical axis direction, and a first yoke disposed to overlap the first driving unit in a direction perpendicular to the optical axis direction, wherein the first driving unit includes a first magnet, the first magnet includes a first pole region, a second pole region, and a neutral region disposed between the first pole region and the second pole region, the first yoke includes a first region and a second region having a different magnetic strength from the first region, and when the first lens assembly moves to a maximum moving distance, the second region overlaps the first pole region of the first magnet in the direction perpendicular to the optical axis direction.

When the first lens assembly maximally moves in a direction opposite to the optical axis direction, a boundary region between the first region and the second region may overlap the neutral region.

The second region may not overlap the second pole region in the direction perpendicular to the optical axis direction.

A camera actuator according to an embodiment of the present disclosure includes a housing, a first lens assembly and a second lens assembly configured to move in an optical axis direction with respect to the housing, a first driving unit configured to move the first lens assembly, a second driving unit configured to move the second lens assembly, and a first yoke disposed to overlap the first driving unit in a direction perpendicular to the optical axis direction, wherein the first yoke includes a first region and a second region having a different magnetic strength from the first region.

A camera module according to an embodiment of the present disclosure includes a housing, two movable lens groups disposed in the housing, and a board coupled to the housing, wherein the housing includes a first side surface perpendicular to an optical axis, a second side surface connected to the first side surface, and a third side surface facing the second side surface, the board includes a first board disposed on the first side surface and the second side surface and a second board disposed on the second side surface and the third side surface, one region of the first board disposed on the second side surface includes a plurality of terminals, one region of the second board disposed on the second side surface includes a plurality of pads, and at least some of the plurality of terminals are soldered to at least some of the plurality of pads.

The number of the plurality of terminals and the number of the plurality of pads may be at least six.

Each of the plurality of terminals may correspond to one of the plurality of pads.

The number of the plurality of terminals or plurality of pads may be equal to the number of soldering operations.

Cross-sectional areas of the plurality of pads may be greater than cross-sectional areas of the plurality of terminals.

The plurality of terminals may include grooves formed in some regions thereof.

At least some of the plurality of terminals may overlap the plurality of pads in a direction perpendicular to the optical axis.

The plurality of terminals may be disposed along the optical axis.

The plurality of pads may be disposed along the optical axis.

A camera module according to an embodiment includes a second actuator including two movable lens groups, a first board on which an image sensor is disposed, and a second board overlapping a direction perpendicular to an optical axis, wherein the first board includes a first unit board on which the image sensor is disposed and a second unit board connected to the first unit board and including a plurality of terminals, the second board includes a first unit board disposed on a first side surface of the second actuator and a second unit board connected to the first unit board and including a plurality of pads, the second unit board of the first board and the second unit board of the second board overlap each other in the direction perpendicular to the optical axis, and at least some of the plurality of terminals on the second unit board of the first board correspond to at least some of the plurality of pads on the second unit board of the second board.

The at least some of the plurality of terminals on the second unit board of the first board may be coupled to the at least some of the plurality of pads on the second unit board of the second board by soldering.

The first unit board of the first board may not be connected to the second unit board of the second board.

The camera module may include a first yoke disposed between the second unit board of the first board and the second unit board of the second board.

The second unit board of the first board may have a flexible region and a rigid region.

The camera module may include a first actuator including an optical member configured to change an optical path.

The plurality of terminals on the second unit board of the first board may be disposed at an edge of the second unit board of the first board.

The plurality of terminals on the second unit board of the first board may be disposed at upper and lower sides of the second unit board of the first board.

A camera module according to an embodiment of the present disclosure includes a first actuator and a second actuator sequentially disposed in an optical axis direction, and a main board including a first unit main board on which an image sensor is disposed and a second unit main board extending from the first unit main board in the optical axis direction and overlapping the second actuator in a horizontal direction perpendicular to the optical axis direction, wherein the second actuator includes a first board overlapping the second unit main board in the horizontal direction, and the first board is disposed to be spaced apart from the first unit main board in the optical axis direction.

The second unit main board may include a first terminal unit, the first board may include a second terminal unit, and the first terminal unit may be soldered to the second terminal unit.

The second actuator may include a first yoke disposed at an outer side of the first board, and the first yoke may be disposed between the second unit main board and the first board.

The first yoke may be coupled to the second unit main board and the first board between the second unit main board and the first board.

The first actuator may include a plurality of sub-boards facing each other.

The plurality of sub-boards may not overlap the second unit main board in the horizontal direction.

The plurality of sub-boards may overlap the second unit main board in the horizontal direction.

The second unit main board may include a third terminal unit, at least one of the plurality of sub-boards may include a fourth terminal unit, and the third terminal unit may be soldered to the fourth terminal unit.

The main board may include a sensor base surrounding the image sensor, and the sensor base may include a base housing including a base hole.

The main board may include a filter disposed above the image sensor, the base hole may include a first hole region in which the filter is disposed, and the first hole region may further include a blocking structure at an outer side of the filter.

The base hole may include a second hole region and a third hole region sequentially disposed under the first hole region, and the image sensor may be disposed in the third hole region.

The sensor base may further include a vent hole connected to the third hole region.

The first terminal unit may overlap the second terminal unit in the horizontal direction.

The main board may include a sensor base surrounding the image sensor, and the first board may be disposed to be spaced apart from the sensor base in the optical axis direction.

The first board may overlap the sensor base in the optical axis direction.

The first board may be positioned in a region between the plurality of sub-boards.

An end portion of the second unit main board adjacent to the first actuator may be positioned at an inner side of an end portion in contact with the first unit main board.

A length of the second unit main board may be smaller than that of the first board in a vertical direction, and the vertical direction may be a direction perpendicular to the optical axis direction and the horizontal direction.

The first terminal unit may not overlap the third terminal unit in the optical axis direction.

The first terminal unit may be positioned at a first corner of the second unit main board, and the third terminal unit may be positioned at a second corner of the second unit main board perpendicular to the first comer.

### [Advantageous Effects]

According to the present disclosure, it is possible to implement a camera actuator and a camera module which have minimized magnetic field interference.

In addition, according to the present disclosure, it is possible to implement a camera actuator and a camera module in which auto focusing and zooming (magnification) are accurately and precisely performed by reducing a magnetic force generated from a magnet of an AF/zoom camera actuator or the like.

In addition, according to the present disclosure, it is possible to implement an AF/zoom camera actuator in which the influence of an OIS camera actuator is minimized and a camera module including the same.

In addition, according to the present disclosure, it is possible to implement a camera actuator and a camera module which have an optimized friction force on movements of first and second lens assemblies.

In addition, according to the present disclosure, it is possible to implement a camera actuator and a camera module in which a sufficient space for connection with a main board is secured in a camera module composed of two actuators.

In addition, according to the present disclosure, it is possible to implement a camera actuator and a camera module which have improved reliability by protecting circuit elements or the like from an inflow of foreign substances.

In addition, according to the present disclosure, it is possible to implement a camera actuator and a camera module which easily secure an element mounting space and have an improved strength due to an increase in a bonding area for connection.

According to the present disclosure, it is possible to implement a camera actuator applicable to ultra-slim, ultra-small, and high-resolution cameras.

The various beneficial advantages and effects of the present disclosure are not limited to the above-described contents and will be more readily understood in a process of describing specific embodiments of the present disclosure.

### [Description of Drawings]

FIG. 1 is a perspective view of a camera module according to an embodiment;
FIG. 2 is an exploded perspective view of the camera module according to the embodiment;
FIG. 3 is a view of the camera module along line A-A' in FIG. 1;
FIG. 4 is a perspective view of a first camera actuator according to an embodiment;
FIG. 5 is an exploded perspective view of the first camera actuator according to the embodiment;
FIG. 6A is a perspective view of a first housing of the first camera actuator according to the embodiment;
FIG. 6B is a perspective view of the first housing of the first camera actuator in a different direction from FIG. 6A;
FIG. 6C is a front view of the first housing of the first camera actuator according to the embodiment;
FIG. 7 is a perspective view of an optical member of the first camera actuator according to the embodiment;
FIG. 8A is a perspective view of a holder of the first camera actuator according to the embodiment;
FIG. 8B is a bottom view of a holder of the first camera actuator according to the embodiment;
FIG. 8C is a front view of the holder of the first camera actuator according to the embodiment;
FIG. 8D is a rear view of a second member of the first camera actuator according to the embodiment;
FIG. 8E is a bottom view of the second member of the first camera actuator according to the embodiment;
FIG. 9A is a perspective view of a tilting guide unit of the first camera actuator according to the embodiment;
FIG. 9B is a perspective view of the tilting guide unit of the first camera actuator in a different direction from FIG. 9A;
FIG. 9C is a view of the tilting guide unit of the first camera actuator along line F-F' in FIG. 9A;
FIG. 10 is a view illustrating a first driving unit of the first camera actuator according to the embodiment;
FIG. 11A is a perspective view of the first camera actuator according to the embodiment;
FIG. 11B is a view of the first camera actuator along line P-P' in FIG. 11A;
FIG. 11C is a view of the first camera actuator along line Q-Q' in FIG. 11A;
FIG. 12A is a perspective view of the first camera actuator according to the embodiment;
FIG. 12B is a view of the first camera actuator along line S-S' in FIG. 12A;
FIG. 12C is an exemplary view showing movement of the first camera actuator illustrated in FIG. 12B;
FIG. 13A is a view of the first camera actuator along line R-R' in FIG. 12A;
FIG. 13B is an exemplary view of movement of the first camera actuator illustrated in FIG. 13A;
FIG. 14 is a perspective view of a second camera actuator according to an embodiment;
FIG. 15 is an exploded perspective view of the second camera actuator according to the embodiment;
FIG. 16 is a view of the second camera actuator along line D-D' in FIG. 14;
FIGS. 17A, 17B, and 17C are perspective views of a second housing in the second camera actuator according to the embodiment;
FIGS. 18 and 19 are views for describing each driving operation of a lens assembly according to an embodiment;
FIG. 20 is a view for describing driving of the second camera actuator according to the embodiment;
FIG. 21 is a schematic diagram illustrating a circuit board according to an embodiment;
FIG. 22 is a perspective view of a first lens assembly, a first bonding member, a second bonding member, and a second lens assembly according to an embodiment;
FIG. 23 is a view in which a second housing is removed from the second camera actuator according to the embodiment;
FIG. 24 is a side view of various examples of a second yoke unit in the second camera actuator according to the embodiment;
FIG. 25 is a top view of various examples of the second yoke unit in the second camera actuator according to the embodiment;
FIG. 26 is a view illustrating one example of the second yoke unit in the second camera actuator according to the embodiment;
FIG. 27 is a view illustrating another example of the second yoke unit in the second camera actuator according to the embodiment;
FIG. 28 is a cross-sectional view of the second camera actuator in a wide state according to the embodiment;
FIG. 29 is a cross-sectional view of the second camera actuator in a tele state according to the embodiment;
FIG. 30 is a graph for describing driving of a third group when a structure of the second yoke unit is not applied to the second camera actuator according to the embodiment;
FIG. 31 is a graph for describing the driving of the third group when the structure of the second yoke unit is applied to the second camera actuator according to the embodiment;
FIG. 32 is a perspective view in which a circuit board, a first camera actuator, and a second camera actuator are separated according to another embodiment;
FIG. 33A is a perspective view of a circuit board, a first driving unit (excluding some parts), and a second driving unit ((excluding some parts) according to an embodiment;
FIG. 33B is a conceptual diagram for describing connections of the circuit board, the first driving unit ((excluding some parts), and the second driving unit ((excluding some parts) according to the embodiment;
FIG. 33C is a conceptual diagram illustrating connections of a circuit board, a first driving unit ((excluding some parts), and a second driving unit ((excluding some parts) according to a modified example;
FIG. 33D is a conceptual diagram illustrating connections between a circuit board, a first driving unit ((excluding some parts), and a second driving unit ((excluding some parts) according to another embodiment;
FIG. 33E is a conceptual diagram illustrating connections between a circuit board, a first driving unit (excluding some parts), and a second driving unit (excluding some parts) according to still another embodiment;
FIG. 34 is a plan view of a circuit board, a first driving unit (excluding some parts), and a second driving unit (excluding some parts) according to an embodiment;
FIG. 35A shows a perspective view and a plan view of the circuit board according to the embodiment;
FIG. 35B is a side view of the circuit board according to the embodiment;
FIG. 35C is a rear view of the circuit board according to the embodiment;
FIG. 35D is a front view of the circuit board according to the embodiment;
FIG. 35E is an inner development plan view of the circuit board according to the embodiment;
FIG. 35F is an outer development plan view of the circuit board according to the embodiment;
FIG. 36A is a perspective view of the second driving unit (excluding some parts) in one side direction according to the embodiment;
FIG. 36B is a perspective view of the second driving unit (excluding some parts) in the other side direction according to the embodiment;
FIG. 37A is a perspective view of the first driving unit (excluding some parts) in one side direction according to the embodiment;
FIG. 37B is a perspective view of the first driving unit (excluding some parts) in the other side direction according to the embodiment;
FIG. 38A is an outer development plan view of an circuit board, a first board unit, and a second board unit according to an embodiment;
FIG. 38B is an enlarged view of portion K1 in FIG. 38A;
FIG. 38C is an enlarged view of portion K2 in FIG. 38A;
FIG. 38d is a view of the circuit board, the first board unit, and the second board unit along line O-O' in FIG. 38B;
FIG. 39 is a plan view of a sensor base, a filter, and an image sensor according to an embodiment;
FIG. 40 is a view of the sensor base, the filter, and the image sensor along line J-J' in FIG. 39;
FIG. 41 is a plan view of the sensor base and the image sensor according to the embodiment;
FIG. 42 is a view illustrating a second housing and a fixed lens assembly according to an embodiment;
FIG. 43 is a perspective view of the second housing according to the embodiment;
FIG. 44 is a view of the fixed lens assembly according to the embodiment;
FIG. 45 is a view of the second housing and the fixed lens assembly along line L-L' in FIG. 42;
FIG. 46 is a view of the second housing and the fixed lens assembly along line M-M' in FIG. 42;
FIG. 47 is a perspective view of a mobile terminal to which a camera module according to an embodiment is applied; and
FIG. 48 is a perspective view of a vehicle to which the camera module according to the embodiment is applied.

### [Modes of the Invention]

Since the present disclosure may have various changes and various embodiments, specific embodiments are illustrated and described in the accompanying drawings. However, it should be understood that it is not intended to limit specific embodiments, and it should be understood to include all modifications, equivalents, and substitutes included in the spirit and scope of the present disclosure.

Terms including ordinal numbers such as second or first may be used to describe various components, but the components are not limited by the terms. The terms are used only for the purpose of distinguishing one component from another. For example, a second component may be referred to as a first component, and similarly, the first component may also be referred to as the second component without departing from the scope of the present disclosure. The term "and/or" includes a combination of a plurality of related listed items or any of the plurality of related listed items.

When a certain component is described as being "connected" or "coupled" to another component, it is understood that it may be directly connected or coupled to another component or other components may also be disposed therebetween. On the other hand, when a certain component is described as being "directly connected" or "directly coupled" to another component, it should be understood that other components are not disposed therebetween.

The terms used in the application are only used to describe specific embodiments and are not intended to limit the present disclosure. The singular expression includes the plural expression unless the context clearly dictates otherwise. In the application, it should be understood that terms such as "comprise" or "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

Unless defined otherwise, all terms used herein, including technical or scientific terms, have the same meaning as commonly understood by those of ordinary skill in the art to which the present disclosure pertains. Terms such as those defined in a commonly used dictionary should be construed as having a meaning consistent with the meaning in the context of the related art and should not be construed in an ideal or excessively formal meaning unless explicitly defined in the application.

Hereinafter, embodiments will be described in detail with reference to the accompanying drawings, and the same or corresponding components are given the same reference numerals regardless of the reference numerals, and overlapping descriptions thereof will be omitted. In addition, the viewed drawings correspond to drawings along a cut surface.

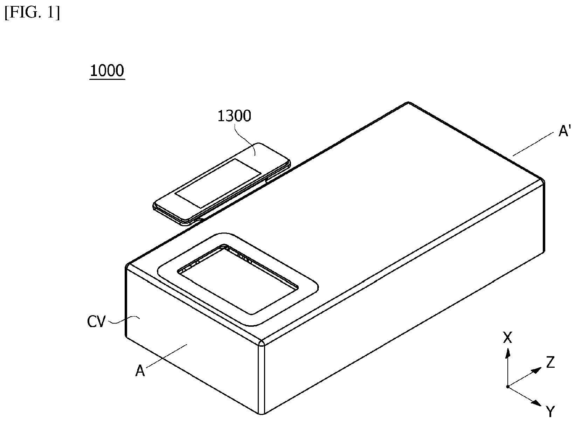

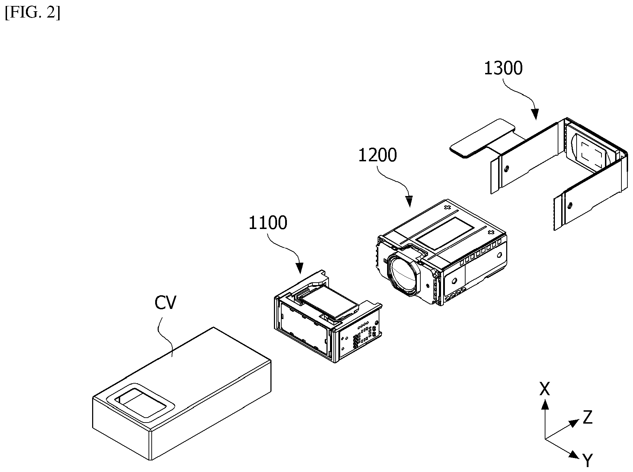

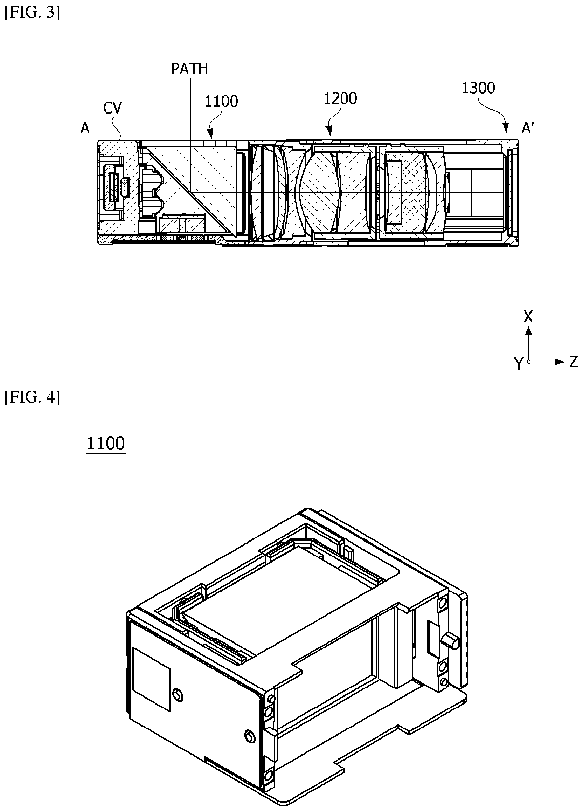

FIG. 1 is a perspective view of a camera module according to an embodiment, FIG. 2 is an exploded perspective view of the camera module according to the embodiment, and FIG. 3 is a cross-sectional view of the camera module along line A-A' in FIG. 1.

Referring to FIGS. 1 and 2, a camera module 1000 according to the embodiment may include a cover CV, a first camera actuator 1100, a second camera actuator 1200, and a circuit board 1300. Here, the first camera actuator 1100 may be used interchangeably with "first actuator," and the second camera actuator 1200 may be used interchangeably with "second actuator." Furthermore, when the first camera actuator is described as the "second camera actuator" according to the order, the second camera actuator is described as the "first camera actuator."

The cover CV may cover the first camera actuator 1100 and the second camera actuator 1200. It is possible to increase a coupling strength between the first camera actuator 1100 and the second camera actuator 1200 by the cover CV.

Furthermore, the cover CV may be made of a material which blocks electromagnetic waves. Therefore, it is possible to easily protect the first camera actuator 1100 and the second camera actuator 1200 in the cover CV.

In addition, the first camera actuator 1100 may be an optical image stabilizer (OIS) actuator. For example, the first camera actuator 1100 may move an optical member in a direction perpendicular to the optical axis (axis of incident light).

The first camera actuator 1100 may include a fixed focal length lens disposed in a predetermined barrel (not illustrated). The fixed focal length lens may also be referred to as "single focal length lens" or "single lens."

The first camera actuator 1100 may change an optical path. In an embodiment, the first camera actuator 1100 may vertically change the optical path through an internal optical member (e.g., a prism or a mirror). For example, the optical member may change light from a first direction (X-axis direction) to a third direction (Z-axis direction). Alternatively, the optical member may change the light from a first axis to a second axis. With this configuration, even when a thickness of a mobile terminal is decreased, a lens with a focal length that is greater than the thickness of the mobile terminal is disposed in the mobile terminal through a change in the optical path so that zooming, auto focusing (AF), zooming, and OIS functions may be performed.

However, the present disclosure is not limited thereto, and the first camera actuator 1100 may change the optical path vertically or at a predetermined angle multiple times.

The second camera actuator 1200 may be disposed at a rear end of the first camera actuator 1100. The second camera actuator 1200 may be coupled to the first camera actuator 1100. In addition, mutual coupling may be performed by various methods. In the present disclosure, a front end may be an end in an opposite direction of the optical axis, and a rear end may be an end in the optical axis direction (Z-axis direction).

In addition, the second camera actuator 1200 may be a zoom actuator or an AF actuator. For example, the second camera actuator 1200 may support one or more lenses and perform an AF function or a zooming function by moving the lenses according to a predetermined control signal of a control part.

In addition, one lens or a plurality of lens may independently or separately move in the optical axis direction.

The circuit board 1300 may be disposed at a rear end of the second camera actuator 1200. The circuit board 1300 may be electrically connected to the second camera actuator 1200 and the first camera actuator 1100. In addition, a plurality of circuit boards 1300 may be provided.

A camera module according to the embodiment may include one or more camera modules. For example, the plurality of camera modules may include a first camera module and a second camera module.

In addition, the first camera module may include one or more actuators. For example, the first camera module may include the first camera actuator 1100 and the second camera actuator 1200.

In addition, the second camera module may include an actuator (not illustrated) disposed in a predetermined housing (not illustrated) and capable of driving a lens unit. The actuator may be a voice coil motor, a micro actuator, a silicon actuator, and the like and applied in various methods such as an electrostatic method, a thermal method, a bimorph method, and an electrostatic force method, but the present disclosure is not limited thereto. In addition, in the specification, a camera actuator may be referred to as an "actuator" or the like. In addition, a camera module composed of a plurality of camera modules may be mounted in various electronic devices such as mobile terminals. Furthermore, the actuator may be a device for moving or tilting the lens or the optical member. However, hereinafter, the actuator will be described as including the lens or the optical member. Furthermore, the actuator may be referred to as "lens transfer device," "lens moving device," "optical member transfer device," "optical member moving device," etc.

Referring to FIG. 3, the camera module according to the embodiment may include the first camera actuator 1100 for performing the OIS function and the second camera actuator 1200 for performing the zooming function and the AF function.

Light may enter the camera module or the first camera actuator through an opening region positioned in an upper surface of the first camera actuator 1100. That is, the light may enter the first camera actuator 1100 in an optical axis direction (e.g., an X-axis direction, based on incident light), and the optical path may be changed in a vertical direction (e.g., a Z-axis direction) through the optical member. In addition, the light may pass through the second camera actuator 1200 and may be incident on an image sensor IS positioned at one end of the second camera actuator 1200 (PATH). In this specification, the Z-axis direction or the third direction will be described as the optical axis direction as follows.

In the specification, the lower surface refers to one side in a first direction. In addition, the first direction is the X-axis direction in the drawings and may be used interchangeably with a second axis direction or the like. A second direction is a Y-axis direction in the drawings and may be used interchangeably with a first axis direction or the like. The second direction is a direction perpendicular to the first direction. In addition, a third direction is the Z-axis direction in the drawings and may be used interchangeably with a third axis direction or the like. In addition, the third direction is perpendicular to both the first direction and the second direction. Here, the third direction (Z-axis direction) corresponds to the optical axis direction, and the first direction (X-axis direction) and the second direction (Y-axis direction) are directions perpendicular to the optical axis. In addition, hereinafter, the optical axis direction is the third direction (Z-axis direction) in the description of the first and second camera actuator 1100 and 1200 and will be described below based on this.

In addition, in this specification, an inner side may be a direction from the cover (CV) toward the first and second camera actuators, and an outer side may be an opposite direction of the inner side. That is, the first camera actuator and the second camera actuator may be positioned at an inner side of the cover CV, and the cover CV may be positioned at an outer side of the first camera actuator or the second camera actuator. Furthermore, the outer side may be a direction toward an outer surface with respect to the center (e.g., center of gravity) of each camera actuator. In addition, the inner side may mean an opposite direction of the outer side.

In addition, with this configuration, the camera module according to the embodiment may reduce the spatial limitations of the first camera actuator and the second camera actuator by changing the optical path. That is, the camera module according to the embodiment may extend the optical path while minimizing the thickness of the camera module in response to the change in the optical path. Furthermore, it should be understood that the second camera actuator may provide a high magnification by controlling a focus or the like in the extended optical path.

In addition, the camera module according to the embodiment may implement an OIS by controlling the optical path through the first camera actuator, thereby minimizing the occurrence of a decentering or tilting phenomenon and providing the best optical characteristics.

Furthermore, the second camera actuator 1200 may include an optical system and a lens driving unit. For example, at least one of a first lens assembly, a second lens assembly, and a third lens assembly may be disposed in the second camera actuator 1200.

In addition, the second camera actuator 1200 may include a coil and a magnet and perform a high-magnification zooming function and the auto focusing function.

For example, the first lens assembly and the second lens assembly may be moving lenses that each move through the coil, the magnet, and a guide pin, and the third lens assembly may be a fixed lens, but the present disclosure is not limited thereto. For example, the third lens assembly may perform a function of a focator by which light forms an image at a specific position, and the first lens assembly may perform a function of a variator for re-forming an image formed by the third lens assembly, which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the first lens assembly which is the variator. For example, the first lens assembly and the second lens assembly may be driven by an electromagnetic force generated by the interaction between the coil and the magnet. The above description may be applied to a lens assembly to be described below. In addition, the first lens assembly to the third lens assembly may move in the optical axis direction, that is, in the third direction. In addition, the first lens assembly to the third lens assembly may move in the third direction independently or dependently. In the present disclosure, the first lens assembly and the second lens assembly may move in the optical axis direction. In addition, the third lens assembly may be positioned at a front end of the first lens assembly or at a rear end of the second lens assembly. In addition, the third lens assembly may not move in the optical axis direction. That is, the third lens assembly may be a fixed unit. In addition, the first and second lens assemblies may be moving units.

Meanwhile, when the OIS actuator and the AF/zoom actuator are disposed according to the embodiment of the present disclosure, the magnetic field interference with an AF/zoom magnet can be prevented when an OIS is driven. Since a first driving magnet of the first camera actuator 1100 is disposed separately from the second camera actuator 1200, the magnetic field interference between the first camera actuator 1100 and the second camera actuator 1200 can be prevented. In the specification, an OIS may be used interchangeably with terms such as hand shaking correction, optical image stabilization, optical image correction, shake correction, etc.

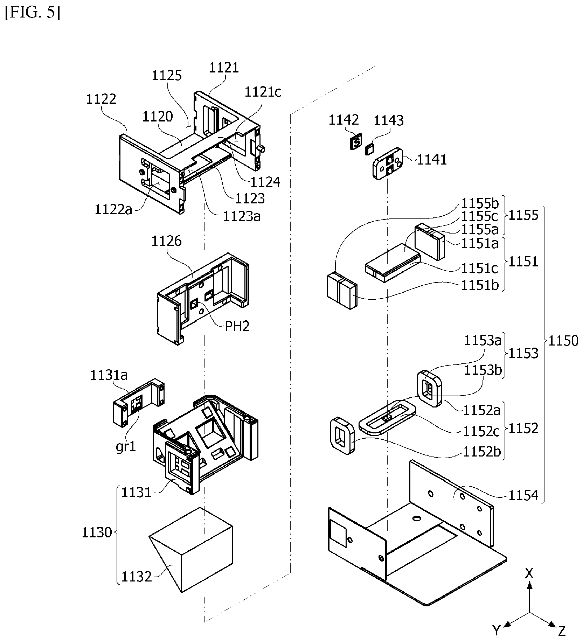

FIG. 4 is an exploded perspective view of the first camera actuator according to the embodiment, and FIG. 5 is an exploded perspective view of the first camera actuator according to the embodiment.

Referring to FIGS. 4 and 5, the first camera actuator 1100 according to the embodiment includes a first housing 1120, a mover 1130, a rotating unit 1140, a first driving unit 1150, a first member 1126, and a second member 1131a. Furthermore, the first camera actuator 1100 may further include a plate.

The mover 1130 may include a holder 1131 and an optical member 1132 seated on the holder 1131. In addition, the rotating unit 1140 may include a tilting guide part 1141 and a second magnetic part 1142 and a first magnetic part 1143 having the same or different polarities to press the tilting guide part 1141. For example, the first magnetic part 1143 and the second magnetic part 1142 may have facing surfaces with the same polarity. In addition, the first driving unit 1150 includes a driving magnet 1151, a driving coil 1152, a Hall sensor part 1153, a first board part 1154, and a yoke part 1155. The first driving unit 1150 may correspond to an "OIS driving unit," a "front end driving unit," etc.

First, the first camera actuator 1100 may include a shield can (not illustrated). The shield can (not illustrated) may be positioned at an outermost side of the first camera actuator 1100 to surround the rotating unit 1140 and the first driving unit 1150, which will be described below.

The shield can (not illustrated) can block or reduce electromagnetic waves generated from the outside. That is, the shield can (not illustrated) can reduce the occurrence of malfunction in the rotating unit 1140 or the first driving unit 1150.

The first housing 1120 may be positioned inside the shield can (not illustrated). When there is no shield can, the first housing 1120 may be positioned at the outermost side of the first camera actuator.

In addition, the first housing 1120 may be positioned at an inner side of the first board part 1154 to be described below. The first housing 1120 may be fastened by being fitted into or engaged with the shield can (not illustrated).

The first housing 1120 may include a first housing side portion 1121, a second housing side portion 1122, a third housing side portion 1123, and a fourth housing side portion 1124. A detailed description thereof will be given below.

The first member 1126 may be disposed in the first housing 1120. The second member 1131a may pass through some regions of the first member 1126. The first member 1126 may be disposed in a housing. The first member 1126 may be a structure integrally formed with or separated from the first housing 1120.

Furthermore, the first camera actuator 1100 may further include a plate disposed at an outer side of the first member 1126. The plate can prevent foreign substances from flowing into the second member 1131a passing through the first member 1126 or the like. Furthermore, the plate may be formed of a magnetic material. Therefore, since the plate has magnetism, a magnetic force may not be generated by the first magnetic part 1143 and the second magnetic part 1142 having polarities for pressing. That is, it is possible to reduce generation of magnetic forces that interfere with the driving (pressing) of the first magnetic part 1143 and the second magnetic part 1142.

When the plate is the magnetic part, the plate may be referred to as a magnetic member, a magnetic part, a cover plate, a metal member, a metal plate, etc.

The mover 1130 may include the holder 1131 and the optical member 1132 seated on the holder 1131.

The holder 1131 may be seated in an accommodating part 1125 of the first housing 1120. The holder 1131 may include a first holder outer surface to a fourth holder outer surface respectively corresponding to the first housing side portion 1121, the second housing side portion 1122, the third housing side portion 1123, and the first member 1126. For example, the first holder outer surface to the fourth holder outer surface may respectively correspond to or face inner surfaces of the first housing side portion 1121, the second housing side portion 1122, the third housing side portion 1123, and the first member 1126.

In addition, the holder 1131 may include the second member 1131a disposed in a fourth seating groove. The second member 1131a may be coupled to the holder 1131 by passing through the first member 1126. The second member 1131a and the holder 1131 may be coupled by any of various bonding members or coupling members. A detailed description thereof will be given below.

The optical member 1132 may be seated on the holder 1131. To this end, the holder 1131 may have a seating surface, and the seating surface may be formed by an accommodating groove. In an embodiment, the optical member 1132 may be formed of a mirror or a prism. Hereinafter, the optical member 1132 is illustrated as the prism, but may also be formed of a plurality of lenses as in the above-described embodiment. Alternatively, the optical member 1132 may be composed of the plurality of lenses and the prism or the mirror. In addition, the optical member 1132 may include a reflector disposed therein. However, the present disclosure is not limited thereto.

In addition, the optical member 1132 may reflect light reflected from the outside (e.g., an object) into the camera module. That is, the optical member 1132 can resolve spatial limits of the first camera actuator and the second camera actuator by changing the path of the reflected light. Therefore, it should be understood that the camera module may provide a high range of magnification by extending the optical path while a thickness thereof is minimized.

Additionally, the second member 1131a may be coupled to the holder 1131. The second member 1131a may be disposed at an outer side of the holder 1131 and an inner side of the housing. In addition, the second member 1131a may be seated in an additional groove positioned in a region other than the fourth seating groove on the fourth holder outer surface of the holder 1131. Therefore, the second member 1131a may be coupled to the holder 1131, and at least a part of the first member 1126 may be positioned between the second member 1131a and the holder 1131. For example, the at least a part of the first member 1126 may be disposed in a space formed between the second member 1131a and the holder 1131. In addition, as described above, the second member 1131a may pass through holes (a first through-hole and a second through-hole which will be described below) formed in the first member 1126.

In addition, the second member 1131a may have a structure separated from the holder 1131. With this configuration, the first camera actuator may be easily assembled as will be described below. Alternatively, the second member 1131a may be integrally formed with the holder 1131, but will be described below as the separated structure.

The rotating unit 1140 includes the tilting guide part 1141 and the second magnetic part 1142 and the first magnetic part 1143 having the same polarity to press the tilting guide part 1141. The first magnetic part and the second magnetic part may be disposed so that poles (e.g., N poles) having the same polarity face each other.

The tilting guide part 1141 may be coupled to the mover 1130 and the first housing 1120. Specifically, the tilting guide part 1141 may be disposed between the holder 1131 and the first member 1126. Therefore, the tilting guide part 1141 may be coupled to the mover 1130 of the holder 1131 and the first housing 1120. However, unlike the above description, in the embodiment, the tilting guide part 1141 may be disposed between the first member 1126 and the holder 1131. Specifically, the tilting guide part 1141 may be positioned between the first member 1126 and the fourth seating groove of the holder 1131. For example, at least a part of the tilting guide part 1141 may be positioned in the fourth seating groove.

The second member 1131a, the first member 1126, the tilting guide part 1141, and the holder 1131 may be sequentially arranged in the third direction (Z-axis direction). In addition, the second magnetic part 1142 and the first magnetic part 1143 may be respectively seated in a first groove gr1 formed in the second member 1131a and a second groove gr2 formed in the first member 1126. In the embodiment, the first groove gr1 and the second groove gr2 may have different positions from the first and second grooves described above in other embodiments. However, the first groove gr1 is positioned in the second member 1131a and moves integrally with the holder and the second member 1131a, and the second groove gr2 is positioned on the first member 1126 in correspondence to the first groove gr1 and coupled to the first housing 1120. Therefore, these terms will be used interchangeably. Furthermore, the first groove and the second groove may be grooves as described above. Alternatively, the first groove and the second groove may also be replaced with the form of a hole.

In addition, the tilting guide part 1141 may be disposed adjacent to the optical axis. Therefore, the actuator according to the embodiment can easily change the optical path according to the tilting of the first and second axes to be described below.

The tilting guide part 1141 may include first protrusions disposed to be spaced apart from each other in the first direction (X-axis direction) and second protrusions disposed to be spaced apart from each other in the second direction (Y-axis direction). In addition, the first protrusion and the second protrusion may protrude in opposite directions. A detailed description thereof will be given below.

In addition, as described above, the second magnetic part 1142 may be positioned in the second member 1131a. In addition, the first magnetic part 1143 may be positioned in the first member 1126.

The second magnetic part 1142 and the first magnetic part 1143 may have the same polarity. For example, the second magnetic part 1142 may be a magnet having an N pole, and the first magnetic part 1143 may be a magnet having an N pole. Alternatively, the second magnetic part 1142 may be a magnet having an S pole, and the first magnetic part 1143 may be a magnet having an S pole.

For example, a first pole surface of the first magnetic part 1143 and a second pole surface of the second magnetic part 1142 facing the first pole surface may have the same polarity.

The second magnetic part 1142 and the first magnetic part 1143 may generate a repulsive force therebetween due to the above-described polarity. With this configuration, the above-described repulsive force may be applied to the second member 1131a or the holder 1131 coupled to the second magnetic part 1142 and the first member 1126 or the first housing 1120 coupled to the first magnetic part 1143. In this case, the repulsive force applied to the second member 1131a may be transmitted to the holder 1131 coupled to the second member 1131a. Therefore, the tilting guide part 1141 disposed between the second member 1131a and the first member 1126 may be pressed by the repulsive force. Furthermore, the repulsive force may also be transmitted to the housing and the mover. Therefore, the housing and the mover may be pressed by the repulsive force. That is, the repulsive force may correspond to a holding force that holds a position between the housing and the mover. That is, the repulsive force may hold the position of the tilting guide part 1141 between the holder 1131 and the first housing 1120 (or the first member 1126). With this configuration, it is possible to hold the position between the mover 1130 and the first housing 1120 even during an X-axis tilting or a Y-axis tilting. In addition, the tilting guide part may be in close contact with the first member 1126 and the holder 1131 by the repulsive force between the first magnetic part 1143 and the second magnetic part 1142. That is, the repulsive force by the first magnetic part 1143 and the second magnetic part 1142 may be the holding force for the position between the holder 1131 and the first housing 1120.

The first driving unit 1150 includes the driving magnet 1151, the driving coil 1152, the Hall sensor part 1153, the first board part 1154, and the yoke part 1155. A description thereof will be given below. In addition, the yoke part 1155 may be referred to as a "first yoke part" in the first camera actuator. In addition, the yoke part in the second camera actuator may be referred to as a "second yoke part."

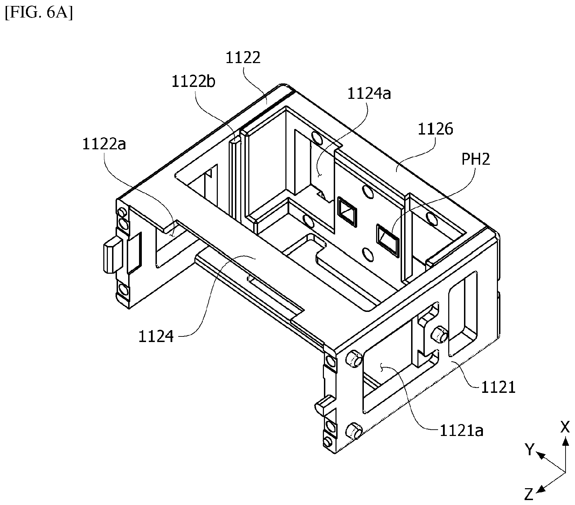

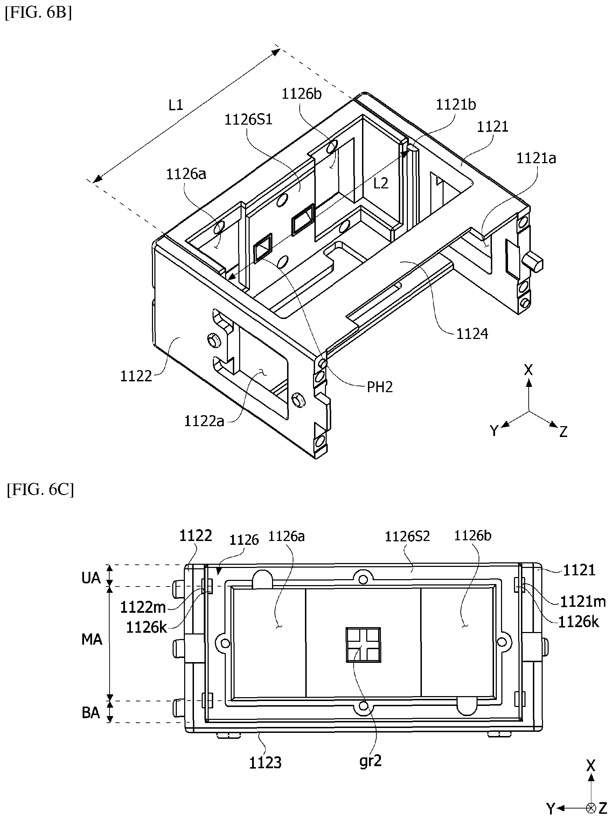

FIG. 6A is a perspective view of a first housing of the first camera actuator according to the embodiment, FIG. 6B is a perspective view of the first housing of the first camera actuator in a different direction from FIG. 6A, and FIG. 6C is a front view of the first housing of the first camera actuator according to the embodiment.

Referring to FIGS. 6A to 6C, the first housing 1120 according to the embodiment may include the first housing side portion 1121 to the fourth housing side portion 1124. In addition, the first member 1126 may be integrally formed by being coupled to the first housing 1120. Therefore, the first member 1126 may be a component included in the first housing 1120. Alternatively, the first housing 1120 may include the first member 1126.

The first housing side portion 1121 and the second housing side portion 1122 may be disposed to face each other. In addition, the third housing side portion 1123 and the fourth housing side portion 1124 may be disposed to face each other.

In addition, the third housing side portion 1123 and the fourth housing side portion 1124 may be disposed between the first housing side portion 1121 and the second housing side portion 1122.

The third housing side portion 1123 and the fourth housing side portion 1124 may be in contact with the first housing side portion 1121 and the second housing side portion 1122. In addition, the third housing side portion 1123 may be a lower surface of the first housing 1120. In addition, the fourth housing side portion 1124 may be an upper surface of the first housing 1120. In addition, the above-described contents may also be applied to a description of a direction in the same manner.

In addition, the first housing side portion 1121 may include a first housing hole 1121a. A third coil to be described below may be positioned in the first housing hole 1121a.

In addition, the second housing side portion 1122 may include a second housing hole 1122a. In addition, a fourth coil 1152b to be described below may be positioned in the second housing hole 1122a.

In addition, the first housing side portion 1121 and the second housing side portion 1122 may be side surfaces of the first housing 1120.

The third coil and the fourth coil may be coupled to the first board part. In an embodiment, the third coil and the fourth coil may be electrically connected to the first board part so that a current may flow therethrough. The current is an element of an electromagnetic force capable of tilting the second camera actuator with respect to the X axis.

In addition, the third housing side portion 1123 may include a third housing hole 1123a.

A fifth coil to be described below may be positioned in the third housing hole 1123a. In addition, the fifth coil 1152c may be electrically connected to the first board part in contact with the first housing 1120, and the fifth coil 1152c and the first board part may be coupled. Therefore, the fifth coil may be electrically connected to the first board part to receive a current from the first board part. The current is an element of an electromagnetic force capable of tilting the second camera actuator with respect to the Y-axis.

The first member 1126 may be seated between the first housing side portion 1121 to the fourth housing side portion 1124. Therefore, the first member 1126 may be positioned on the third housing side portion 1123. For example, the first member 1126 may be positioned at one side of the third housing side portion 1123. The first member 1126 and the holder may be sequentially positioned in the third direction.

The fourth housing side portion 1124 may be disposed between the first housing side portion 1121 and the second housing side portion 1122 and may be in contact with the first housing side portion 1121, the second housing side portion 1122, and the third housing side portion 1123.

In addition, the fourth housing side portion 1124 may include a fourth housing hole 1124a. The fourth housing hole 1124a may be positioned above the optical member. Therefore, light may be incident to the optical member after passing through the fourth housing hole 1124a.

In addition, the first housing 1120 may include the accommodating part 1125 formed by the first housing side portion 1121 to the fourth housing side portion 1124. The first member 1126, the second member 1131a, and the mover 1130 may be positioned in the accommodating part 1125 as components.

In addition, the first housing 1120 may further include a fifth housing side portion facing the first member 1126. In addition, the fifth housing side portion may be disposed between the first housing side portion 1121 and the second housing side portion 1122 and may be in contact with the first housing side portion 1121, the second housing side portion 1122, and the third housing side portion 1123. In addition, the fifth housing side portion may include an open region to provide a path along which the light reflected from the optical member 1132 moves. In addition, the fifth housing side portion may include protrusions, grooves, and the like to provide easy coupling with other camera actuators adjacent thereto. With this configuration, it is possible to provide the optical path and also improve a change in the optical path by increasing a coupling strength between the fifth housing side portion, in which the opening providing the optical path is formed, and other components so as to suppress movement of the opening due to separation or the like.

In addition, as described above, the first member 1126 may be a component coupled to the first housing 1120 and included in the first housing 1120. That is, the first housing 1120 may include the first member 1126.

In addition, the first member 1126 may be disposed in the first housing 1120. Alternatively, the first member 1126 may be positioned in the first housing 1120.

In addition, the first member 1126 may be coupled to the first housing 1120. In an embodiment, the first member 1126 may be positioned between the first housing side portion 1121 and the second housing side portion 1122. In addition, the first member 1126 may be positioned between the third housing side portion 1123 and the fourth housing side portion 1124.

In addition, the first member 1126 may be positioned on the third housing side portion 1123 and coupled to the first housing side portion to the third housing side portion.

In addition, a first stop member 1121b may be positioned on an inner surface of the first housing side portion 1121. In addition, a second stop member 1122b may be positioned on an inner surface of the second housing side portion 1122.

The first stop member 1121b and the second stop member 1122b may be symmetrically positioned with respect to the first direction (X-axis direction). The first stop member 1121b and the second stop member 1122b may extend in the first direction (X-axis direction). With this configuration, even when the first member 1126 moves into the first housing 1120, a position of the first member 1126 may be maintained by the first stop member 1121b and the second stop member 1122b. That is, the first stop member 1121b and the second stop member 1122b may hold the position of the first member 1126 at one side of the first housing 1120.

Furthermore, the first stop member 1121b and the second stop member 1122b may fix the position of the first member 1126 to fix a position of the tilting guide part between the first member 1126 and the mover, thereby removing factors that cause errors such as vibration. Therefore, the first camera actuator according to the embodiment can accurately or precisely perform the X-axis tilting and Y-axis tilting.

In addition, a separation distance L2 between the first stop member 1121b and the second stop member 1122b in the second direction (Y-axis direction) may be smaller than a maximum length L1 of the first member 1126 in the second direction (Y-axis direction). Therefore, the first member 1126 may be assembled or inserted into the side surface of the first housing 1120 and coupled to the first housing 1120. Furthermore, the holder may be assembled to the first housing 1120 in the first direction. In addition, as described above, the first member 1126 may be coupled to the first housing 1120 along a side surface of the first housing 1120, that is, in the optical axis direction. In addition, the second member may be assembled or inserted into the first housing 1120 in the optical axis direction. Therefore, the second member may pass through the first member 1126. Thereafter, a plate may be further disposed on the first member 1126.

In addition, the first member 1126 includes a second protrusion groove in which the second protrusion of the tilting guide part is seated. The second protrusion groove PH2 may be positioned in an inner surface 1126S1 of the first member 1126. As will be described below, the contents of the first protrusion groove may be applied to the second protrusion groove PH2 in the same manner. For example, a plurality of second protrusion grooves PH2 may be formed and may have a structure having contact points that are the same as or different from those of the second protrusion of the tilting guide part. For example, the number of second protrusion grooves PH2 is two, and the second protrusion groove PH2 may have a 4-point or 8-point contact structure. That is, the second protrusion groove PH2 may have a plurality of inclined surfaces. In addition, the second protrusion groove PH2 may also be a hemispherical groove.

Therefore, in the first member 1126, the protrusion (e.g., the second protrusion) of the tilting guide part is disposed adjacent to the prism in the fourth seating groove so that the protrusion, which is a reference axis of tilting, is disposed adjacent to the center of gravity of the mover 1130. Therefore, when the holder tilts, a moment for moving the mover 1130 for tilting can be minimized. Therefore, it is possible to minimize the current consumption for driving the coil, thereby reducing the power consumption of the camera actuator.

In addition, the first member 1126 may include through-holes 1126a and 1126b. A plurality of through-holes may be formed and may include the first through-hole 1126a and the second through-hole 1126b.

First and second extensions of the second member, which will be described below, may respectively pass through the first through-hole 1126a and the second through-hole 1126b. Therefore, a holding force between the second member and the first member may be generated by the repulsive force between the first and second magnetic parts. That is, even when the mover tilts, the position between the first housing and the mover can be maintained.

The second protrusion groove PH2 may be positioned between the first through-hole 1126a and the second through-hole 1126b. With this configuration, it is possible to increase the coupling strength between the tilting guide part 1141 and the first member 1126, thereby preventing a reduction in tilting accuracy caused by the movement of the tilting guide part 1141 in the first housing.

In addition, the second groove gr2 may be positioned on an outer surface 1126S2 of the first member 1126. The first magnetic part may be seated in the second groove gr2. In addition, the outer surface 1126S2 of the first member 1126 may face an inner surface of the second member or a member base part. Furthermore, the second magnetic part seated on the second member and the first magnetic part of the first member 1126 may face each other and generate the above-described repulsive force. Therefore, since the first member 1126 presses the tilting guide part inward or to the holder by the repulsive force, the mover may be spaced a predetermined distance from the third housing side portion in the first housing even without current injection into the coil. That is, the holding force for maintaining the position between the mover, the housing, and the tilting guide part may be generated by the first magnetic part and the second magnetic part.

In addition, when the first member 1126 is integrally formed with the first housing 1120, it is possible to increase the coupling strength between the first member 1126 and the first housing 1120, thereby improving the reliability of the camera actuator. In addition, when the first member 1126 is formed separately from the first housing 1120, it is possible to increase the ease of assembling and manufacturing of the first member 1126 and the first housing 1120.

In addition, in the embodiment, the first member 1126 may include the first through-hole 1126a and the second through-hole 1126b as described above. In addition, the first through-hole 1126a and the second through-hole 1126b may be disposed side by side in the second direction (Y-axis direction) and may overlap each other.

In addition, the first member 1126 may include upper members UA positioned above the first through-hole 1126a and the second through-hole 1126b and lower members BA positioned under the first through-hole 1126a and the second through-hole 1126b. Therefore, the first through-hole 1126a and the second through-hole 1126b may be positioned in the middle of the first member 1126. That is, the first member 1126 may include connection members MA positioned at side portions of the first through-hole 1126a and the second through-hole 1126b. That is, the upper members UA and the lower members BA may be connected through the connection members MA. In addition, a plurality of lower members BA may be formed to form the first and second through-holes and may be spaced apart from each other in the second direction (Y-axis direction).

Therefore, the first member 1126 may have the upper members UA, thereby increasing stiffness. For example, it is possible to increase the stiffness of the first member 1126 compared to a case in which the upper member UA is not present. For example, in the embodiment, a unit of stiffness may be N/µm. Therefore, it is possible to improve the reliability of the first camera actuator according to the embodiment.

In addition, a first coupling groove 1126k may be positioned in the outer surface 1126S2 of the first member 1126. The first coupling groove 1126k may be positioned at an edge of the outer surface 1126S2 of the first member 1126. In particular, the first coupling groove 1126k may be positioned at an end (e.g., left and right sides) of the outer surface 1126S2 of the first member 1126 and positioned adjacent to the first housing side portion 1121.

The first coupling groove 1126k may be positioned to correspond to second coupling grooves 1121m and 1122m of the first housing side portion 1121 and the second housing side portion 1122. In an embodiment, the first coupling groove 1126k may be positioned to face the second coupling grooves 1121m and 1122m of the first housing side portion 1121 and the second housing side portion 1122. The second coupling grooves 1121m and 1122m may be adjacent to the outer surface 1126S2 of the first member 1126 and positioned on the same side surface.

In an embodiment, a plurality of first coupling grooves 1126k and a plurality of second coupling grooves 1121m and 1122m may be formed, and the plurality of first coupling grooves 1126k and the plurality of second coupling grooves 1121m and 1122m may be positioned symmetrically in the first direction or the second direction.

Bonding members may be applied to the first coupling groove 1126k and the second coupling grooves 1121m and 1122m. That is, the bonding member may be applied between the first housing side portion (or the second housing side portion) and the first member 1126, thereby increasing the coupling strength between the first housing 1120 and the first member 1126. The bonding members may include an epoxy or the like, but are not limited to the material.

In addition, the first member 1126 may further include the first protrusion and the second protrusion. The first protrusion may be in contact with the first housing side portion, and the second protrusion may be in contact with the second housing side portion. The first protrusion may extend from one end of the outer surface 1126S2 of the first member in the third direction (Z-axis direction). The second protrusion may extend from the other end of the outer surface 1126S2 of the first member in the third direction (Z-axis direction). That is, the first protrusion and the second protrusion may extend toward the holder.

The position of the first protrusion may be maintained by the first stop member 1121b, and the position of the second protrusion may be maintained by the second stop member 1122b. Therefore, it is possible to improve the reliability of the camera actuator according to the embodiment.

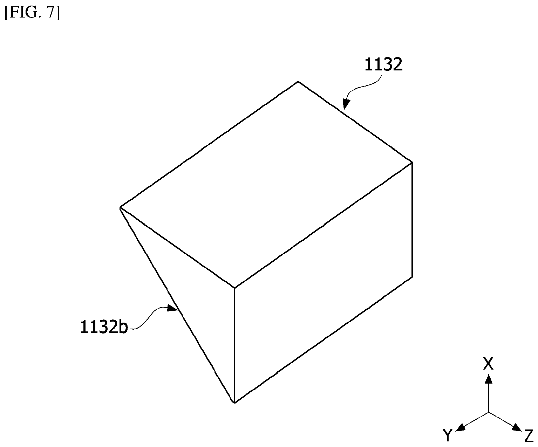

FIG. 7 is a perspective view of an optical member of the first camera actuator according to the embodiment.

The optical member 1132 may be seated on the holder. The optical member 1132 may be a right angle prism as a reflector, but is not limited thereto.

In an embodiment, the optical member 1132 may have a protrusion (not illustrated) on a part of an outer surface thereof. The optical member 1132 may be easily coupled to the holder through the protrusion (not illustrated). In addition, the holder may be coupled to the optical member 1132 with a groove or a protrusion.

In addition, a lower surface 1132b of the optical member 1132 may be seated on the seating surface of the holder. Therefore, the lower surface 1132b of the optical member 1132 may correspond to the seating surface of the holder. Furthermore, the lower surface 1132b of the optical member 1132 may be a reflective surface. In addition, an upper surface of the optical member 1132 may be an incident surface through which light is incident. In addition, a rear surface of the optical member 1132 may be an output surface through which light is output.

In an embodiment, the lower surface 1132b may be formed of an inclined surface in the same manner as the seating surface of the holder. Therefore, it is possible to prevent the optical member 1132 from being separated from the holder as the prism moves according to the movement of the holder.

In addition, a groove is formed on the lower surface 1132b of the optical member 1132, and a bonding member is applied thereto, and thus the optical member 1132 may be coupled to the holder. Alternatively, the holder may also be coupled to the optical member 1132 by applying the bonding member to the groove or the protrusion of the holder.

In addition, as described above, the optical member 1132 may have a structure capable of reflecting the light reflected from the outside (e.g., an object) into the camera module. As in the embodiment, the optical member 1132 may be formed of a single mirror. In addition, the optical member 1132 can resolve the spatial limits of the first camera actuator and the second camera actuator by changing the path of the reflected light. Therefore, it should be understood that the camera module may provide a high range of magnification by extending the optical path while a thickness thereof is minimized. In addition, it should be understood that the camera module including the camera actuator according to the embodiment may provide a high range of magnification by extending the optical path while minimizing the thickness.

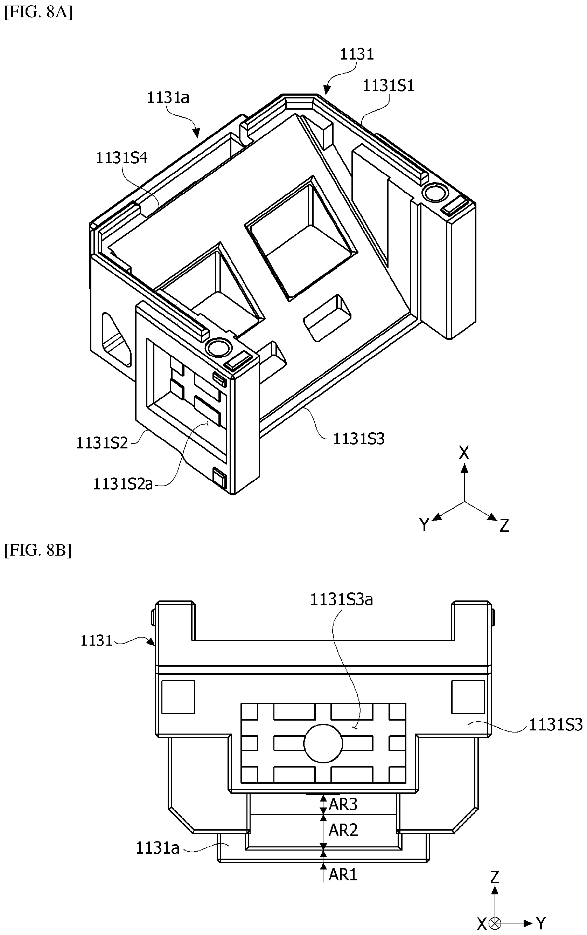

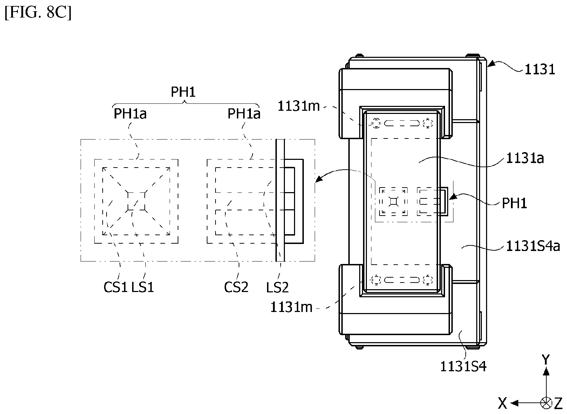

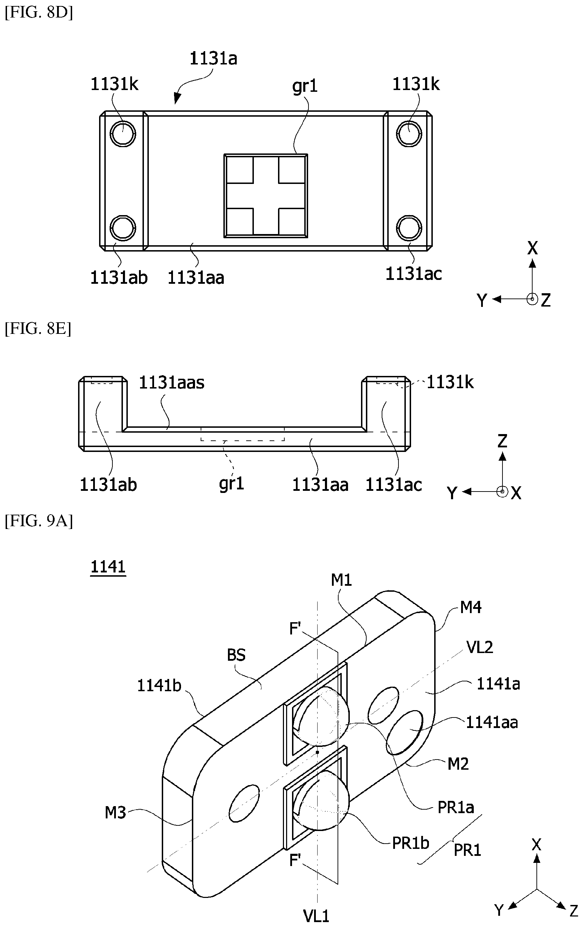

FIG. 8A is a perspective view of a holder of the first camera actuator according to the embodiment, FIG. 8B is a bottom view of a holder of the first camera actuator according to the embodiment, FIG. 8C is a front view of the holder of the first camera actuator according to the embodiment, FIG. 8D is a rear view of a second member of the first camera actuator according to the embodiment, and FIG. 8E is a bottom view of the second member of the first camera actuator according to the embodiment.

Referring to FIGS. 8A to 8E, the holder 1131 may include a seating surface 1131k on which the optical member 1132 is seated. The seating surface 1131k may be an inclined surface. In addition, the holder 1131 may include a stepped portion on the seating surface 1131k. In addition, the stepped portion of the holder 1131 may be coupled to the protrusion (not illustrated) of the optical member 1132.

The holder 1131 may include a plurality of outer surfaces. For example, the holder 1131 may include a first holder outer surface 1131S1, a second holder outer surface 1131S2, a third holder outer surface 1131S3, and a fourth holder outer surface 1131S4.

The first holder outer surface 1131S1 may be positioned to face the second holder outer surface 1131S2. That is, the first holder outer surface 1131S1 may be symmetrically disposed based on the second holder outer surface 1131S2 with respect to the first direction (X-axis direction).

The first holder outer surface 1131S1 may be positioned to correspond to the first housing side portion. That is, the first holder outer surface 1131S1 may face the first housing side portion. In addition, the second holder outer surface 1131S2 may be positioned to correspond to the second housing side portion. That is, the second holder outer surface 1131S2 may be positioned to face the second housing side portion.

In addition, the first holder outer surface 1131S1 may include a first seating groove 1131S1a. In addition, the second holder outer surface 1131S2 may include a second seating groove 1131S2a. The first seating groove 1131S1a and the second seating groove 1131S2a may be symmetrically disposed with respect to the first direction (X-axis direction).

In addition, the first seating groove 1131S1a and the second seating groove 1131S2a may be disposed to overlap each other in the second direction (Y-axis direction). In addition, a third magnet 1151a may be disposed in the first seating groove 1131S1a, and a fourth magnet 1151b may be disposed in the second seating groove 1131S2a. The third magnet 1151a and the fourth magnet 1151b may also be symmetrically disposed with respect to the first direction (X-axis direction). In the specification, it should be understood that the third magnet to a fifth magnet may be coupled to the housing through a yoke or a bonding member. A polarity of the third magnet and a polarity of the fourth magnet may be opposite to each other. For example, an N pole and an S pole of the third magnet may be sequentially arranged in the third direction, and an S pole and an N pole of the fourth magnet may be sequentially arranged in the third direction. As a modified example, the polarity of the third magnet and the polarity of the fourth magnet may be the same as each other by adjusting the current injection or current directions of the third and fourth coils.

As described above, due to positions of the first and second seating grooves and the third and fourth magnets, an electromagnetic force generated by each magnet is coaxially provided on the first holder outer surface S1131S1 and the second holder outer surface 1131S2. For example, a region of the first holder outer surface S1131S1 to which the electromagnetic force is applied (e.g., a portion in which the electromagnetic force is strongest) and a region of the second holder outer surface S1131S2 to which the electromagnetic force is applied (e.g., a portion in which the electromagnetic force is strongest) may be positioned on an axis parallel to the second direction (Y-axis direction). Therefore, the X-axis tilting can be accurately performed.

The third magnet 1151a may be disposed in the first seating groove 1131S1a, and the fourth magnet 1151b may be disposed in the second seating groove 1131S2a.

The third holder outer surface 1131S3 may be in contact with the first holder outer surface 1131S1 and the second holder outer surface 1131S2 and may be an outer surface extending from one side of each of the first holder outer surface 1131S1 and the second holder outer surface 1131S2 in the second direction (Y-axis direction). In addition, the third holder outer surface 1131S3 may be positioned between the first holder outer surface 1131S1 and the second holder outer surface 1131S2. The third holder outer surface 1131S3 may be the lower surface of the holder 1131. That is, the third holder outer surface 1131S3 may be positioned to face the third housing side portion.

In addition, the third holder outer surface 1131S3 may include a third seating groove 1131S3a. The fifth magnet 1151c may be disposed in the third seating groove 1131S3a. The third holder outer surface 1131S3 may be positioned to face the third housing side portion 1123.

In addition, at least a part of the third housing hole 1123a may overlap the third seating groove 1131S3a in the first direction (X-axis direction). Therefore, the fifth magnet 1151c in the third seating groove 1131S3a and the fifth coil 1152c in the third housing hole 1123a may be positioned to face each other. In addition, the fifth magnet 1151c and the fifth coil 1152c may generate an electromagnetic force so that the second camera actuator may tilt with respect to the Y axis.

In addition, the X-axis tilting may be performed by a plurality of magnets (third and fourth magnets 1151a and 1151b), while the Y-axis tilting may be performed by only the fifth magnet 1151c.

In an embodiment, the third seating groove 1131S3a may have a larger area than the first seating groove 1131S1a or the second seating groove 1131S2a. With this configuration, the Y-axis tilting may be performed with current control similar to that of the X-axis tilting.

The fourth holder outer surface 1131S4 may be in contact with the first holder outer surface 1131S1 and the second holder outer surface 1131S2 and may be an outer surface extending from the one side of each of the first holder outer surface 1131S1 and the second holder outer surface 1131S2 in the first direction (X-axis direction). In addition, the fourth holder outer surface 1131S4 may be positioned between the first holder outer surface 1131S1 and the second holder outer surface 1131S2. That is, the fourth holder outer surface 1131S4 may be positioned to face the first member.

The fourth holder outer surface 1131S4 may include a fourth seating groove 1131S4a. A tilting guide part 1141 may be positioned in the fourth seating groove 1131S4a. In addition, the second member 1131a and the first member 1126 may be positioned in the fourth seating groove 1131S4a. In addition, the fourth seating groove 1131S4a may include a plurality of regions. The fourth seating groove 1131S4a may include a first region AR1, a second region AR2, and a third region AR3.

The second member 1131a may be positioned in the first region AR1. That is, the first region AR1 may overlap the second member 1131a in the first direction (X-axis direction). In particular, the first region AR1 may be a region in which the member base part of the second member 1131a is positioned. In this case, the first region AR1 may be positioned on the fourth holder outer surface 1131S4. That is, the first region AR1 may correspond to a region positioned above the fourth seating groove 1131S4a. In this case, the first region AR1 may not be the region in the fourth seating groove 1131S4a.

The first member 1126 may be positioned in the second region AR2. That is, the second region AR2 may overlap the first member 1126 in the first direction (X-axis direction).

In addition, the second region AR2 may be positioned on the fourth holder outer surface 1131S4 like the first region. That is, the second region AR2 may correspond to a region positioned above the fourth seating groove 1131S4a.

The tilting guide part may be positioned in the third region AR3. In particular, a base of the tilting guide part may be positioned in the third region AR3. That is, the third region AR3 may overlap the tilting guide part (e.g., the base) in the first direction (X-axis direction).

In addition, the second region AR2 may be positioned between the first region AR1 and the third region AR3.

In addition, the second member may be disposed in the first region AR1, and the second member 1131a may include the first groove gr1. In an embodiment, the second member 1131a may include the first groove gr1 formed on an inner surface 1131aas. In addition, the second magnetic part may be disposed in the first groove gr1 as described above.

In addition, as described above, the first member may be disposed in the second region AR2. The first groove gr1 may be positioned to face the second groove gr2. For example, at least a part of the first groove gr1 may overlap the second groove gr2 in the third direction (Z-axis direction).

In addition, the repulsive force generated by the second magnetic part may be transmitted to the fourth seating groove 1131S4a of the holder 1131 through the second member. Therefore, the holder may apply a force to the tilting guide part in the same direction as the repulsive force generated by the second magnetic part.

The first member may include the second groove gr2 facing the first groove gr1 formed in the outer surface thereof. In addition, the first member may include the second protrusion groove formed on the inner surface thereof as described above. In addition, the second protrusion may be seated in the second protrusion groove.

In addition, like the second magnetic part, the repulsive force generated by the first magnetic part and the second magnetic part may be applied to the first member. Therefore, the first member and the second member may press the tilting guide part disposed between the first member and the holder 1131 through the repulsive force.

The tilting guide part 1141 may be disposed in the third region AR3.

In addition, the first protrusion groove PH1 may be positioned in the fourth seating groove 1131S4a. In addition, the first protrusion of the tilting guide part 1141 may be accommodated in the first protrusion groove PH1. Therefore, the first protrusion PR1 may be in contact with the first protrusion groove. A maximum diameter of the first protrusion groove PH1 may correspond to a maximum diameter of the first protrusion PR1. This may be applied to the second protrusion groove and the second protrusion PR2 in the same manner. That is, a maximum diameter of the second protrusion groove may correspond to a maximum diameter of the second protrusion PR2. Therefore, the second protrusion may be in contact with the second protrusion groove. With this configuration, a first axis tilting may be easily performed based on the first protrusion, a second axis tilting may be easily performed based on the second protrusion, and radii of the tilting can be improved.

In addition, in an embodiment, a plurality of first protrusion grooves PH1 may be formed. For example, any one of the first protrusion groove PH1 and the second protrusion groove PH2 may include a 1-1 protrusion groove PH1a and a 1-2 protrusion groove PH1b. Hereinafter, description will be made based on the first protrusion groove PH1 including the 1-1 protrusion groove PH1a and the 1-2 protrusion groove Phlb. In addition, the following description may also be applied to the second protrusion groove PH2 in the same manner. For example, the second protrusion groove PH2 may include a 2-1 protrusion groove and a 2-2 protrusion groove, in which the description of the 1-1 protrusion groove may be applied to the 2-1 protrusion groove, and the description of the 1-2 protrusion groove may be applied to the 2-2 protrusion groove.

The 1-1 protrusion groove PH1a and the 1-2 protrusion groove PH1b may be disposed side by side in the first direction (X-axis direction). The 1-1 protrusion groove PH1a and the 1-2 protrusion groove PH1b may have the same maximum area.

The plurality of first protrusion grooves PH1 may have different numbers of inclined surfaces. For example, the first protrusion groove PH1 may include a groove lower surface and an inclined surface. In this case, the plurality of protrusion grooves may have different numbers of inclined surfaces. In addition, an area of the lower surface of the protrusion groove may also be different.

For example, the 1-1 protrusion groove PH1a may include a first groove lower surface LS1 and a first inclined surface CS1. The 1-2 protrusion groove PH1b may include a second groove lower surface LS2 and a second inclined surface CS2.

In this case, the first groove lower surface LS1 and the second groove lower surface LS2 may have different areas. The area of the first groove lower surface LS1 may be smaller than the area of the second groove lower surface LS2.

In addition, the number of first inclined surfaces CS1 in contact with the first groove lower surface LS1 may be different from the number of second inclined surfaces CS2. For example, the number of first inclined surfaces CS1 may be greater than the number of second inclined surfaces CS2.

With this configuration, it is possible to easily compensate for an assembly tolerance of the first protrusion seated in the first protrusion groove PH1. For example, since the number of first inclined surfaces CS1 is greater than the number of second inclined surfaces CS2, the first protrusion may be in contact with more inclined surfaces, thereby more accurately holding the position of the first protrusion in the 1-1 protrusion groove PH1a.

Unlike this, in the 1-2 protrusion groove PH1b, the number of inclined surfaces in contact with the first protrusion may be smaller than those of the 1-1 protrusion groove PH1a, thereby easily adjusting the position of the first protrusion.

In an embodiment, the second inclined surfaces CS2 may be disposed to be spaced apart from each other in the second direction (Y-axis direction). In addition, the second groove lower surface LS2 may extend in the first direction (X-axis direction) so that the first protrusion may easily move in the first direction (X-axis direction) in a state of being in contact with the second inclined surface CS2. That is, the position of the first protrusion in the 1-2 protrusion groove PH1b may be easily adjusted.

In addition, in this embodiment, the first region AR1, the second region AR2, and the third region AR3 may have different heights in the first direction (X-axis direction). In an embodiment, the first region AR1 may have a greater height than the second region AR2 and the third region AR3 in the first direction (X-axis direction). Therefore, a stepped portion may be positioned between the first region AR1 and the second region AR2.

In addition, the second member 1131a may include the first groove gr1. That is, the first groove gr1 may be positioned in an inner surface of a member base part 1131aa. In addition, the above-described second magnetic part may be seated in the first groove gr1. In addition, a plurality of first grooves gr1 may be formed according to the number of second magnetic parts. That is, the number of first grooves gr1 may correspond to the number of second magnetic parts.

In addition, the second member 1131a may include the member base part 1131aa, a first extension 1131ab, and a second extension 1131ac.

The member base part 1131aa may be positioned at the outermost side of the first camera actuator. The member base part 1131aa may be positioned at the outer side of the first member. That is, the first member may be positioned between the member base part 1131aa and the tilting guide part.

The first extension 1131ab may extend from an edge of the member base part 1131aa in the third direction (Z-axis direction). That is, the first extension 1131ab may extend toward the holder 1131 from the member base part 1131aa. This is also applied to the second extension 1131ac in the same manner. In addition, the second extension 1131ac may extend from the edge of the member base part 1131aa in the third direction (Z-axis direction). In an embodiment, the first extension 1131ab and the second extension 1131ac may be positioned at the edge of the member base part 1131aa in the second direction (Y-axis direction). In addition, the first extension 1131ab and the second extension 1131ac may be disposed between the upper member and the lower member.

Therefore, the second member 1131a may have a groove formed by the first extension 1131ab and the second extension 1131ac. That is, the groove may be positioned between the first extension 1131ab and the second extension 1131ac. Therefore, the first extension 1131ab and the second extension 1131ac may be connected by only the member base part 1131aa. With this configuration, the second member 1131a may continuously receive the repulsive force generated by the second magnetic part seated at the center of the member base part 1131aa, particularly, in the first groove gr1.

In addition, since the second member 1131a is coupled to the holder to move during X-axis tilting and Y-axis tilting, the stiffness of the second member 1131a may be greater than that of the first member.

Furthermore, as described above, the first member according to the embodiment may have the upper member and the lower member, thereby increasing the stiffness. With this configuration, it is possible to reduce a difference in the stiffness between the second member and the first member. Therefore, when the second member 1131a and the holder 1131 coupled to the second member 1131a are tilted with respect to the X-axis or the Y-axis, a distance between the second member 1131a and the first member adjacent thereto may be smaller distance, and the second member 1131a may be in contact with the first member. Therefore, since the first member has improved stiffness as described above, the operation of a stopper can be easily performed. That is, it is possible to improve the reliability of the camera actuator.

Furthermore, since the difference in stiffness between the first member and the second member is reduced, it is possible to minimize damage due to contact during tilting. That is, it is possible to improve the reliability of the camera actuator.

In addition, the first extension 1131ab may be spaced apart from the second extension 1131ac in the second direction (Y-axis direction) to form a separation space. The first member and the tilting guide part may be seated in the separation space. In addition, the second magnetic part and the first magnetic part may be positioned in the separation space.

In addition, the first extension 1131ab and the second extension 1131ac may have the same length in the third direction (Z-axis direction). Therefore, the coupling strength, the weight, and the like may be formed in a balanced manner so that the tilting of the holder can be accurately performed without tilting to one side.

In addition, the first extension 1131ab and the second extension 1131ac may be coupled to the holder. In the specification, it should be understood that the coupling may be made through the bonding member other than the above-described protrusion and groove structures. In an embodiment, the first extension 1131ab and the second extension 1131ac may include a third coupling groove 1131k formed in the third direction (Z-axis direction). In addition, a coupling protrusion 1131m may be positioned in a region in which the first extension 1131ab and the second extension 1131ac overlap in the third direction (Z-axis direction) in the fourth seating groove 1131S4a. The coupling protrusion 1131m may be positioned to correspond to the third coupling groove 1131k.

For example, the bonding member such as an epoxy may be applied to the third coupling groove 1131k. In addition, the coupling protrusion 1131m may be inserted into the third coupling groove 1131k of the first extension 1131ab and the second extension 1131ac. With this configuration, the second member 1131a and the holder 1131 may be coupled. In addition, the repulsive force applied to the second member 1131a may be transmitted to the holder 1131 through this coupling.

However, as described above, it should be understood that the positions of the protrusion and groove structures may also be changed with respect to each other.

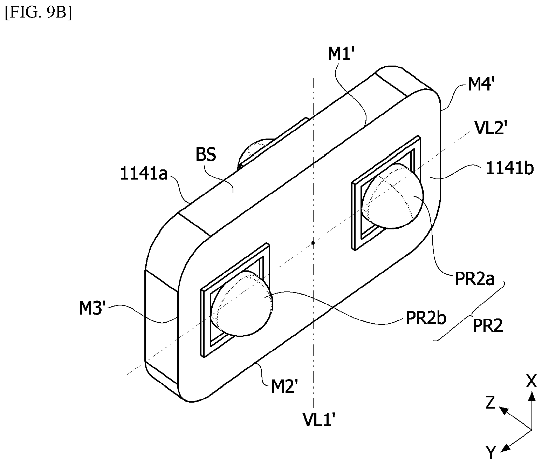

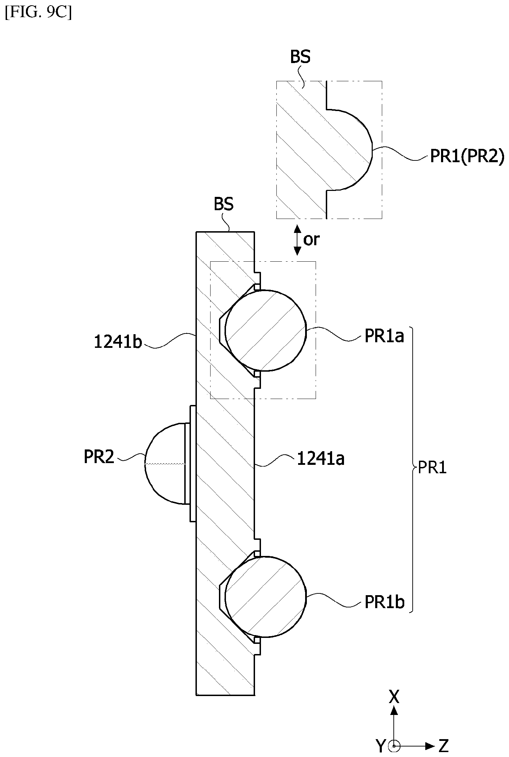

FIG. 9A is a perspective view of a tilting guide unit of the first camera actuator according to the embodiment, FIG. 9B is a perspective view of the tilting guide unit of the first camera actuator in a different direction from FIG. 9A, and FIG. 9C is a view of the tilting guide unit of the first camera actuator along line F-F' in FIG. 9A.

The tilting guide part 1141 according to the embodiment may include a base BS, the first protrusion PR1 protruding from a first surface 1141a of the base BS, and the second protrusion PR2 protruding from a second surface 1141b of the base BS. In addition, the first protrusion and the second protrusion may have opposite surfaces according to the structure, but will be described below based on the drawings. In addition, it should be understood that the first protrusion PR1 and the second protrusion PR2 may be integrally formed with the base BS, and as illustrated in the drawings, the first protrusion PR1 and the second protrusion PR2 may have a spherical shape like a ball. In addition, the first protrusion PR1 and the second protrusion PR2 may not be a projection or protrusion shape, but may be a ball.

First, the base BS may include the first surface 1141a and the second surface 1141b opposite to the first surface 1141a. That is, the first surface 1141a may be spaced apart from the second surface 1141b in the third direction (Z-axis direction), and the first surface 1141a and the second surface 1141b may be outer surfaces opposite to each other or facing each other in the tilting guide part 1141.

The tilting guide part 1141 may include the first protrusion PR1 extending to one side on the first surface 1141a. According to the embodiment, the first protrusion PR1 may protrude toward the holder from the first surface 1141a. A plurality of first protrusions PR1 may be formed and may include a 1-1 protrusion PR1a and a 1-2 protrusion PR1b.

The 1-1 protrusion PR1a and the 1-2 protrusion PR1b may be positioned side by side in the first direction (X-axis direction). That is, the 1-1 protrusion PR1a and the 1-2 protrusion PR1b may overlap in the first direction (X-axis direction). In addition, in the embodiment, the 1-1 protrusion PR1a and the 1-2 protrusion PR1b may be bisected by a virtual line extending in the first direction (X-axis direction).

In addition, each of the 1-1 protrusion PR1a and the 1-2 protrusion PR1b may have a curvature and have, for example, a hemispherical shape. In addition, the 1-1 protrusion PR1a and the 1-2 protrusion PR1b may be in contact with the first groove of the housing at a point that is the farthest from the first surface 1141a of the base BS.

In addition, an align groove 1141aa may be positioned in the first surface 1141a. The align groove 1141aa may be disposed at one side of the first surface 1141a to provide an assembly position or an assembly direction of the tilting guide part 1141 during an assembly process.

In addition, the tilting guide part 1141 may include the second protrusion PR2 extending to one side on the second surface 1141b. According to the embodiment, the second protrusion PR2 may protrude toward the housing from the second surface 1141b. In addition, a plurality of second protrusions PR2 may be formed and may include a 2-1 protrusion PR2a and a 2-2 protrusion PR2b in the embodiment.

The 2-1 protrusion PR2a and the 2-2 protrusion PR2b may be positioned side by side in the second direction (Y-axis direction). That is, the 2-1 protrusion PR2a and the 2-2 protrusion PR2b may overlap in the second direction (Y-axis direction). In addition, in the embodiment, the 2-1 protrusion PR2a and the 2-2 protrusion PR2b may be bisected by a virtual line extending in the second direction (Y-axis direction).

Each of the 2-1 protrusion PR2a and the 2-2 protrusion PR2b may have a curvature and have, for example, a hemispherical shape. In addition, the 2-1 protrusion PR2a and the 2-2 protrusion PR2b may be in contact with the second member 1131a at a point spaced apart from the second surface 1141b of the base BS.

The 1-1 protrusion PR1a and the 1-2 protrusion PR1b may be positioned in a region between the 2-1 protrusion PR2a and the 2-2 protrusion PR2b in the second direction. According to the embodiment, the 1-1 protrusion PR1a and the 1-2 protrusion PR1b may be positioned at the center of a separation space between the 2-1 protrusion PR2a and the 2-2 protrusion PR2b in the second direction. With this configuration, the actuator according to the embodiment may have an angle of the X-axis tilting in the same range with respect to the X-axis. That is, the tilting guide part 1141 and the holder may equally provide a range (e.g., a position/negative range) in which the X-axis tilting may be performed based on the 1-1 protrusion PR1a and the 1-2 protrusion PR1b with respect to the X-axis.

In addition, the 2-1 protrusion PR2a and the 2-2 protrusion PR2b may be positioned in a region between the 1-1 protrusion PR1a and the 1-2 protrusion PR1b in the first direction. According to the embodiment, the 2-1 protrusion PR2a and the 2-2 protrusion PR2b may be positioned at the center of a separation space between the 1-1 protrusion PR1a and the 1-2 protrusion PR1b in the first direction. With this configuration, the actuator according to the embodiment may have an angle of the Y-axis tilting in the same range with respect to the Y-axis. That is, the tilting guide part 1141 and the holder may equally provide a range (e.g., a position/negative range) in which the Y-axis tilting may be performed based on the 2-1 protrusion PR2a and the 2-2 protrusion PR2b with respect to the Y-axis.

Specifically, the first surface 1141a may include a first outer line M1, a second outer line M2, a third outer line M3, and a fourth outer line M4. The first outer line M1 and the second outer line M2 may face each other, and the third outer line M3 and the fourth outer line M4 may face each other. In addition, the third outer line M3 and the fourth outer line M4 may be positioned between the first outer line M1 and the second outer line M2. In addition, the first outer line M1 and the second outer line M2 may be perpendicular to the first direction (X-axis direction), but the third outer line M3 and the fourth outer line M4 may be parallel to the first direction (X-axis direction).

In this case, the first protrusion PR1 may be positioned on a first virtual line VL1. Here, the first virtual line VL1 is a line that bisects the first outer line M1 and the second outer line M2. Alternatively, the first and third virtual lines VL1 and VL1' are lines that bisect the base BS in the second direction (Y-axis direction). Therefore, the tilting guide part 1141 may easily perform the X-axis tilting through the first protrusion PR1. In addition, since the tilting guide part 1141 performs the X-axis tilting with respect to the first virtual line VL1, a rotating force may be uniformly applied to the tilting guide part 1141. Therefore, the X-axis tilting can be precisely performed, and the reliability of the device can be improved.

In addition, the 1-1 protrusion PR1a and the 1-2 protrusion PR1b may be symmetrically disposed with respect to the first virtual line VL1 and the second virtual line VL2. Alternatively, the 1-1 protrusion PR1a and the 1-2 protrusion PR1b may be symmetrically positioned based on a first central point. With this configuration, upon performing the X-axis tilting, a support force supported by the first protrusion PR1 may be equally applied to upper and lower sides with respect to the second virtual line VL2. Therefore, it is possible to improve the reliability of the tilting guide part. Here, the second virtual line VL2 is a line that bisects the third outer line M3 and the fourth outer line M4. Alternatively, the second and fourth virtual lines VL2 and VL2' are lines that bisect the base BS in the first direction (X-axis direction).

In addition, the first central point may be an intersection of the first virtual line VL1 and the second virtual line VL2. Alternatively, the first central point may also be a point corresponding to the center of gravity according to the shape of the tilting guide part 1141.

In addition, the second surface 1141b may include a fifth outer line M1', a sixth outer line M2', a seventh outer line M3', and an eighth outer line M4'. The fifth outer line M1' and the sixth outer line M2' may face each other, and the seventh outer line M3' and the eighth outer line M4' may face each other. In addition, the seventh outer line M3' and the eighth outer line M4' may be positioned between the fifth outer line M1' and the sixth outer line M2'. In addition, the fifth outer line M1' and the sixth outer line M2' may be perpendicular to the first direction (X-axis direction), but the seventh outer line M3' and the eighth outer line M4' may be parallel to the first direction (X-axis direction).

In addition, since the tilting guide part 1141 performs the Y-axis tilting with respect to the fourth virtual line VL2', a rotating force may be uniformly applied to the tilting guide part 1141. Therefore, the Y-axis tilting can be precisely performed, and the reliability of the device can be improved.

In addition, the 2-1 protrusion PR2a and the 2-2 protrusion PR2b may be symmetrically disposed on the fourth virtual line VL2' with respect to the third virtual line VL1'. Alternatively, the 2-1 protrusion PR2a and the 2-2 protrusion PR2b may be symmetrically positioned based on a second central point. With this configuration, upon performing the Y-axis tilting, a support force supported by the second protrusion PR2 may be equally applied to upper and lower sides with respect to the fourth virtual line VL2'. Therefore, it is possible to improve the reliability of the tilting guide part. Here, the third virtual line VL1' is a line that bisects the fifth outer line M1' and the sixth outer line M2'. In addition, the second central point may be an intersection of the third virtual line VL1' and the fourth virtual line VL2'. Alternatively, the second central point may also be a point corresponding to the center of gravity according to the shape of the tilting guide part 1141.

In addition, a distance DR2 between the 1-1 protrusion PR1a and the 1-2 protrusion PR1b in the first direction (X-axis direction) may be greater than a length of the second protrusion PR2 in the first direction (X-axis direction). Therefore, when the X-axis tilting is performed based on the 1-1 protrusion PR1a and the 1-2 protrusion PR1b, it is possible to minimize resistance due to the second protrusion PR2.

Correspondingly, a distance ML2 between the 2-1 protrusion PR2a and the 2-2 protrusion PR2b in the second direction (Y-axis direction) may be greater than a length of the first protrusion PR1 in the second direction (Y-axis direction). Therefore, when the Y-axis tilting is performed based on the 2-1 protrusion PR2a and the 2-2 protrusion PR2b, it is possible to minimize resistance due to the first protrusion PR1.

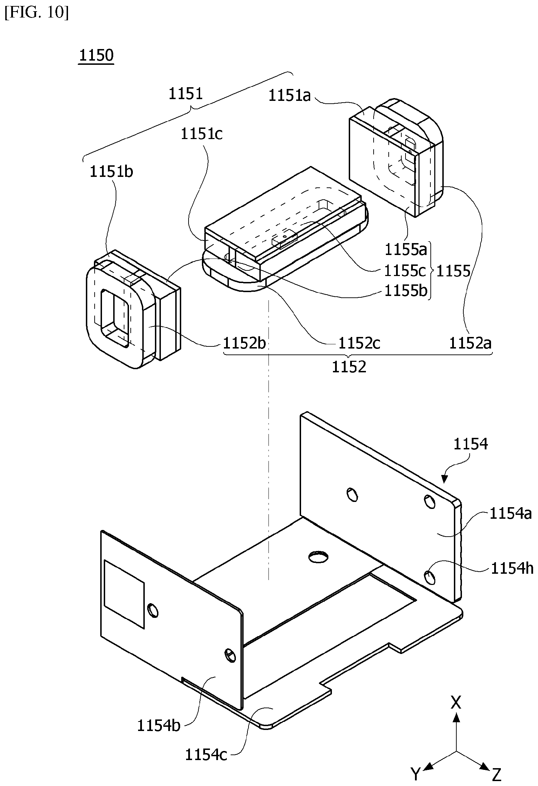

FIG. 10 is a view illustrating a first driving unit of the first camera actuator according to the embodiment.

Referring to FIG. 10, the first driving unit 1150 includes the driving magnet 1151, the driving coil 1152, the Hall sensor part 1153, the first board part 1154, and the yoke part 1155.

In addition, as described above, the driving magnet 1151 may include the third magnet 1151a, the fourth magnet 1151b, and the fifth magnet 1151c, which provide a driving force generated by an electromagnetic force. The third magnet 1151a, the fourth magnet 1151b, and the fifth magnet 1151c may each be positioned on the outer surface of the holder 1131.

In addition, the driving coil 1152 may include a plurality of coils. In an embodiment, the driving coil 1152 may include a third coil 1152a, a fourth coil 1152b, and a fifth coil 1152c.

The third coil 1152a may be positioned to face the third magnet 1151a. Therefore, the third coil 1152a may be positioned in the first housing hole 1121a of the first housing side portion 1121 as described above. In addition, the fourth coil 1152b may be positioned to face the fourth magnet 1151b. Therefore, the fourth coil 1152b may be positioned in the second housing hole 1122a of the second housing side portion 1122 as described above.

The second camera actuator according to the embodiment may control the mover 1130 to rotate along the first axis (X-axis direction) or the second axis (Y-axis direction) by the electromagnetic force between the driving magnet 1151 and the driving coil 1152, thereby minimizing the occurrence of a decentering or tilting phenomenon and providing the best optical characteristics upon implementing an OIS.

In addition, according to the embodiment, it is possible to provide an ultra-slim and ultra-small camera actuator and the camera module including the same by implementing the OIS through the tilting guide part 1141 of the rotating unit 1140 disposed between the first housing 1120 and the mover 1130 to resolve the size limitation of the actuator.

The first board part 1154 may include a first board side portion 1154a, a second board side portion 1154b, and a third board side portion 1154c.

The first board side portion 1154a and the second board side portion 1154b may be disposed to face each other. In addition, the third board side portion 1154c may be positioned between the first board side portion 1154a and the second board side portion 1154b.

In addition, the first board side portion 1154a may be positioned between the first housing side portion and the shield can, and the second board side portion 1154b may be positioned between the second housing side portion and the shield can. In addition, the third board side portion 1154c may be positioned between the third housing side portion and the shield can and may be a lower surface of the first board part 1154.

The first board side portion 1154a may be coupled to and electrically connected to the third coil 1152a. In addition, the first board side portion 1154a may be coupled to and electrically connected to a first Hall sensor 1153a.

The second board side portion 1154b may be coupled to and electrically connected to the fourth coil 1152b. It should be understood that the second board side portion 1154b may also be coupled to and electrically connected to the first Hall sensor.

The third board side portion 1154c may be coupled to and electrically connected to the fifth coil 1152c. In addition, the third board side portion 1154c may be coupled to and electrically connected to a second Hall sensor 1153b.

The yoke part 1155 may include a third yoke 1155a, a fourth yoke 1155b, and a fifth yoke 1155c. The third yoke 1155a may be positioned in the first seating groove and coupled to the third magnet 1151a. In addition, the fourth yoke 1155b may be positioned in the second seating groove and coupled to the fourth magnet 1151b. In addition, the fifth yoke 1155c may be positioned in the third seating groove and coupled to the fifth magnet 1151c. The third to fifth yokes 1155a to 1155c allow the third to the fifth magnets 1151a to 1151c to be easily seated in the first to third seating grooves and coupled to the housing.

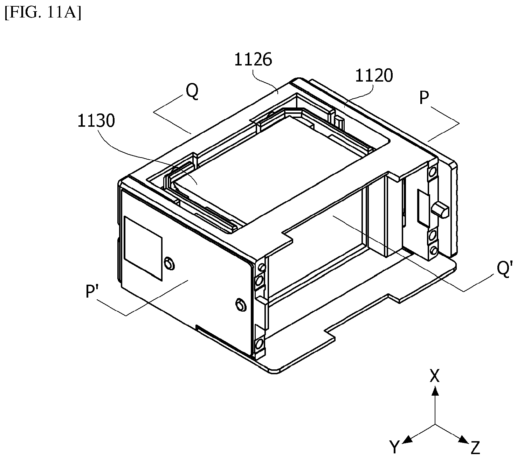

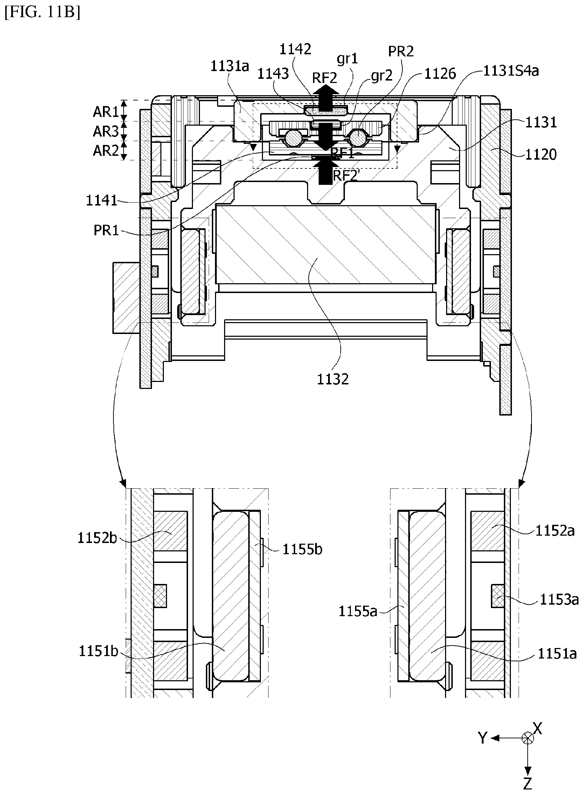

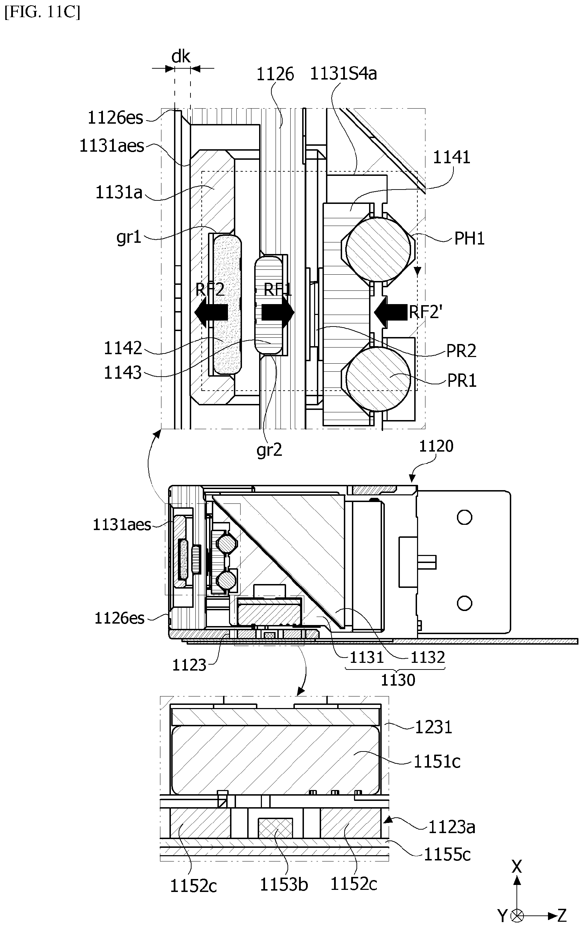

FIG. 11A is a perspective view of the first camera actuator according to the embodiment, FIG. 11B is a view of the first camera actuator along line P-P' in FIG. 11A, and FIG. 11C is a view of the first camera actuator along line Q-Q' in FIG. 11A.

Referring to FIGS. 11A to 11C, the third coil 1152a may be positioned on the first housing side portion 1121, and the third magnet 1151a may be positioned on the first holder outer surface 1131S1 of the holder 1131. Therefore, the third coil 1152a and the third magnet 1151a may be positioned to face each other. At least a part of the third magnet 1151a may overlap the third coil 1152a in the second direction (Y-axis direction).

In addition, the fourth coil 1152b may be positioned the second housing side portion 1122, and the fourth magnet 1151b may be positioned on the second holder outer surface 1131S2 of the holder 1131. Therefore, the fourth coil 1152b and the fourth magnet 1151b may be positioned to face each other. At least a part of the fourth magnet 1151b may overlap the fourth coil 1152b in the second direction (Y-axis direction).

In addition, the third coil 1152a and the fourth coil 1152b may overlap in the second direction (Y-axis direction), and the third magnet 1151a and the fourth magnet 1151b may overlap in the second direction (Y-axis direction).

With this configuration, the electromagnetic force applied to the outer surfaces of the holder (the first holder outer surface and the second holder outer surface) may be positioned on an axis parallel to the second direction (Y-axis direction), and thus the X-axis tilting can be accurately and precisely performed.

In addition, the second protrusions PR2a and PR2b of the tilting guide part 1141 may be in contact with the first member 1126 of the first housing 1120. The second protrusion PR2 may be seated in the second protrusion groove PH2 formed in one side surface of the first member 1126. In addition, when the X-axis tilting is performed, the second protrusions PR2a and PR2b may be reference axes (or rotation axes) of the tilting. Therefore, the tilting guide part 1141 and the mover 1130 may move in the second direction.

In addition, as described above, the first Hall sensor 1153a may be positioned outside to be electrically connected and coupled to the first board part 1154. However, the present disclosure is not limited to this position.

In addition, the fifth coil 1151c may be positioned the third housing side portion 1123, and the fifth magnet 1151c may be positioned on the third holder outer surface 1131S3 of the holder 1131. The fifth coil 1151c and the fifth magnet 1151c may at least partially overlap in the first direction (X-axis direction). Therefore, a strength of the electromagnetic force between the fifth coil 1151c and the fifth magnet 1151c may be easily controlled.

As described above, the tilting guide part 1141 may be positioned on the fourth holder outer surface 1131S4 of the holder 1131. In addition, the tilting guide part 1141 may be seated in the fourth seating groove 1131S4a of the fourth holder outer surface. As described above, the fourth seating groove 1131S4a may include the first region AR1, the second region AR2, and the third region AR3.

The second member 1131a may be disposed in the first region AR1, and the second member 1131a may include the first groove gr1 formed on the inner surface of the second member 1131a. In addition, the second magnetic part 1142 may be disposed in the first groove gr1 as described above, and a repulsive force RF2 generated by the second magnetic part 1142 may be transmitted to the fourth seating groove 1131S4a of the holder 1131 through the second member 1131a (RF2'). Therefore, the holder 1131 may apply a force to the tilting guide part 1141 in the same direction as the repulsive force RF2 generated by the second magnetic part 1142.

The first member 1126 may be disposed in the second region AR2. The first member 1126 may include the second groove gr2 facing the first groove gr1. In addition, the first member 1126 may include the second protrusion groove PH2 disposed on a surface corresponding to the second groove gr2. In addition, a repulsive force RF1 generated by the first magnetic part 1143 may be applied to the first member 1126. Therefore, the first member 1126 and the second member 1131a may press the tilting guide part 1141 disposed between the first member 1126 and the holder 1131 through the generated repulsive forces RF1 and RF2'. Therefore, even after the holder tilts with respect to the X-axis or the Y-axis by a current applied to the third and fourth coils or the fifth coil 1152c, the coupling between the holder 1131, the first housing 1120, and the tilting guide part 1141 may be maintained.

The tilting guide part 1141 may be disposed in the third region AR3. As described above, the tilting guide part 1141 may include the first protrusion PR1 and the second protrusion PR2. In this case, the first protrusion PR1 and the second protrusion PR2 may also be respectively disposed on the second surface 1141b and the first surface 1141a of the base BS. As described above, even in another embodiment to be described below, the first protrusion PR1 and the second protrusion PR2 may be variously positioned on the facing surfaces of the base BS.

The first protrusion groove PH1 may be positioned in the fourth seating groove 1131S4a. In addition, the first protrusion PR1 of the tilting guide part 1141 may be accommodated in the first protrusion groove PH1. Therefore, the first protrusion PR1 may be in contact with the first protrusion groove PH1. The maximum diameter of the first protrusion groove PH1 may correspond to the maximum diameter of the first protrusion PR1. This may be applied to the second protrusion groove PH2 and the second protrusion PR2 in the same manner. That is, the maximum diameter of the second protrusion groove PH2 may correspond to the maximum diameter of the second protrusion PR2. In addition, the second protrusion PR2 may be in contact with the second protrusion groove PH2. With this configuration, the first axis tilting may be easily performed based on the first protrusion PR1, the second axis tilting may be easily performed based on the second protrusion PR2, and radii of the tilting can be improved.

In addition, the tilting guide part 1141 may be disposed side by side with the second member 1131a and the first member 1126 in the third direction (Z-axis direction), and thus the tilting guide part 1141 may overlap the optical member 1132 in the first direction (X-axis direction). More specifically, in the embodiment, the first protrusion PR1 may overlap the optical member 1132 in the first direction (X-axis direction). Furthermore, at least a part of the first protrusion PR1 may overlap the fifth coil 1152c or the fifth magnet 1151c in the first direction (X-axis direction). That is, in the camera actuator according to the embodiment, each protrusion, which is a central axis of the tilting, may be positioned adjacent to the center of gravity of the mover 1130. Therefore, the tilting guide part may be positioned adjacent to the center of gravity of the holder. Therefore, the camera actuator according to the embodiment can minimize a moment value for tilting the holder and also minimize the consumption of the current applied to the coil or the like to tilt the holder, thereby improving power consumption and device reliability.

In addition, the second magnetic part 1142 and the first magnetic part 1143 may not overlap the fifth coil 1151c or the optical member 1132 in the first direction (X-axis direction). That is, in the embodiment, the second magnetic part 1142 and the first magnetic part 1143 may be disposed to be spaced apart from the fifth coil 1151c or the optical member 1132 in the third direction (Z-axis direction). Therefore, it is possible to minimize the magnetic force transmitted from the second magnetic part 1142 and the first magnetic part 1143 to the fifth coil 1151c. Therefore, the camera actuator according to the embodiment may easily perform vertical driving (Y-axis tilting) and can minimize power consumption.

Furthermore, as described above, the second Hall sensor 1153b positioned at an inner side of the fifth coil 1153c may detect a change in magnetic flux, and thus perform position sensing between the fifth magnet 1151c and the second Hall sensor 1153b. In this case, an offset voltage of the second Hall sensor 1153b may be changed depending on the influence of the magnetic field generated from the second magnetic part 1142 and the first magnetic part 1143.

The first camera actuator according to the embodiment includes the second member 1131a, the second magnetic part 1142, the first magnetic part 1143, the first member 1126, and the tilting guide part 1141, and the holder 1131, which may be sequentially arranged based on the outermost side surface thereof. However, since the second magnetic part is positioned in the second member and the first magnetic part is positioned in the first member, the second member, the first member, the tilting guide part, and the holder may be sequentially arranged.

In addition, in an embodiment, distances of the second magnetic part 1142 and the first magnetic part 1143 spaced apart from the holder 1131 (or the optical member 1132) in the third direction may be greater than distances between the tilting guide parts 1141. Therefore, the second Hall sensor 1153b under the holder 1131 may also be disposed to be spaced a predetermined distance from the second magnetic part 1142 and the first magnetic part 1143. Therefore, it is possible to minimize the influence of the magnetic field generated by the second magnetic part 1142 and the first magnetic part 1143 on the second Hall sensor 1153b, thereby preventing the Hall voltage from being concentrated to a positive or negative value and saturated. That is, this configuration may allow a Hall electrode to have a range in which Hall calibration may be performed. Furthermore, a temperature is also affected by the electrode of the Hall sensor, and a resolution of a camera lens varies depending on the temperature, but in the embodiment, it is possible to prevent the case in which the Hall voltage is concentrated to the positive or negative value to compensate for the resolution of the lens correspondingly, thereby easily preventing a reduction in the resolution.

In addition, a circuit for compensating for the offset with respect to the output (i.e., the Hall voltage) of the second Hall sensor 1153b can be easily designed.

In addition, according to the embodiment, some regions of the tilting guide part 1141 with respect to the fourth holder outer surface of the holder 1131 may be positioned at the outer side of the fourth holder outer surface.

The tilting guide part 1141 may be seated in the fourth seating groove 1131S4a based on the base BS, excluding the first protrusion PR1 and the second protrusion PR2. That is, a length of the base BS in the third direction (Z-axis direction) may be smaller than a length of the fourth seating groove 1131S4a in the third direction (Z-axis direction). With this configuration, it is possible to realize miniaturization.

In addition, a maximum length of the tilting guide part 1141 in the third direction (Z-axis direction) may be greater than the length of the fourth seating groove 1131S4a in the third direction (Z-axis direction). Therefore, as described above, an end of the second protrusion PR2 may be positioned between the fourth holder outer surface and the first member 1126. That is, at least a part of the second protrusion PR2 may be positioned in a direction opposite to the third direction (Z-axis direction) than the holder 1131. That is, the holder 1131 may be spaced a predetermined distance from the end (portion in contact with the second protrusion groove) of the second protrusion PR2 in the third direction (Z-axis direction).

In addition, a front surface 1131aes of the second member 1131a according to the embodiment may be spaced apart from a front surface 1126es of the first member 1126. In particular, the front surface 1131aes of the second member 1131a according to the embodiment may be positioned in the third direction (Z-axis direction) from the front surface 1126es of the first member 1126. Alternatively, the front surface 1131aes of the second member 1131a according to the embodiment may be position at an inner side of the front surface 1126es of the first member 1126. To this end, the first member 1126 may have an inward extending and bent structure. In addition, some regions of the second member 1131a may be positioned in a groove formed by the above-described extending and bent structure of the first member 1126.

With this configuration, since the second member 1131a is positioned at the inner side of the first member 1126, it is possible to increase space efficiency and realize miniaturization. Furthermore, even when the driving (tilting or rotation of the mover 1130) by the electromagnetic force is performed, the second member 1131a does not protrude to the outside of the first member 1126, and thus it is possible to block the contact with nearby devices. Therefore, it is possible to improve the reliability.

In addition, a predetermined separation space may be present between the second magnetic part 1142 and the first magnetic part 1143. That is, the second magnetic part 1142 and the first magnetic part 1143 may face each other with the same polarity.

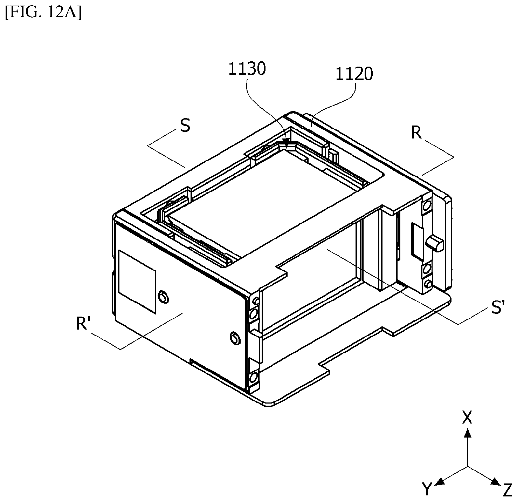

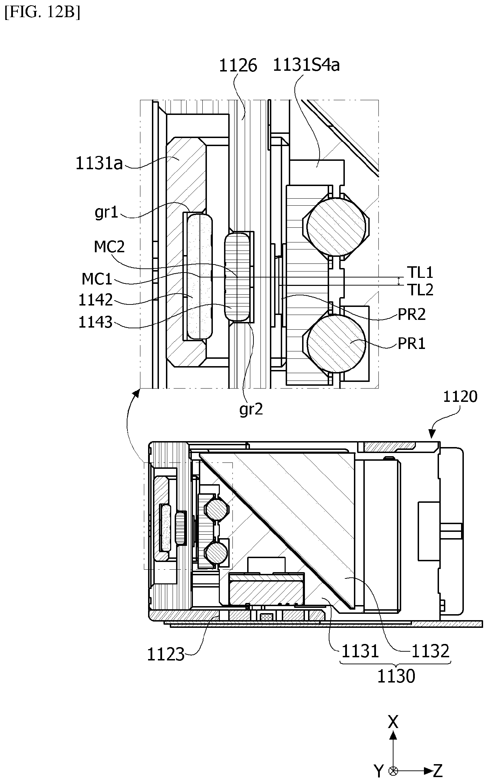

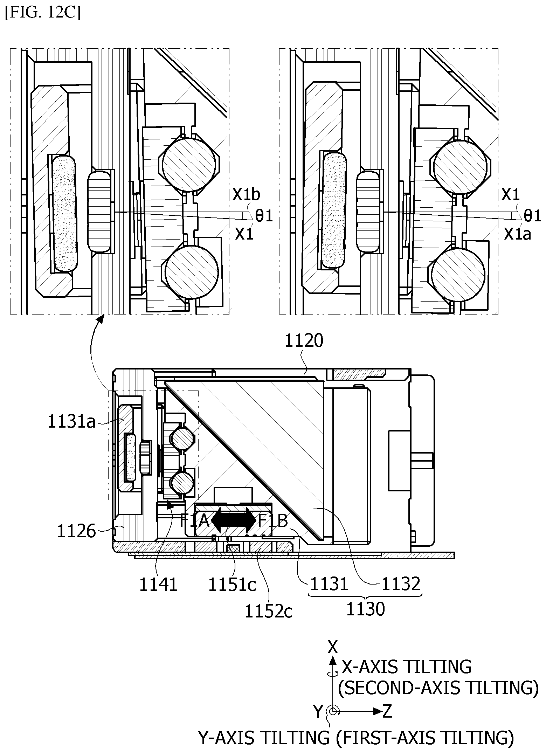

FIG. 12A is a perspective view of the first camera actuator according to the embodiment, FIG. 12B is a view of the first camera actuator along line S-S' in FIG. 12A, and FIG. 12C is an exemplary view showing movement of the first camera actuator illustrated in FIG. 12B.

Referring to FIGS. 12A to 12C, the Y-axis tilting may be performed by the first camera actuator according to the embodiment. That is, an OIS can be implemented by rotating the first camera actuator in the first direction (X-axis direction).

In an embodiment, the fifth magnet 1151c disposed under the holder 1131 may generate the electromagnetic force with the fifth coil 1152c to tilt or rotate the mover 1130 with respect to the second direction (Y-axis direction).

Specifically, the repulsive force between the second magnetic part 1142 and the first magnetic part 1143 may be transmitted to the second member 1131a and the first member 1126 and finally transmitted to the tilting guide part 1141 disposed between the first member 1126 and the holder 1131. Therefore, the tilting guide part 1141 may be pressed by the mover 1130 and the first housing 1120 by the above-described repulsive force.

In addition, the second protrusion PR2 may be supported by the first member 1126. In this case, in an embodiment, the tilting guide part 1141 may rotate or tilt based on the second protrusion PR2 protruding toward the first member 1126, which is the reference axis (or the rotation axis), that is, the second direction (Y-axis direction). That is, the tilting guide part 1141 may rotate or tilt based on the second protrusion PR2 protruding toward the first member 1126 in the first direction (X-axis direction), which is the reference axis (or the rotation axis).

For example, an OIS can be implemented by rotating (X1→X1a) the mover 130 at a first angle θ1 in the X-axis direction by first electromagnetic forces F1A and F1B between the third magnet 1151c disposed in the third seating groove and the fifth coil 1152c disposed on the third board side portion.

Conversely, an OIS can be implemented by rotating (X1→X1b) the mover 130 at a first angle θ1 in a direction opposite to the X-axis direction by the first electromagnetic forces F1A and F1B between the third magnet 1151c disposed in the third seating groove and the fifth coil 1152c disposed on the third board side portion.

The first angle θ1 may be in the range of ±1° to ±3°. However, the present disclosure is not limited thereto.

Hereinafter, in the first camera actuators according to various embodiments, the electromagnetic force may move the mover by generating a force in the described direction or move the mover in the described direction even when a force is generated in another direction. That is, the described direction of the electromagnetic force refers to a direction of the force generated by the magnet and the coil to move the mover. For example, the first electromagnetic forces F1A and F1B may act in a third direction or in a direction opposite to the third direction.

In addition, a center MC1 of the second magnetic part 1142 and a center MC2 of the first magnetic part 1143 may be disposed side by side in the third direction (Z-axis direction). That is, a center line TL1 connecting the center MC1 of the second magnetic part 1142 and the center MC2 of the first magnetic part 1143 may be parallel to the third direction (Z-axis direction).

In addition, a bisector TL2 that bisects the second protrusion PR2 and corresponds to the third direction (Z-axis direction) may be parallel to the center line TL1 (or the bisector). That is, the bisector TL2 may be a line that bisects the second protrusion PR2 in the first direction (X-axis direction), and a plurality of bisectors TL2 may be formed.

In an embodiment, the bisector TL2 may be disposed to be spaced apart from the center line TL1 in the first direction (X-axis direction). The bisector TL2 may be positioned above the center line TL1. With this configuration, since the separation distance between the fifth coil 1152c and the fifth magnet 1151c may be increased, the holder can more accurately perform two axes tilting. Furthermore, when a current is not applied to the coil, the position of the holder can be equally held.

More specifically, since the center MC1 of the second magnetic part 1142 and the center MC2 of the first magnetic part 1143 are spaced apart from the bisector TL2 in the first direction (X-axis direction), the force (e.g., the repulsive force) between the second magnetic part 1142 and the first magnetic part 1143 may act at a distance spaced apart from the bisector TL2 corresponding to the optical axis in the first direction (X-axis direction). In addition, a momentum is generated in the mover 1130 by this force. However, when the center MC1 of the second magnetic part 1142 and the center MC2 of the first magnetic part 1143 are positioned on the bisector TL2, there is a problem that during the execution of the calibration, the positions of the tilting guide part and the second magnetic part 1142 are not held after tilting. That is, in the camera actuator according to the embodiment, since the center MC1 of the second magnetic part 1142 and the center MC2 of the first magnetic part 1143 are not disposed on the bisector TL2, the positions of the tilting guide part and the second magnetic part 1142 may be maintained after tilting or rotating.

In another embodiment, the center MC1 of the second magnetic part 1142 and the center MC2 of the first magnetic part 1143 may be disposed to be spaced apart from each other in the first direction (X-axis direction).

In addition, the center MC1 of the second magnetic part 1142 and the center MC2 of the first magnetic part 1143 may not be positioned on the bisector TL2. For example, the center MC1 of the second magnetic part 1142 and the center MC2 of the first magnetic part 1143 may be positioned above the bisector TL2.

Therefore, since the separation distance between the fifth coil 1152c and the fifth magnet 1151c increases, the holder may more accurately perform two axes tilting. Furthermore, when a current is not applied to the coil, the position of the holder can be equally held.

In addition, the second magnetic part 1142 and the first magnetic part 1143 may have different lengths in the first direction (X-axis direction).

In an embodiment, an area of the second magnetic part 1142 coupled to the second member 1131a and tilted together with the mover 1130 may be greater than an area of the first magnetic part 1143. For example, a length of the second magnetic part 1142 in the first direction (X-axis direction) may be greater than a length of the first magnetic part 1143 in the first direction (X-axis direction). In addition, a length of the second magnetic part 1142 in the second direction (Y-axis direction) may be greater than a length of the first magnetic part 1143 in the second direction (Y-axis direction). In addition, the first magnetic part 1143 may be positioned in a virtual straight line extending both ends of the second magnetic part 1142 in the third direction.

With this configuration, even when the magnetic part at one side (e.g., the second magnetic part) tilts upon tilting or rotating, it is possible to easily prevent the generation of forces other than the vertical force due to the tilting. That is, even when the second magnetic part vertically tilts together with the mover 1130, the second magnetic part may not receive a force (e.g., a repulsive force or an attractive force) against the tilting from the first magnetic part 1143. Therefore, it is possible to increase driving efficiency.

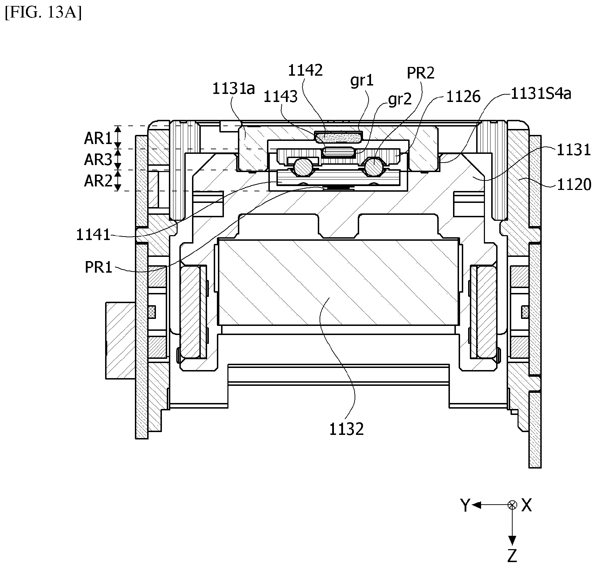

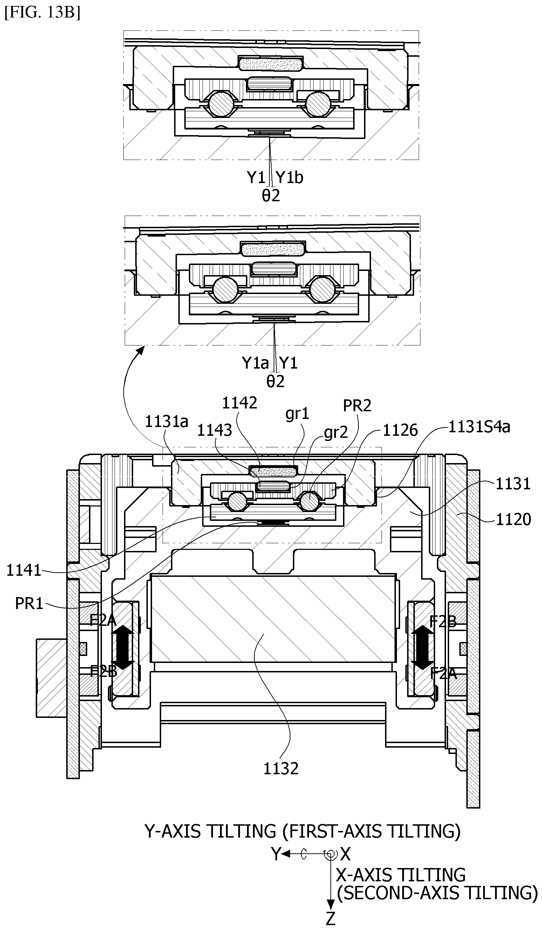

FIG. 13A is a view of the first camera actuator along line R-R' in FIG. 12A, and FIG. 13B is an exemplary view of movement of the first camera actuator illustrated in FIG. 13A.

Referring to FIGS. 13A and 13B, an X-axis tilting may be performed. That is, an OIS can be implemented by tilting or rotating the mover 1130 in the Y-axis direction.

In an embodiment, the third magnet 1151a and the fourth magnet 1151b disposed on the holder 1131 may respectively generate the electromagnetic force with the third coil 1152a and the fourth coil 1152b and tilt or rotate the tilting guide part 1141 and the mover 1130 with respect to the first direction (X-axis direction).

Specifically, the repulsive force between the second magnetic part 1142 and the first magnetic part 1143 may be transmitted to the first member 1126 and the holder 1131 and finally transmitted to the tilting guide part 1141 disposed between the holder 1131 and the first member 1126. Therefore, the tilting guide part 1141 may be pressed by the mover 1130 and the first housing 1120 by the above-described repulsive force.

In addition, the 1-1 protrusion PR1a and the 1-2 protrusion PR1b may be spaced apart from each other in the first direction (X-axis direction) and supported by the first protrusion groove PH1 formed in the fourth seating groove 1131S4a of the holder 1131. In addition, in an embodiment, the tilting guide part 1141 may rotate or tilt based on the first protrusion PR1 protruding toward the holder 1131 (e.g., in the third direction), which is the reference axis (or the rotation axis), that is, the first direction (X-axis direction).

For example, an OIS can be implemented by rotating (Y1→Y1a) the mover 130 at a second angle θ2 in the Y-axis direction by second electromagnetic forces F2A and F2B between the third and fourth magnets 1151a and 1151b disposed in the first seating groove and the third and fourth coils 1152a and 1152b disposed on the first and second board side portions. In addition, an OIS can be implemented by rotating (Y1→Y1b) the mover 130 at the second angle θ2 in the Y-axis direction by the second electromagnetic forces F2A and F2B between the third and fourth magnets 1151a and 1151b disposed in the first seating groove and the third and fourth coils 1152a and 1152b disposed on the first and second board side portions. The second angle θ2 may be in the range of ±1° to ±3°. However, the present disclosure is not limited thereto.

In addition, as described above, the electromagnetic force generated by the third and fourth magnets 1151a and 1151b and the third and fourth coils 1152a and 1152b may act in the third direction or in a direction opposite to the third direction. For example, the electromagnetic force may be generated at a left side of the mover 1130 in the third direction (Z-axis direction) and act at a right side of the mover 1130 in the direction opposite to the third direction (Z-axis direction). Therefore, the mover 1130 may rotate with respect to the first direction. Alternatively, the mover 130 may move in the second direction.

As described above, the second camera actuator according to the embodiment may control the mover 1130 to rotate along the first axis (X-axis direction) or the second axis (Y-axis direction) by the electromagnetic force between the driving magnet in the holder and the driving coil disposed in the first housing, thereby minimizing the occurrence of a decentering or tilting phenomenon and providing the best optical characteristics upon implementing the OIS. In addition, as described above, "Y-axis tilting" means rotation or tilting in the first direction (X-axis direction), and "X-axis tilting" means rotating or tilting in the second direction (Y-axis direction)

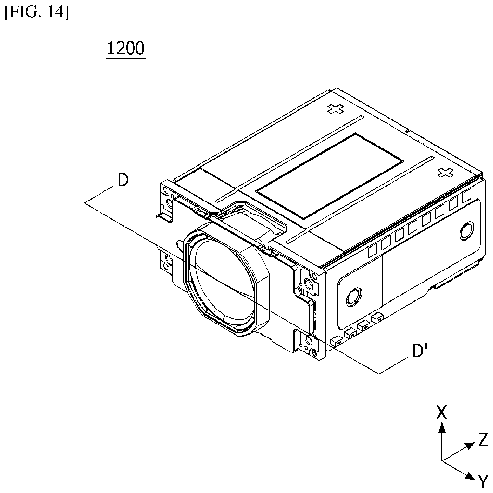

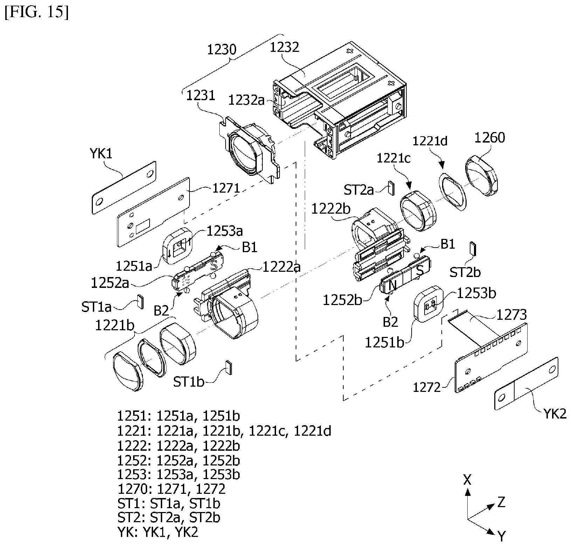

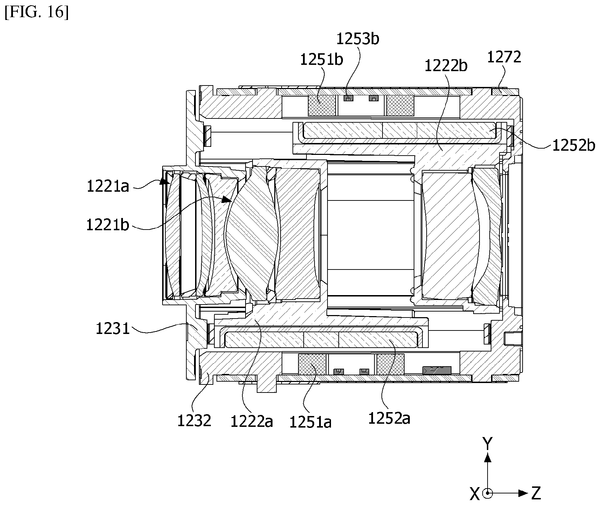

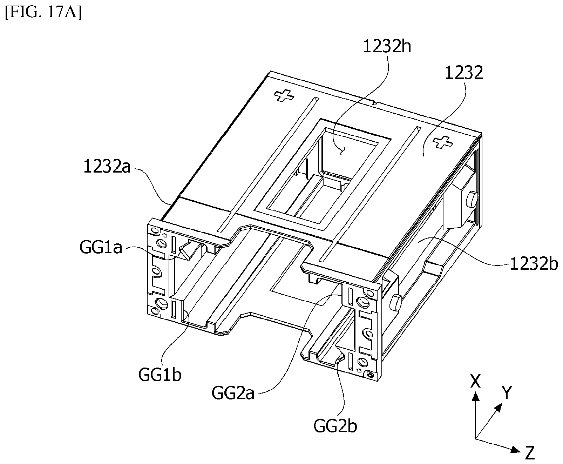

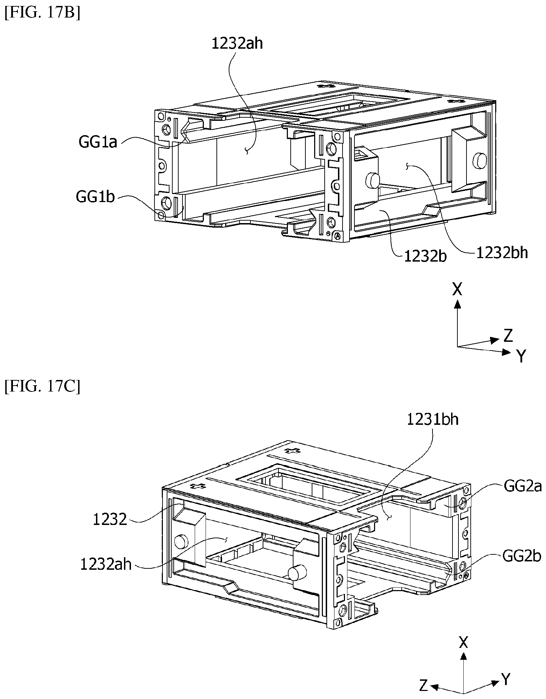

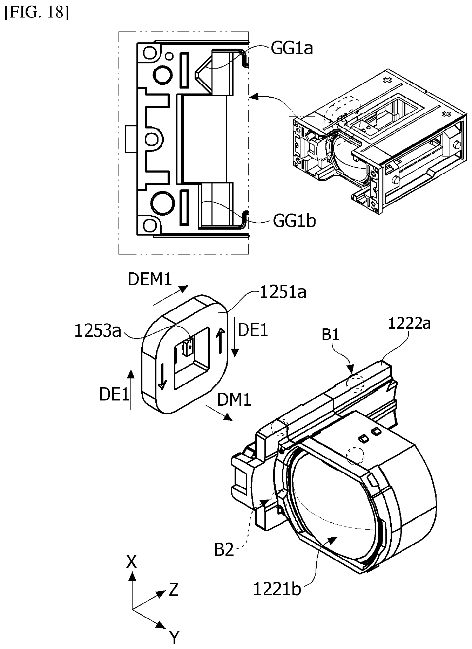

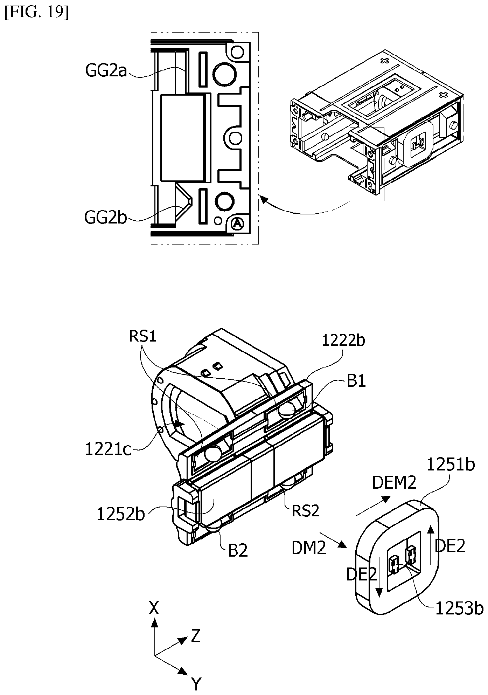

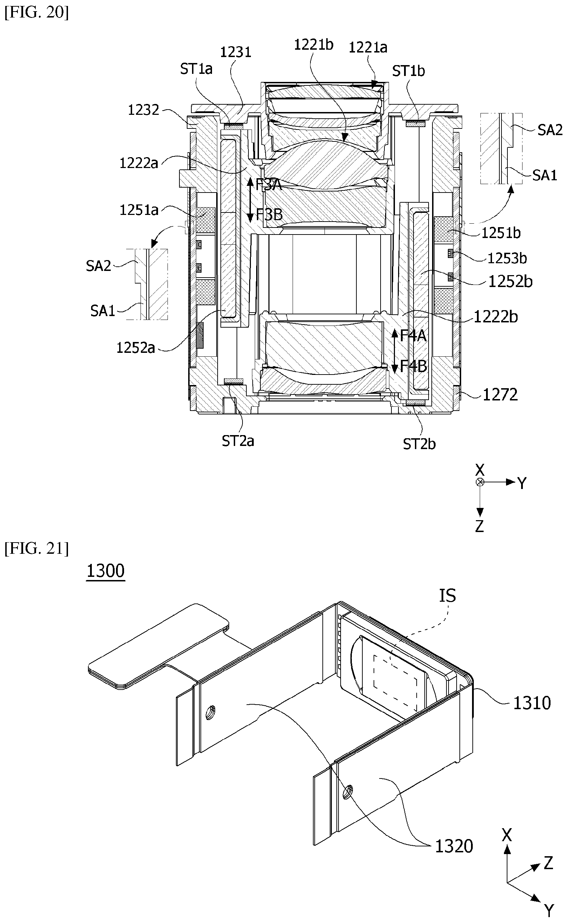

FIG. 14 is a perspective view of a second camera actuator according to an embodiment, FIG. 15 is an exploded perspective view of the second camera actuator according to the embodiment, FIG. 16 is a view of the second camera actuator along line D-D' in FIG. 14, FIGS. 17A, 17B, and 17C are perspective views of a second housing in the second camera actuator according to the embodiment, FIGS. 18 and 19 are views for describing each driving operation of a lens assembly according to an embodiment, and FIG. 20 is a view for describing driving of the second camera actuator according to the embodiment.

Referring to FIGS. 14 and 16, the second camera actuator 1200 according to the embodiment may include a lens unit 1220, a second housing 1230, a second driving unit 1250, a base unit 1260, a second board unit 1270, a bonding member 1280, a stopper unit ST, and a yoke unit YK. Furthermore, the second camera actuator 1200 may further include a second shield can (not illustrated), an elastic unit (not illustrated), and a bonding member (not illustrated).

The second shield can (not illustrated) may be positioned in one region (e.g., an outermost side) of the second camera actuator 1200 and positioned to surround the components (the lens unit 1220, the second housing 1230, the second driving unit 1250, the base unit 1260, the second board unit 1270, and an image sensor (IS)) to be describe below.

The second shield can (not illustrated) can block or reduce electromagnetic waves generated from the outside. Therefore, it is possible to reduce the occurrence of malfunction in the second driving unit 1250.

The lens unit 1220 may be positioned in the second shield can (not illustrated). The lens unit 1220 may move in the third direction (Z-axis direction or optical axis direction). Therefore, the above-described AF function and zooming function can be performed.

In addition, the lens unit 1220 may be positioned in the second housing 1230. Therefore, at least a part of the lens unit 1220 may move in the second housing 1230 in the optical axis direction or the third direction (Z-axis direction).

Specifically, the lens unit 1220 may include a lens group 1221 and a moving assembly 1222.

First, the lens group 1221 may include at least one lens. In addition, although a plurality of lens groups 1221 may be formed, hereinafter, description will be made based on one lens group.

The lens group 1221 may be coupled to the moving assembly 1222 to move in the third direction (Z-axis direction) by an electromagnetic force generated from the first magnet 1252a and the second magnet 1252b coupled to the moving assembly 1222.

In an embodiment, the lens group 1221 may include a first lens group 1221a, a second lens group 1221b, and a third lens group 1221c. The first lens group 1221a, the second lens group 1221b, and the third lens group 1221c may be sequentially arranged in the optical axis direction. Furthermore, the lens group 1221 may further include a fourth lens group 1221d. The fourth lens group 1221d may be disposed at a rear end of the third lens group 1221c.

The first lens group 1221a may be fixedly coupled to a 2-1 housing. That is, the first lens group 1221a may not move in the optical axis direction.

The second lens group 1221b may be coupled to the first lens assembly 1222a to move in the third direction or the optical axis direction. Magnification adjustment may be performed by moving the first lens assembly 1222a and the second lens group 1221b.

The third lens group 1221c may be coupled to the second lens assembly 1222b to move in the third direction or the optical axis direction. Focus adjustment or auto focusing may be performed by moving the third lens group 1221c.

However, the present disclosure is not limited to the number of lens groups, and the fourth lens group 1221d may not be present, or additional lens groups or the like other than the fourth lens group 1121d may be further disposed.

The moving assembly 1222 may include an open region surrounding the lens group 1221. The moving assembly 1222 is used interchangeably with the lens assembly. In addition, the moving assembly 1222 may be coupled to the lens group 1221 by various methods. In addition, the moving assembly 1222 may include a groove in a side surface thereof and may be coupled to the first magnet 1252a and the second magnet 1252b through the groove. A coupling member or the like may be applied to the groove.

In addition, the moving assembly 1222 may be coupled to the elastic units (not illustrated) at an upper end and a rear end thereof. Therefore, the moving assembly 1222 may be supported by the elastic units (not illustrated) while moving in the third direction (Z-axis direction). That is, the position of the moving assembly 1222 may be maintained in the third direction (Z-axis direction). The elastic unit (not illustrated) may be formed of various elastic elements such as a leaf spring.

The moving assembly 1222 may be positioned in the second housing 1230 and may include the first lens assembly 1222a and the second lens assembly 1222b.

A region in which the third lens group is seated in the second lens assembly 1222b may be positioned at a rear end of the first lens assembly 1222a. That is, the region in which the third lens group 1221c is seated in the second lens assembly 1222b may be positioned between a region in which the second lens group 1221b is seated in the first lens assembly 1222a and the image sensor.

Each of the first lens assembly 1222a and the second lens assembly 1222b may be seated at an inner side of a 2-2 housing. For example, a recess in which a ball is disposed in the first lens assembly 1222a may be positioned to face a first side portion. In addition, a recess in which a ball is disposed in the second lens assembly 1222b may be positioned to face a second side portion. A detailed description thereof will be given below.

In addition, a second driving magnet may be seated on outer surfaces of the first lens assembly 1222a and the second lens assembly 1222b. For example, the second magnet 1252b may be seated on the outer surface of the second lens assembly 1222b. The first magnet 1252a may be seated on the outer surface of the first lens assembly 1222a.

The second housing 1230 may be disposed between the lens unit 1220 and the second shield can (not illustrated). In addition, the second housing 1230 may be disposed to surround the lens unit 1220.

The second housing 1230 may include the 2-1 housing 1231 and the 2-2 housing 1232. The 2-1 housing 1231 may be coupled to the first lens group 1221a and may also be coupled to the above-described first camera actuator. The 2-1 housing 1231 may be positioned in front of the 2-2 housing 1232.

In addition, the 2-2 housing 1232 may be positioned at a rear end of the 2-1 housing 1231. The lens unit 1220 may be seated inside the 2-2 housing 1232.

A hole may be formed in a side portion of the second housing 1230 (or the 2-2 housing 1232). A first coil 1251a and a second coil 1251b may be disposed in the hole. The hole may be positioned to correspond to the above-described groove of the moving assembly 1222.

In an embodiment, the second housing 1230 (in particular, the 2-2 housing 1232) may include a first side portion 1232a and a second side portion 1232b. The first side portion 1232a and the second side portion 1232b may be positioned to correspond to each other. For example, the first side portion 1232a and the second side portion 1232b may be symmetrically disposed with respect to the third direction. A second driving coil 1251 may be positioned on the first side portion 1232a and the second side portion 1232b. In addition, the second board unit 1270 may be seated on outer surfaces of the first side portion 1232a and the second side portion 1232b. That is, the first board 1271 may be positioned on the outer surface of the first side portion 1232a, and the second board 1272 may be positioned on the outer surface of the second side portion 1232b.

In addition, as another example, first and second guide grooves facing the recesses (seating grooves in which first and second balls are seated) of the first lens assembly 1222a may be positioned in the first side portion. In addition, first and second guide grooves facing the recess of the second lens assembly 1222b may be positioned in the second side portion. In this case, there may be a structure in which a separate member (e.g., a guide unit) including the first and second guide grooves is coupled to the 2-2 housing 1232. However, in the embodiment, an integrated structure in which the first and second guide grooves are formed in the 2-2 housing 1232 will be described. Furthermore, as in another example, the first guide unit and the second guide unit may be positioned to correspond to each other. For example, the first guide unit and the second guide unit may be positioned to face each other with respect to the third direction (Z-axis direction). In addition, the first guide unit and the second guide unit may at least partially overlap each other in the second direction (Y-axis direction).

The first guide unit and the second guide unit may include at least one groove (e.g., a guide groove) or recess. In addition, a first ball B1 or a second ball B2 may be seated in the groove or the recess. Therefore, the first ball B1 or the second ball B2 may move in the guide groove of the first guide unit or the guide groove of the second guide unit in the third direction (Z-axis direction).

Alternatively, the first ball B1 or the second ball B2 may move in the third direction along a rail formed at an inner side of the first side portion 1232a of the second housing 1230 or a rail formed at an inner side of the second side portion 1232b of the second housing 1230.

Therefore, the first lens assembly 1222a and the second lens assembly 1222b may move in the third direction.

According to the embodiment, the first ball B1 may be disposed on an upper portion of the first lens assembly 1222a or the second lens assembly 1222b. In addition, the second ball B2 may be disposed on a lower portion of the first lens assembly 1222a or the second lens assembly 1222b. For example, the first ball B1 may be positioned above the second ball B2. Therefore, at least a part of the first ball B1 may overlap the second ball B2 in the first direction (X-axis direction) depending on a position.

In addition, the 2-2 housing 1232 may include first guide grooves GGla and GG2a facing a first recess RS1. In addition, the 2-2 housing 1232 may include second guide grooves GG1b and GG2b facing a second recess RS2. The first guide grooves GGla and GG2a and the second guide grooves GG1b and GG2b may be grooves extending in the third direction (Z-axis direction). In addition, the first guide grooves GGla and GG2a and the second guide grooves GG1b and GG2b may have different shapes. For example, the first guide grooves GGla and GG2a may be grooves having inclined side surfaces, and the second guide grooves GG1b and GG2b may be grooves having side surfaces perpendicular to lower surfaces thereof.

The first magnet and the first coil may be positioned on the first side portion. In addition, the second magnet and the second coil may be positioned on the second side portion. In addition, the second magnet 1252b may be positioned to face the second coil 1251b. In addition, the first magnet 1252a may be positioned to face the first coil 1251a.

The elastic unit (not illustrated) may include a first elastic member (not illustrated) and a second elastic member (not illustrated). The first elastic member (not illustrated) may be coupled to an upper surface of the moving assembly 1222. The second elastic member (not illustrated) may be coupled to a lower surface of the moving assembly 1222. In addition, the first elastic member (not illustrated) and the second elastic member (not illustrated) may be formed of leaf springs as described above. In addition, the first elastic member (not illustrated) and the second elastic member (not illustrated) may provide elasticity for moving the moving assembly 1222. However, the present disclosure is not limited to the above-described position, and the elastic unit may be disposed at various positions.

In addition, the second driving unit 1250 may provide a driving force for moving the lens unit 1220 in the third direction (Z-axis direction). The second driving unit 1250 may include the second driving coil 1251 and the second driving magnet 1252. Furthermore, the second driving unit 1250 may further include a second Hall sensor part. The second Hall sensor part 1253 may include at least one fourth Hall sensor 1253a and may be positioned at an inner side or an outer side of the second driving coil 1251.

In addition, the second driving unit 1250 may correspond to a "Zoom/AF driving unit" and a "rear driving unit." In addition, the Zoom/AF driving unit may include the first driving unit and the second driving unit. Here, the first driving unit is different from the driving unit corresponding to the above-described OIS driving unit. In the following description of the second camera actuator, the first driving unit may include the first magnet 1252a and the first coil 1251a. The first driving unit may move the first lens assembly 1222a in the optical axis direction (Z-axis direction). Furthermore, the first driving unit may further include the first yoke YK1 among the yoke units. Alternatively, the first driving unit may be a separate component from the first yoke YK1. That is, the first yoke YK1 may be a component included in the first driving unit or may also be a separate component.

In addition, the second driving unit may include the second magnet 1252b and the second coil 1251b. The second driving unit may move the second lens assembly 1222b in the optical axis direction (Z-axis direction). Furthermore, the second driving unit may further include a second yoke YK2 among the yoke units. Alternatively, the second driving unit may be a separate component from the second yoke YK2. That is, the second yoke YK2 may be a component included in the second driving unit or may also be a separate component.

The moving assembly may move in the third direction (Z-axis direction) by the electromagnetic force generated between the second driving coil 1251 and the second driving magnet 1252.

The second driving coil 1251 may include the first coil 1251a and the second coil 1251b. The first coil 1251a and the second coil 1251b may be disposed in the holes formed in the side portions of the second housing 1230. In addition, the first coil 1251a and the second coil 1251b may be electrically connected to the second board unit 1270. Therefore, the first coil 1251a and the second coil 1251b may receive a current or the like through the second board unit 1270.

The second driving magnet 1252 may include the first magnet 1252a and the second magnet 1252b. The first magnet 1252a and the second magnet 1252b may be disposed in the above-described groove of the moving assembly 1222 and positioned to correspond to the first coil 1251a and the second coil 1251b.

The base unit 1260 may be positioned between the lens unit 1220 and the image sensor IS. A component such as a filter may be fixed to the base unit 1260. In addition, the base unit 1260 may be disposed to surround the above-described image sensor. With this configuration, since the image sensor is free from foreign substances and the like, it is possible to improve the reliability of the device. However, some drawings below will be described with the above description removed. However, the present disclosure may not be limited to this structure.

In addition, the second camera actuator 1200 may be a zoom actuator or an AF actuator. For example, the second camera actuator 1200 may support one lens or a plurality of lenses and perform at least one of the AF function and the zooming function by moving the lenses according to a predetermined control signal of a controller.

In addition, the second camera actuator may be a fixed zoom or a continuous zoom. For example, the second camera actuator may provide movement of the lens group 1221.

In addition, the second camera actuator may be formed of a plurality of lens assemblies. For example, at least one of a third lens assembly (not illustrated) in addition to the first lens assembly 1222a and the second lens assembly 1222b, and a guide pin (not illustrated) may be disposed in the second camera actuator. In this regard, the above-described contents may be applied. Therefore, the second camera actuator may perform a high-magnification zooming function through the second driving unit. For example, the first lens assembly 1222a and the second lens assembly 1222b may be moving lenses that move through the second driving unit and the guide pin (not illustrated), and the third lens assembly (not illustrated) may be a fixed lens, but the present disclosure is not limited thereto. For example, the third lens assembly (not illustrated) may perform a function of a focator by which light forms an image at a specific position, and the first lens assembly may perform a function of a variator for re-forming an image formed by the third lens assembly (not illustrated), which is the focator, at another position. Meanwhile, the first lens assembly may be in a state in which a magnification change is large because a distance to a subject or an image distance is greatly changed, and the first lens assembly, which is the variator, may play an important role in a focal length or magnification change of the optical system. Meanwhile, imaging points of an image formed by the first lens assembly, which is the variator, may be slightly different depending on a position. Therefore, the second lens assembly may perform a position compensation function for the image formed by the variator. For example, the second lens assembly may perform a function of a compensator for accurately forming an image at an actual position of the image sensor using the imaging points of the image formed by the second lens assembly 1222b which is the variator. However, the configuration of the embodiment will be described with reference to the following drawings.

The image sensor may be positioned at the inner side or the outer side of the second camera actuator. In an embodiment, as illustrated, the image sensor may be positioned at the outer side of the second camera actuator. For example, the image sensor may be positioned on a circuit board. The image sensor may receive light and convert the received light into an electrical signal. In addition, the image sensor may include a plurality of pixels in the form of an array. In addition, the image sensor may be positioned on the optical axis.

The second board unit 1270 may be in contact with the second housing side portion. For example, the second board unit 1270 may be positioned on an outer surface (first side surface) of the first side portion and an outer surface (second side surface) of the second side portion of the second housing, in particular, the 2-2 housing and may be in contact with the first side surface and the second side surface.

The stopper unit ST includes a first stopper ST1 disposed at one end of the 2-2 housing 1232 and a second stopper ST2 disposed at the other end thereof. The first stopper ST1 and the second stopper ST2 may be sequentially arranged in the optical axis direction.

Furthermore, a plurality of first stoppers ST1 (ST1a and ST1b) may be formed and may be respectively disposed on a moving path of the first lens assembly and a moving path of the second lens assembly. For convenience, the 1-1 stopper ST1a and the 1-2 stopper ST1b will be described. Likewise, a plurality of second stoppers ST2 (ST2a and ST2b) may be formed and may be respectively disposed on the moving path of the first lens assembly and the moving path of the second lens assembly. In addition, the 2-1 stopper ST2a and the 2-2 stopper ST2b will be described.

The 1-1 stopper ST1a and the 2-1 stopper ST2a may be positioned on the moving path of the first lens assembly. The 1-2 stopper ST1b and the 2-2 stopper ST2b may be positioned on the moving path of the second lens assembly.

The 1-1 stopper ST1a and the 1-2 stopper ST1b may overlap in the second direction. Alternatively, the 1-1 stopper ST1a and the 1-2 stopper ST1b may be misaligned in the second direction.

In addition, the 2-1 stopper ST2a and the 2-2 stopper ST2b may be positioned to be misaligned in the second direction. A distance between the 1-1 stopper ST1a and the 2-1 stopper ST2a in the third direction may be smaller than a distance between the 1-2 stopper ST1b and the 2-2 stopper ST2b. This is a configuration that reflects a movable distance (stroke) of the first lens assembly smaller than a movable distance (stroke) of the second lens assembly.

In an embodiment, the second yoke unit or the yoke unit YK may be disposed at an outer side of the second driving unit, and for example, the yoke unit YK may be disposed at outer sides of the first and second coils. The yoke unit YK may include the first yoke YK1 and the second yoke YK2. The first yoke YK1 may overlap the first driving unit (the first magnet and the first coil) in the direction (e.g., the second direction) perpendicular to the optical axis direction. In addition, the second yoke YK2 may overlap the second driving unit (the second magnet and the second coil) in the direction (e.g., the second direction) perpendicular to the optical axis direction.

The first yoke YK1 and the second yoke YK2 may be disposed opposite to each other. For example, the first yoke YK1 and the second yoke YK2 may be positioned to correspond to each other with respect to the optical axis.

The first yoke YK1 may be positioned adjacent to the first coil 1251a. The second yoke YK2 may be positioned adjacent to the second coil 1251b. The first coil 1251a and the second coil 1251b may be positioned at inner sides of the first yoke YK1 and the second yoke YK2. In addition, the first yoke YK1, the first coil 1251a, the second coil 1251b, and the second yoke YK2 may be sequentially arranged in one direction (e.g., the second direction).

The first yoke YK1 may generate an attractive force with the first magnet. In addition, the second yoke YK2 may generate an attractive force with the second magnet. Therefore, attitude maintenance of the first and second lens assemblies may be performed. That is, the first yoke YK1 and the second yoke YK2 may provide a holding force for the positions of the first and second lens assemblies.

Furthermore, each of the first yoke YK1 and the second yoke YK2 may include a region having a different thickness. For example, the first yoke YK1 may include a first region and a second region having a different thickness from the first region. Likewise, the second yoke YK2 may also include a first region and a second region having a different thickness from the first region in correspondence to the first yoke. A description thereof will be given below.

Referring to FIGS. 17A, 17B, and 17C, as described above, the second housing 1230 (in particular, the 2-2 housing 1232) may include the first side portion 1232a and the second side portion 1232b. The first side portion 1232a and the second side portion 1232b may be positioned to correspond to each other. For example, the first side portion 1232a and the second side portion 1232b may be symmetrically disposed with respect to the third direction. The second driving coil may be positioned on the first side portion 1232a and the second side portion 1232b. In addition, the second board unit may be seated on the outer surfaces of the first side portion 1232a and the second side portion 1232b. The second board unit may be positioned at an outer side of the driving coil and electrically connected to the driving coil.

For example, the first board may be positioned on the outer surface of the first side portion 1232a, and the second board may be positioned on the outer surface of the second side portion 1232b.

Furthermore, the first guide grooves GGla and GG1b in which the first ball and the second ball are seated may be positioned in the inner surface of the first side portion 1232a. The first guide grooves GGla and GG1b may face the above-described first recess and second recess. Likewise, the second guide grooves GG2a and GG2b in which the first and second balls are seated may be positioned in the inner surface of the second side portion 1232b. The first guide grooves GGla and GG1b may face the above-described first recess and second recess.

Furthermore, the first side portion 1232a may include a first side portion hole 1232ah. The first magnetic may be positioned in the first side portion hole 1232ah. Furthermore, a length of the first side portion hole 1232ah in the first direction may be smaller than that of the first coil.

In addition, the second side portion 1232b may include a second side portion hole 1232bh. The second magnet may be positioned in the second side portion hole 1232bh. Furthermore, a length of the second side portion hole 1232bh in the first direction may be smaller than that of the second coil.

Furthermore, the 2-2 housing 1232 may include a housing hole 1232h disposed in one of an upper portion and a lower portion thereof. Coupling may be easily performed through the housing hole 1232h or inspection (e.g., vision inspection) may be performed on the first lens assembly and the second lens assembly.

In addition, the first guide grooves GGla and GG1b positioned on the first side portion 1232a may extend in the third direction. Furthermore, the first guide grooves GGla and GG1b may have different shapes. For example, any one GGla of the first guide grooves may be an inclined groove, and the other one GG1b may be a flat structure. This may also be applied to the second guide grooves GG2a and GG2b in the same manner. The first and second balls may be seated in the inclined groove and the flat structure so that the first lens assembly or the second lens assembly may move in the optical axis direction.

Referring to FIGS. 18 and 19, in the camera module according to the embodiment, by generating an electromagnetic force DEM1 between the first magnet 1252a and the first coil 1251a, the first lens assembly 1222a may move along a rail positioned on the inner surface of the housing through the first ball B1 and the second ball B2 in a direction parallel to the optical axis, that is, in the third direction (Z-axis direction) or a direction opposite to the third direction.

Specifically, in the camera module according to the embodiment, the first magnet 1252a may be provided in the first lens assembly 1222a, for example, by a vertical unipolar magnetization method. For example, in the embodiment, both of the N pole and the S pole of the first magnet 1252a may be positioned to face the first coil 1251a. Therefore, each of the N pole and the S pole of the first magnet 1252a may be disposed to correspond to a region in which a current flows from the first coil 1251a in the X-axis direction or a direction opposite to the X-axis direction.

In an embodiment, when a magnetic force is applied from the N pole of the first magnet 1252a in a direction opposite to the second direction (Y-axis direction) and a current DE1 flows in the first coil 1251a corresponding to the N pole in a direction opposite to the first direction (X-axis direction), the electromagnetic force DEM1 may act in the third direction (Z-axis direction) according to the interaction of the electromagnetic force (e.g., Fleming's left hand rule).

In addition, in the embodiment, when a magnetic force is applied from the S pole of the first magnet 1252a in the second direction (Y-axis direction) and the current DE1 flows in the first coil 1251a corresponding to the S pole in the first direction (X-axis direction), the electromagnetic force DEM1 may act in the Z-axis direction according to the interaction of the electromagnetic force.

At this time, since the first coil 1251a is in a state of being fixed to the second housing side portion, the first lens assembly 1222a on which the first magnet 1252a is disposed may move in the direction opposite to the Z-axis direction by the electromagnetic force DEM1 according to the current direction. That is, the second driving magnet may move in an opposite direction of the electromagnetic force applied to the second driving coil. In addition, the direction of the electromagnetic force may be changed depending on the current of the coil and the magnetic force of the magnet.

Therefore, the first lens assembly 1222a may move along the rail positioned on the inner surface of the housing through the first ball B1 and the second ball B2 in the third direction or the direction (both directions) parallel to the optical axis direction. At this time, the electromagnetic force DEM1 may be controlled in proportion to the current DE1 applied to the first coil 1251a.

The first lens assembly 1222a or the second lens assembly 1222b may include a first recess RS1 in which the first ball B1 is seated. In addition, the first lens assembly 1222a or the second lens assembly 1222b may include a second recess RS2 in which the second ball B2 is seated. A length of the first recess RS1 may be preset in the optical axis direction (Z-axis direction). In addition, a length of the second recess RS2 may be preset in the optical axis direction (Z-axis direction). Therefore, moving distances of the first ball B1 and the second ball B2 in the optical axis direction in each recess may be adjusted. That is, the first recess RS1 or the second recess RS2 may be a stopper for the first and second balls B1 and B2.

In addition, in the camera module according to the embodiment, the second magnet 1252b may be provided on the second lens assembly 1222b by, for example, the vertical magnetization method. For example, in the embodiment, both of the N pole and the S pole of the second magnet 1252b may be positioned to face the second coil 1251b. Therefore, each of the N pole and the S pole of the second magnet 1252b may be disposed to correspond to a region in which a current flows from the second coil 1251b in the X-axis direction or the direction opposite to the X-axis direction.

In an embodiment, when a magnetic force DM2 is applied from the N pole of the second magnet 1252b in the second direction (Y-axis direction) and the current DE2 flows in the second coil 1251b corresponding to the N pole in the first direction (X-axis direction), an electromagnetic force DEM2 may act in the third direction (Z-axis direction) according to the interaction of the electromagnetic force (e.g., Fleming's left hand rule).

In addition, in the embodiment, when a magnetic force is applied from the S pole of the second magnet 1252b in a direction opposite to the second direction (Y-axis direction) and the current DE2 flows in the second coil 1251b corresponding to the S pole in a direction opposite to the first direction (X-axis direction), the electromagnetic force DEM2 may act in the Z-axis direction according to the interaction of the electromagnetic force.

At this time, since the second coil 1251b is in a state of being fixed to the second housing side portion, the second lens assembly 1222b on which the second magnet 1252b is disposed may move in a direction opposite to the Z-axis direction by the electromagnetic force DEM2 according to the current direction. For example, as described above, the direction of the electromagnetic force may be changed depending on the current of the coil and the magnetic force of the magnet. Therefore, the second lens assembly 1222b may move along the rail located on the inner surface of the second housing through the second ball B2 in a direction parallel to the third direction (Z-axis direction). At this time, the electromagnetic force DEM2 may be controlled in proportion to the current DE2 applied to the second coil 1251b.

Referring to FIG. 20, in the camera module according to the embodiment, the second driving unit may provide driving forces F3A, F3B, F4A, and F4B that move the first lens assembly 1222a and the second lens assembly 1222b of the lens unit 1220 in the third direction (Z-axis direction). As described above, the second driving unit may include the second driving coil 1251 and the second driving magnet 1252. In addition, the lens unit 1220 may move in the third direction (Z-axis direction) by the electromagnetic force generated between the second driving coil 1251 and the second driving magnet 1252.

At this time, the first coil 1251a and the second coil 1251b may be disposed in the holes formed in the side portions (e.g., the first side portion and the second side portion) of the second housing 1230. In addition, the second coil 1251b may be electrically connected to the first board 1271. The first coil 1251a may be electrically connected to the second board 1272. Therefore, the first coil 1251a and the second coil 1251b may receive a driving signal (e.g., a current) from a driving driver on the circuit board 1300 through the second board unit 1270.

At this time, the first lens assembly 1222a on which the first magnet 1252a is seated may move in the third direction (Z-axis direction) by the electromagnetic forces F3A and F3B between the first coil 1251a and the first magnet 1252a. In addition, the second lens group 1221b seated on the first lens assembly 1222a may also move in the third direction.

In addition, the second lens assembly 1222b on which the second magnet 1252b is seated may move in the third direction (Z-axis direction) by the electromagnetic forces F4A and F4B between the second coil 1251b and the second magnet 1252b. In addition, the third lens group 1221c seated on the second lens assembly 1222b may also move in the third direction.

Therefore, as described above, a focal length or magnification of the optical system may be changed by moving the second lens group 1221b and the third lens group 1221c. In an embodiment, the magnification may be changed by moving the second lens group 1221b. That is, zooming may be performed. In addition, a focus may be adjusted by moving the third lens group 1221c. That is, auto focusing may be performed. With this configuration, the second camera actuator may be a fixed zoom or a continuous zoom.

FIG. 21 is a schematic diagram illustrating a circuit board according to an embodiment.

Referring to FIG. 21, as described above, the circuit board 1300 according to the embodiment may include a first circuit board unit 1310 and a second circuit board unit 1320. The first circuit board unit 1310 may be positioned under the base and coupled to the base. In addition, the image sensor IS may be disposed on the first circuit board unit 1310. In addition, the first circuit board unit 1310 and the image sensor IS may be electrically connected. That is, the base may be positioned at the rear end of the second camera actuator, and the image sensor and the circuit board (first circuit board unit) may be positioned at the rear end of the base. The base may include a filter (e.g., infrared rays). In addition, the second circuit board unit 1320 may be positioned on a side portion of the base. In particular, the second circuit board unit 1320 may be positioned on the first side portion of the base. Therefore, the second circuit board unit 1320 may be positioned adjacent to the first coil positioned adjacent to the first side portion for easy electrical connection. In addition, the second circuit board unit 1320 may be positioned on the second side portion of the base. As described above, a plurality of second circuit board units 1320 may be formed. However, the present disclosure is not limited thereto, and the second circuit board unit 1320 may be disposed on only any one of the first side portion and the second side portion.

Furthermore, the circuit board 1300 may further include a fixed board (not illustrated) positioned on a side surface thereof. Therefore, even when the circuit board 1300 is made of a flexible material, the circuit board 1300 may be coupled to the base while maintaining stiffness by the fixed board.

The second circuit board unit 1320 of the circuit board 1300 may be positioned on the side portion of the second driving unit 1250. The circuit board 1300 may be electrically connected to the first driving unit and the second driving unit. For example, the electrical connection may be made by a surface mounting technology (SMT). However, the present disclosure is not limited to this method.

The circuit board 1300 may include a circuit board having wiring patterns that may be electrically connected, such as a rigid printed circuit board (rigid PCB), a flexible PCB, and a rigid flexible PCB. However, the present disclosure is not limited to these types.

In addition, the circuit board 1300 may be electrically connected to another camera module in the terminal or a processor of the terminal. Therefore, the camera actuator and the camera module including the same described above may transmit and receive various signals within the terminal.

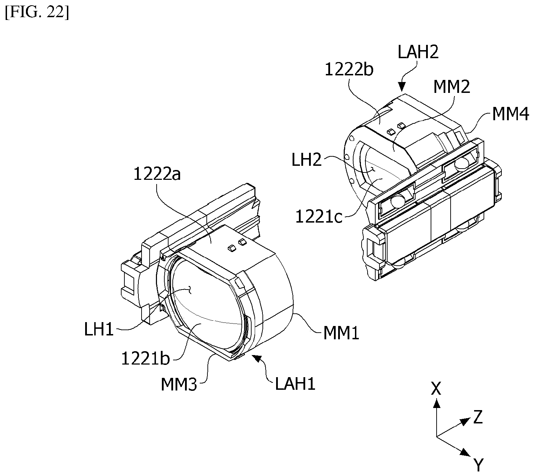

FIG. 22 is a perspective view of a first lens assembly, a first bonding member, a second bonding member, and a second lens assembly according to an embodiment.

Referring to FIG. 22, the first lens assembly 1222a and the second lens assembly 1222b may be disposed to be spaced apart from each other in the optical axis direction (Z-axis direction). In addition, the first lens assembly 1222a and the second lens assembly 1222b may move in the optical axis direction (Z-axis direction) by the second driving unit. For example, an auto focus or zoom function may be performed by moving the first lens assembly 1222a and the second lens assembly 1222b.

In addition, the first lens assembly 1222a may include a first lens holder LAH1 for holding and coupling the second lens group 1221b. The first lens holder LAH1 may be coupled to the second lens group 1221b. In addition, the first lens holder LAH1 may include a first lens hole LH1 for accommodating the second lens group 1221b. That is, the second lens group 1221b including at least one lens may be disposed in the first lens hole LH1. The first lens holder LAH1 may be used interchangeably with an accommodating unit (e.g., a first accommodating unit or a second accommodating unit).

In addition, the second lens assembly 1222b may include a second lens holder LAH2 for holding and coupling the third lens group 1221c. In addition, the second lens holder LAH2 may include a second lens hole LH2 for accommodating the third lens group 1221c. That is, at least one lens may be disposed in the second lens hole LH2.

In an embodiment, each of the first lens assembly 1222a and the second lens assembly 1222b may include outer surfaces adjacent to each other. The first lens assembly 1222a may include a first outer surface MM1, and the second lens assembly 1222b may include a second outer surface MM2. The first outer surface MM1 may be a lower surface of the first lens holder LAH1 with respect to the optical axis direction (Z-axis direction). In addition, a third outer surface MM3 to be described below may be an upper surface of the first lens holder LAH1. In addition, the second outer surface MM2 may be an upper surface of the second lens holder LAH2, and the fourth outer surface MM4 may be the lower surface of the second lens holder LAH2.

In addition, the first outer surface MM1 and the second outer surface MM2 may at least partially overlap in the optical axis direction (Z-axis direction). In an embodiment, the first outer surface MM1 to the fourth outer surface MM4 may at least partially overlap in the optical axis direction (Z-axis direction).

For example, a bonding member (not illustrated) may be in contact with at least one of the first outer surface MM1 and the second outer surface MM2.

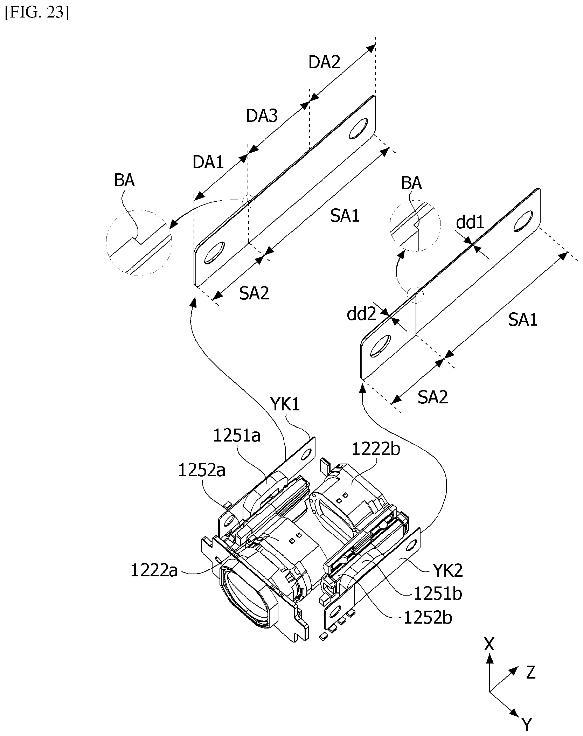

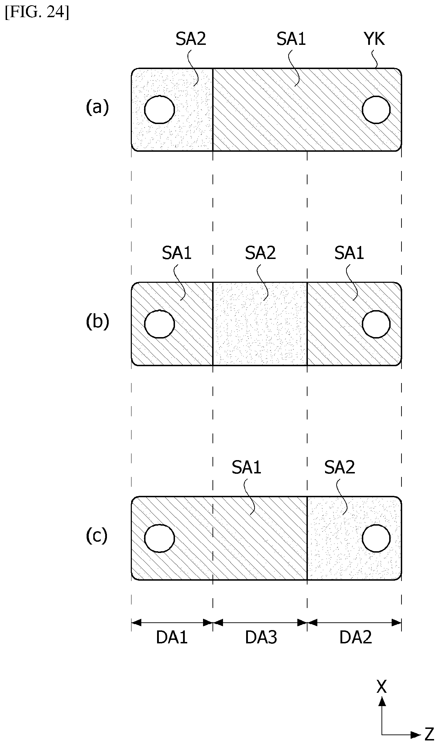

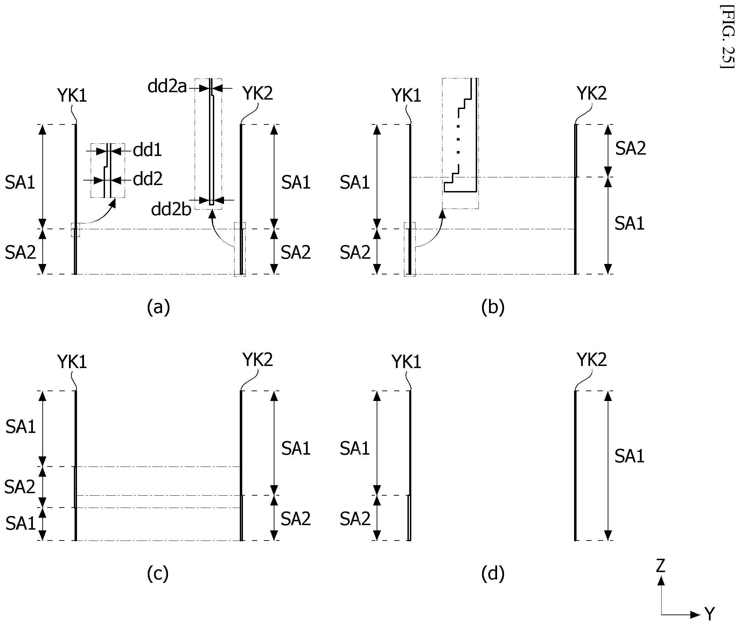

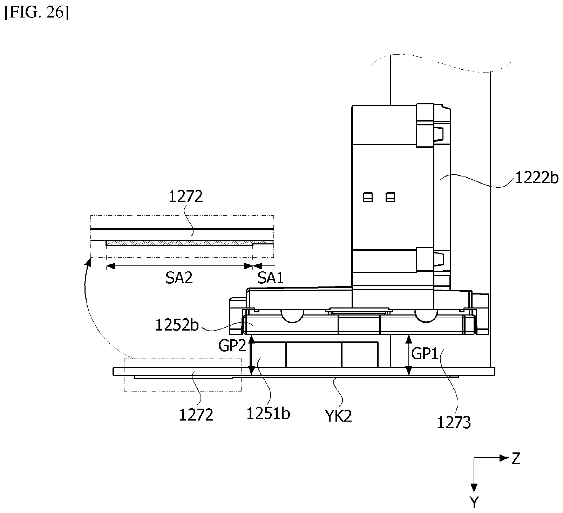

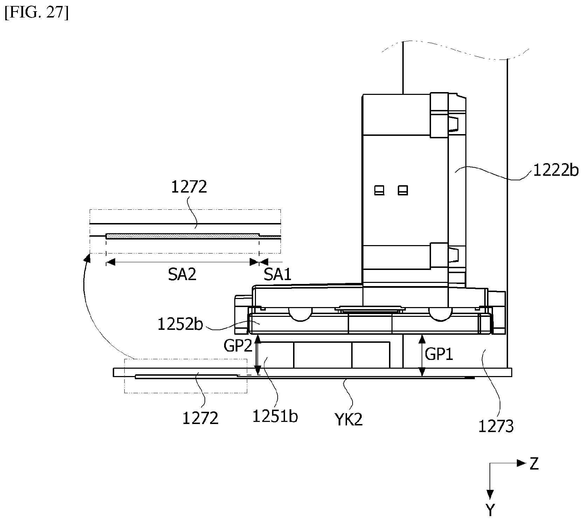

FIG. 23 is a view in which a second housing is removed from the second camera actuator according to the embodiment, FIG. 24 is a side view of various examples of a second yoke unit in the second camera actuator according to the embodiment, FIG. 25 is a top view of various examples of the second yoke unit in the second camera actuator according to the embodiment, FIG. 26 is a view illustrating one example of the second yoke unit in the second camera actuator according to the embodiment, and FIG. 27 is a view illustrating another example of the second yoke unit in the second camera actuator according to the embodiment.

Referring to FIG. 23, in the second camera actuator according to the embodiment, the yoke unit may be disposed adjacent to each of the first lens assembly and the second lens assembly that are sequentially arranged and moved in the optical axis direction (Z-axis direction).

In an embodiment, the yoke unit YK may be disposed at the outer side of the second driving unit, and for example, the yoke unit YK may be disposed at the outer sides of the first and second coils. The yoke unit YK may include the first yoke YK1 and the second yoke YK2.

The first yoke YK1 and the second yoke YK2 may be disposed opposite to each other. For example, the first yoke YK1 and the second yoke YK2 may be positioned to correspond to each other with respect to the optical axis.

The first yoke YK1 may be positioned adjacent to the first coil 1251a. The second yoke YK2 may be positioned adjacent to the second coil 1251b. The first coil 1251a and the second coil 1251b may be positioned at the inner sides of the first yoke YK1 and the second yoke YK2. In addition, the first yoke YK1, the first coil 1251a, the second coil 1251b, and the second yoke YK2 may be sequentially arranged in one direction (e.g., the second direction).

The yoke unit YK may generate a coupling strength with the first magnet 1252a and the second magnet 1252b. Therefore, the second housing may be easily coupled to the first lens assembly 1222a and the second lens assembly 1222b. Furthermore, while the first lens assembly 1222a and the second lens assembly 1222b move along the optical axis, attitudes of the first lens assembly 1222a and the second lens assembly 1222b in the first direction or the like may be maintained.

In an embodiment, the yoke unit YK may have a plurality of regions having different thicknesses. The yoke unit YK may include a first region SA1 and a second region SA2. The second region SA2 may have a greater thickness than the first region SA1. That is, a thickness dd2 of the second region SA2 may be greater than a thickness dd1 of the first region SA1. A thickness of the yoke unit YK may be a length in a direction perpendicular to the optical axis. For example, the thickness may be a length in the second direction. Therefore, the attractive force between the magnets in the second region SA2 may increase. For example, the second region SA2 of the second yoke YK2 can prevent magnetism generated from the second magnet from being provided to the other side thereof. Furthermore, the second region SA2 of the second yoke YK2 can also increase the attractive force with the second magnet to cancel the influence (e.g., malfunction (moving to a rear end)) of the second assembly by the first magnet.

Alternatively, the yoke unit YK may include the first region SA1 and the second region SA2 having a different magnetic strength from that of the first region SA1. In particular, the first yoke YK1 may include the first region SA1 and the second region SA2 having different magnetic intensities.

In addition, the first yoke YK1 may include the first region SA1 and the second region SA2. Likewise, the second yoke YK2 may include the first region SA1 and the second region SA2.

The yoke unit YK may include a first partition region DA1, a third partition region DA3, and a second partition region DA2 sequentially arranged in the optical axis direction.

The first partition region DA1 may be positioned at one end or front end of the yoke unit YK. Here, the one end or the front end refers to a portion of the yoke unit YK, which is adjacent to the first camera actuator. In addition, the one end or the front end may refer to an end in a direction opposite to the optical axis direction.

In addition, the second partition region DA2 may be positioned at the other end or rear end of the yoke unit YK. Here, the other end or the rear end may refer to an end in the optical axis direction. In addition, the other end or the rear end may refer to a portion of the yoke unit YK, which is adjacent to the image sensor.

The third partition region DA3 may be positioned between the first partition region DA1 and the second partition region DA2.

The second region SA2 may be disposed in any one of the first partition region DA1 to the third partition region DA3 of the yoke unit YK. In addition, these contents may be applied to the second region SA2 of each of the first yoke YK1 and the second yoke YK2 in the same manner.

In an embodiment, the second region SA2 of the yoke unit YK may be positioned in the first partition region DA1. Therefore, the second region SA2 having a large thickness may be disposed closer to the first camera actuator than the first region SA1 is. Therefore, the yoke unit YK can more easily block the magnetic force generated from the first camera actuator through the second region SA2. Therefore, the first and second lens assemblies may be moved or driven more accurately in the second camera actuator.

In addition, the second regions SA2 of the first yoke YK1 and the second yoke YK2 opposite to each other may be positioned to overlap or be misaligned in the second direction. A description thereof will be given below.

In addition, as described above, the yoke unit YK may be disposed on the second board disposed at the outer side of the second housing. For example, the yoke unit YK may be disposed at the outer side of the second board. In addition, the yoke unit YK may have a structure to be coupled to the second board and the second housing. For example, the yoke unit YK may be coupled to the second board and the second housing with a hole. That is, the above-described coupling may be made by coupling the hole and the protrusion or applying the bonding member to the hole.

In addition, the yoke unit may be partitioned into two regions in the optical axis direction. In this case, the second region SA2 may be disposed in any one of the two regions. In addition, the first region SA1 may be disposed in the other one of the two regions. Furthermore, a part of the first region SA1 may also be disposed on a part of any one of the two regions.

Furthermore, the yoke unit may include a boundary region BA between the first region SA1 and the second region SA2. Furthermore, each of the first yoke YK1 and the second yoke YK2 may include the boundary region BA.

Referring to FIG. 24, in the second camera actuator, the second region SA2 of the yoke unit YK may be positioned in any one of the first partition region DA1, the second partition region DA2, and the third partition region DA3. In addition, the second region SA2 may be disposed on a part of any one of the first partition region DA1, the second partition region DA2, and the third partition region DA3 and a part of another one of the first partition region DA1, the second partition region DA2, and the third partition region DA3. A position of the second region SA2 may also be changed depending on the positions of the tele, the wide, and the mid of the second camera actuator.

In the embodiment, the second region SA2 may be positioned in the first partition region DA1 in the second camera actuator (see FIG. 24A). That is, the second region SA2 may be positioned at one end of the yoke unit YK. In addition, the second region SA2 and the first region SA1 may be sequentially arranged in the optical axis direction in the yoke unit YK. In this case, as described above, it is possible to block a phenomenon in which the magnetic force generated from the first camera actuator or the like is applied to the second camera actuator.

In addition, as illustrated in FIG. 24B, the second region SA2 may be positioned between the separated first regions SA1. In addition, as illustrated in FIG. 24C, the second region SA2 may be positioned at the other end of the yoke unit YK. That is, the second region SA2 may be positioned adjacent to the image sensor. In addition, the first region SA1 and the second region SA2 may be sequentially arranged in the optical axis direction in the yoke unit YK.

Referring to FIG. 25, as described above, in the second camera actuator, the yoke unit YK may include the first yoke YK1 and the second yoke YK2 opposite to each other.

In addition, the second region SA2 of the first yoke YK1 may overlap or may be at least partially misaligned with the second region SA2 of the second yoke YK2. In this case, an overlapping direction may be the second direction (Y-axis direction) perpendicular to the optical axis.

As illustrated in FIG. 25A, the second region SA2 of the first yoke YK1 may be disposed at the same position as the second region SA2 of the second yoke YK2 in the optical axis direction. Therefore, the second region SA2 of the first yoke YK1 may overlap the second region SA2 of the second yoke YK2 (in the second direction).

Likewise, the first region SA1 of the first yoke YK1 may be positioned at the same position as the first region SA1 of the second yoke YK2 in the optical axis direction. Therefore, the first region SA1 of the first yoke YK1 may overlap the first region SA1 of the second yoke YK2.

Furthermore, in the yoke units YK1 and YK2, the thickness dd2 (hereinafter referred to as "second thickness") of the second region SA2 may be greater than the thickness dd1 (hereinafter referred to as "first thickness") of the first region SA1. For example, the thickness dd2 of the second region SA2 may be in the range of 0.07 mm to 0.13 mm. In addition, the first thickness dd1 and the second thickness dd2 may have a thickness ratio of 1:1.2 to 1:2.6. Preferably, the thickness ratio may be in the range of 1:1.4 to 1:2.4. More preferably, the thickness ratio may be in the range of 1:1.5 to 1:2.2. When the thickness ratio is greater than 1:2.6, there is a problem in that a weight increases and a friction force against driving the lens assembly greatly increases. In addition, when the thickness ratio is smaller than 1:1.2, the blocking effect of magnetic field interference generated from the first and second magnets or the like may not be large.

In addition, the length of the second region SA2 may be different from the length of the first region SA1. For example, the length of the second region SA2 may be smaller than the length of the first region SA1. With this configuration, it is possible to block the magnetic field interference by the first and second magnets and easily block the magnetic force from the first camera actuator. In addition, it is possible to minimize an increase in the frictional force of the ball against the first lens assembly and the second lens assembly in the second camera actuator. Here, the length refers to a length in the second direction. A length ratio of the second region SA2 and the first region SA1 may be in the range of 1:1 to 1:3. Furthermore, the length of the second region SA2 may be 20% to 50% of the length of the first yoke YK1.

Furthermore, a thickness dd2b at one end and a thickness dd2a at the other end of the second region SA2 may be the same as or different from each other. That is, the thickness dd2b at the one end of the second region SA2 may be the same as the second thickness dd2a at the other end of the second region SA2. In addition, the thickness dd2b at the one end of the second region SA2 may be different from the second thickness dd2a at the other end of the second region SA2. In an embodiment, in the first yoke YK1, the thickness of the second region SA2 may be in the range of 1.2 to 2.5 times the thickness of the first region SA1. Preferably, in the first yoke YK1, the thickness of the second region SA2 may be in the range of 1.3 to 2.0 times the thickness of the first region SA1. More preferably, in the first yoke YK1, the thickness of the second region SA2 may be in the range of 1.4 to 1.7 times the thickness of the first region SA1. Descriptions of both the thickness and the length may be applied to yoke units in various examples.

Referring to FIG. 25B, in the second camera actuator according to the embodiment, the second region SA2 of the second yoke YK2 may be partially misaligned with the second region SA2 of the first yoke YK1. Therefore, the second region SA2 of the first yoke YK1 may overlap the first region SA1 of the second yoke YK2. In addition, the second region SA2 of the second yoke YK2 may overlap the first region SA1 of the first yoke YK1.

In addition, the first region SA1 of the first yoke YK1 and the first region SA1 of the second yoke YK2 may at least partially overlap each other.

Furthermore, the thickness dd2b at the one end of the second region SA2 may be different from the second thickness dd2a at the other end of the second region SA2. Likewise, descriptions of both the thickness and length may be applied to the yoke units in various examples.

For example, the second region SA2 of the first yoke or the second yoke may have one end and the other end having different thicknesses, and the thickness from the one end to the other end may be deformed linearly or stepwise. Furthermore, the deformation of the thickness in the second region SA2 may be applied by various methods.

Furthermore, the first region SA1 of the first yoke YK1 and the first region SA1 of the second yoke YK2 may be disposed diagonally or alternately with respect to the optical axis.

In addition, referring to FIG. 25C, in the second camera actuator according to the embodiment, a part of the second region SA2 of the second yoke YK2 may overlap the second region SA2 of the first yoke YK1, and the remaining portion thereof may be misaligned with the second region SA2 of the first yoke YK1. That is, in the second camera actuator according to the embodiment, at least a part of the second region SA2 of the second yoke YK2 may be misaligned with the second region SA2 of the first yoke YK1. Therefore, the second region SA2 of the first yoke YK1 may overlap the first region SA1 of the second yoke YK2. In addition, a part of the second region SA2 of the second yoke YK2 may overlap the first region SA1 of the first yoke YK1.

Referring to FIG. 25D, in the second camera actuator according to the embodiment, the second region SA2 of the second yoke YK may be formed on any one of the first yoke YK1 and the second yoke YK2. For example, the first yoke YK1 may include the first region SA1 and the second region SA2. Unlike this, the thickness of the second yoke YK2 may be inevitably changed. In this case, when there is no change in thickness, it means that the thickness is in a range including a change rate of 10% based on an average thickness. In addition, the first yoke YK1 may have no change in thickness, and the second yoke YK2 may also have the first region SA1 and the second region SA2.

Referring to FIG. 26, in the second camera actuator according to the embodiment, the second region SA2 of the yoke unit may be positioned on the side surface of the second board unit 1270. The second region SA2 of the yoke unit may face the second board unit 1270. In addition, the second region SA2 of the yoke unit may be in contact with the second board unit 1270.

The yoke unit may protrude outward or inward from the second region SA2. In FIG. 26, the second region SA2 of the yoke unit may have a structure that protrudes outward from the second board unit 1270. That is, the second region SA2 may have a structure that protrudes outward from the first region SA1. With this structure, a separation distance between the yoke unit and the first magnet (or the second magnet) in the second direction may be equally maintained.

For example, a separation distance GP2 between the second region SA2 and the first magnet (or the second magnet) in the second direction may be equal to a separation distance GP1 between the first region SA1 and the first magnet (or the second magnet) in the second direction.

Therefore, even when the attractive forces between the first and second magnets and the yoke unit increase in a region adjacent to the second region SA2, it is possible to suppress the generation of a very large friction force in a specific region against the first and second lens assemblies.

Referring to FIG. 27, as described above, in the second camera actuator according to the embodiment, the second region SA2 of the yoke unit may be positioned on the side surface of the second board unit 1270. The second region SA2 of the yoke unit may face the second board unit 1270. In addition, the second region SA2 of the yoke unit may be in contact with the second board unit 1270.

The yoke unit may protrude outward or inward from the second region SA2. In FIG. 27, the second region SA2 of the yoke unit may have a structure that protrudes inward from the second board unit 1270. That is, the second region SA2 may have a structure that protrudes inward from the first region SA1. With this structure, the separation distance between the yoke unit and the first magnet (or the second magnet) in the second direction may be different. For example, the separation distance GP2 between the second region SA2 and the first magnet (or the second magnet) in the second direction may be greater than the separation distance GP1 between the first region SA1 and the first magnet (or the second magnet) in the second direction. Therefore, the length of the second camera actuator in the second direction can be reduced.

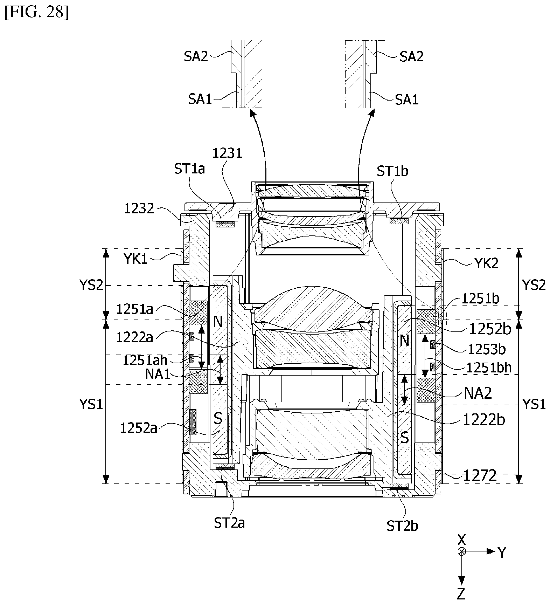

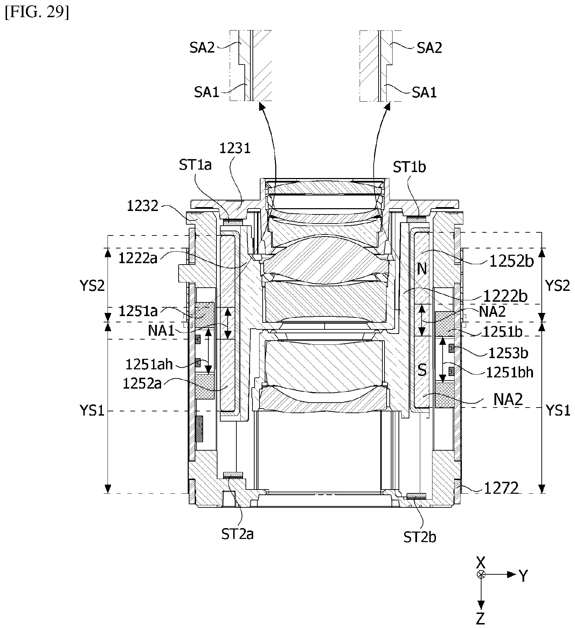

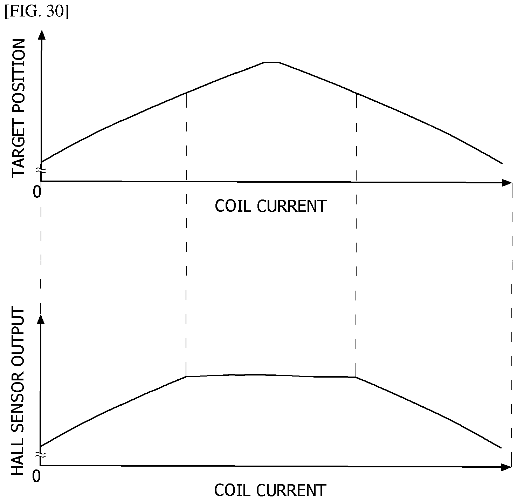

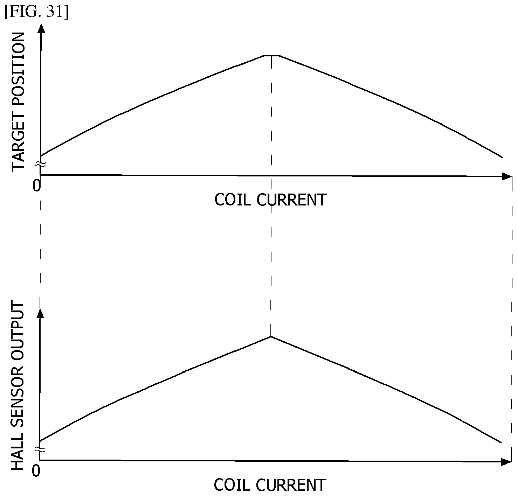

FIG. 28 is a cross-sectional view of the second camera actuator in a wide state according to the embodiment, FIG. 29 is a cross-sectional view of the second camera actuator in a tele state according to the embodiment, FIG. 30 is a graph for describing driving of a third group when a structure of the second yoke unit is not applied to the second camera actuator according to the embodiment, and FIG. 31 is a graph for describing the driving of the third group when the structure of the second yoke unit is applied to the second camera actuator according to the embodiment.

Referring to FIG. 28, in the second camera actuator, the first yoke YK1 may be disposed adjacent to the first coil 1251a. In addition, the second yoke YK2 may be positioned adjacent to the second coil 1251b. In addition, the first yoke YK1 may be positioned adjacent to the first magnet 1252a. In addition, the second yoke YK2 may be positioned adjacent to the second magnet 1252b.

In addition, the driving coil according to the embodiment may include a hollow. In an embodiment, the first coil 1251a may include a first coil hollow 1251ah. In addition, the second coil 1251b may include a second coil hollow 1251bh.

In this case, the second region SA2 of the yoke unit may not overlap the hollows (first and second coil hollows). That is, the second region SA2 of the yoke unit may be positioned to be misaligned with the hollows (first and second coil hollows) in the second direction. Furthermore, the second region SA2 of the yoke unit may be positioned closer to the first camera actuator than the hollows (first and second coil hollows). That is, the second region SA2 of the yoke unit may be disposed farther from the image sensor than the hollows (first and second coil hollows).

Furthermore, the first and second magnets 1252a may include a first pole region (N pole or S pole), a second pole region (S pole or N pole), and a neutral region NA1 or NA2. The neutral region NA1 or NA2 may be disposed between the first pole region and the second pole region. In addition, the first pole region, the neutral region, and the second pole region may be sequentially arranged in the optical axis direction in the first magnet 1252a. Likewise, the first pole region, the neutral region, and the second pole region may be sequentially arranged in the optical axis direction in the second magnet 1252b. In addition, in the first magnet 1252a and the second magnet 1252b, the first pole region may be the N pole. In addition, in the first magnet 1252a and the second magnet 1252b, the second pole region may be the S pole. The converse is also established.

In an embodiment, FIG. 28 illustrates the positions of the first lens assembly 1222a and the second lens assembly 1222b in the second camera actuator in a wide state. For example, the wide state refers to a state in which the second camera actuator provides a minimum magnification for an object. To this end, the first lens assembly 1222a may maximally move in the optical axis direction. Alternatively, the first magnet 1252a may maximally move in the optical axis direction (Z-axis direction). Alternatively, the first magnet 1252a may have a maximum moving distance in the optical axis direction (Z-axis direction). The second lens assembly 1222b may be disposed at various positions for auto focusing, unlike the illustrated positions.

In the wide or wide state, the first lens assembly 1222a may be adjacent to the second stopper ST2a, and the second lens assembly 1222b may be adjacent to the second stopper ST2b. That is, a separation distance between the first lens assembly 1222a and the first stopper ST1a may be greater than a separation distance between the first lens assembly 1222a and the second stopper ST2a. In addition, the separation distance between the second lens assembly 1222b and the first stopper ST1b may be greater than the separation distance between the second lens assembly 1222b and the second stopper ST2b.

In the wide state, that is, when the first magnet 1252a maximally moves in the optical axis direction, the first pole region of the first magnet 1252a may be disposed to overlap the first region SA1 in the second direction or in a direction perpendicular to the optical axis direction.

In addition, in the wide, the second region SA2 of the first yoke YK1 may overlap the first pole region of the first magnet 1252a in the second direction. In addition, the second region SA2 of the second yoke YK2 may overlap the first pole region of the second magnet 1252b in the second direction.

As a modified example, the second region SA2 of the first yoke YK1 may overlap the first pole region and the neutral region NA1 of the first magnet 1252a in the second direction. In addition, the second region SA2 of the second yoke YK2 may overlap the first pole region of the second magnet 1252b in the second direction.

Referring to FIG. 29, as described above, in the second camera actuator, the first yoke YK1 may be disposed adjacent to the first coil 1251a. In addition, the second yoke YK2 may be positioned adjacent to the second coil 1251b. In addition, the first yoke YK1 may be positioned adjacent to the first magnet 1252a. In addition, the second yoke YK2 may be positioned adjacent to the second magnet 1252b.

In addition, the driving coil according to the embodiment may include the hollow. In an embodiment, the first coil 1251a may include the first coil hollow 1251ah. In addition, the second coil 1251b may include the second coil hollow 1251bh.

In this case, the second region SA2 of the yoke unit may not overlap the hollows (first and second coil hollows). That is, the second region SA2 of the yoke unit may be positioned to be misaligned with the hollows (first and second coil hollows) in the second direction. Furthermore, the second region SA2 of the yoke unit may be positioned closer to the first camera actuator than the hollows (first and second coil hollows). That is, the second region SA2 of the yoke unit may be disposed farther from the image sensor than the hollows (first and second coil hollows).

In an embodiment, FIG. 29 illustrates the positions of the first lens assembly 1222a and the second lens assembly 1222b in the second camera actuator in a tele state. For example, the tele state refers to a state in which the second camera actuator provides a maximum magnification for an object. To this end, the first lens assembly 1222a may maximally move in a direction opposite to the optical axis direction. Alternatively, the first magnet 1252a may maximally move in the direction opposite to the optical axis direction (Z-axis direction). Alternatively, the first magnet 1252a may have a maximum moving distance in the direction opposite to the optical axis direction (Z-axis direction). However, the second lens assembly 1222b may be disposed at various positions for auto focusing, unlike the illustrated positions.

In the tele or tele state, the first lens assembly 1222a may be adjacent to the first stopper ST1a, and the second lens assembly 1222b may be adjacent to the first stopper ST1b. That is, the separation distance between the first lens assembly 1222a and the first stopper STla may be smaller than the separation distance between the first lens assembly 1222a and the second stopper ST2a. In addition, the separation distance between the second lens assembly 1222b and the first stopper ST1b may be smaller than the separation distance between the second lens assembly 1222b and the second stopper ST2b.

In addition, in the tele, the second region SA2 of the first yoke YK1 may overlap the first pole region and the neutral region NA1 of the first magnet 1252a in the second direction. In addition, the second region SA2 of the second yoke YK2 may overlap the first pole region and the neutral region NA2 of the second magnet 1252b in the second direction.

In addition, in the tele, the second region SA2 of the first yoke YK1 may not overlap the second pole region of the first magnet 1252a in the direction perpendicular to the optical axis direction or in the second direction (Y-axis direction).

In addition, a length YS2 of the second region SA2 of the first yoke YK1 is equal to a length YS2 of the second region SA2 of the second yoke YK2. In addition, a length YS1 of the first region SA1 of the first yoke YK1 is equal to a length YS1 of the first region SA1 of the second yoke YK2.

Furthermore, based on the tele, the length YS2 of the second region SA2 of the first yoke YK1 may be greater than a length of the overlapping region between the second region SA2 and the first pole region in the optical axis direction.

In addition, the length YS2 of the second region SA2 of the first yoke YK1 may be smaller than the sum of the length of the overlapping region between the second region SA2 and the first pole region in the optical axis direction and a length of the neutral region in the optical axis direction.

Furthermore, the length of the first pole region may be the same as or different from the length of the second region SA2. For example, the length of the first pole region in the optical axis direction may be smaller than the length of the second region SA2. Therefore, it is possible to easily block the magnetism generated from the first pole region by the second region SA2. Alternatively, the length of the first pole region in the optical axis direction may be greater than the length of the second region SA2. Therefore, the actuator can provide an improved driving force. In addition, the length YS2 of the second region SA2 may be smaller than the length of the first magnet 1252a in the optical axis direction.

In addition, based on the tele, the boundary region between the first region SA1 and the second region SA2 may overlap the neutral region NA in the second direction.

As a modified example, the second region SA2 of the second yoke YK2 may overlap the first pole region of the second magnet 1252b in the second direction.

Referring to FIG. 30, the second lens assembly may be moved by increasing the current to the second coil. In FIGS. 30 and 31, a target position refers to a position or set position (or a required position) of the second lens assembly with respect to a coil current. In addition, a Hall sensor output is an output value of the Hall sensor of the second lens assembly and refers to an actual position of the second lens assembly. Furthermore, FIGS. 30 and 31 illustrate a state in which the position of the first lens assembly is fixed or hardly moved.

As described above, when a structure having different thicknesses is not applied to the yoke unit, it can be seen that the target position or the set position increases in response to the coil current (excluding the stopper region). However, there is a section in which the actual position of the second lens assembly is not changed in response to the coil current. That is, when the second lens assembly is adjacent to the first lens assembly, a size difference between the actual position and the target position or the set position may increase or may be greater than a predetermined difference value. That is, when the yoke unit does not have the second region as in the embodiment, the second lens assembly or the first lens assembly may be driven differently from the applied coil current due to magnetic field interference between the first magnet and the second magnet. That is, there is a problem that a gap between the target position and the actual position increases. Alternatively, there is a section in which the actual position is not changed in correspondence to the target position.

Unlike this, referring to FIG. 31, when the yoke unit includes the second region and the first region (see FIGS. 28 and 29) as in the embodiment, it can be seen that the target position or the set position increases in response to the coil current. In addition, it can be seen that the actual position of the second lens assembly moves in response to the coil current. That is, when the second lens assembly is adjacent to the first lens assembly, a size difference between the actual position and the target position or the set position may be maintained or may be smaller than the predetermined difference value. That is, the yoke unit according to the embodiment can suppress the second lens assembly or the first lens assembly from being driven differently from the applied coil current due to the magnetic field interference between the first magnet and the second magnet. That is, the yoke unit can reduce the above-described magnetic field interference, thereby suppressing the gap between the target position and the actual position from increasing.

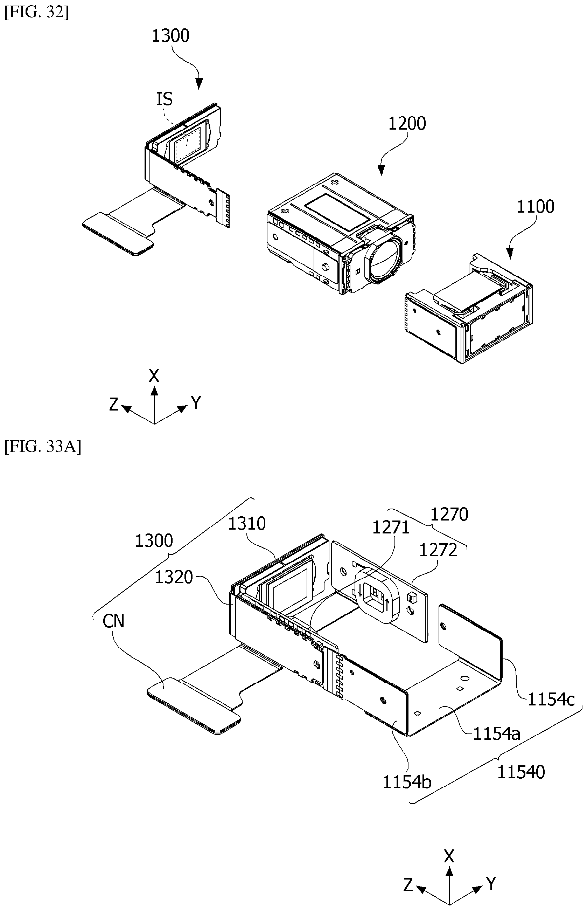

FIG. 32 is a perspective view in which a circuit board, a first camera actuator, and a second camera actuator are separated according to another embodiment.

In the camera module according to the embodiment, the first camera actuator 1100, the second camera actuator 1200, and the circuit board or a main board unit 1300 may be sequentially arranged in one direction or the optical axis direction (Z-axis direction). Therefore, the second camera actuator 1200 may be positioned at the rear end of the first camera actuator 1100.

In addition, the first camera actuator 1100 and the second camera actuator 1200 may have surfaces facing each other. For example, the first surface of the first camera actuator 1100 and the second surface of the second camera actuator 1200 will be described as facing each other. In addition, the first surface may correspond to the above-described outer surface of the housing side portion or correspond to a rear surface of the first camera actuator 1100. In addition, the second surface may be a front surface of the second camera actuator 1200 or a front surface of the third lens assembly. A bonding member or the like may be applied to the first surface and the second surface. In addition, the first surface and the second surface may be coupled through the protrusion and groove structures. Therefore, the first camera actuator 1100 and the second camera actuator 1200 may be coupled. That is, the first camera actuator 1100 and the second camera actuator 1200 may be directly or indirectly coupled by various methods.

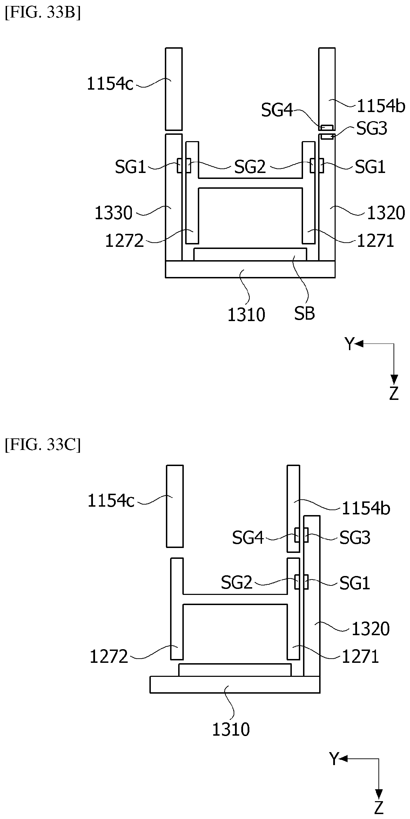

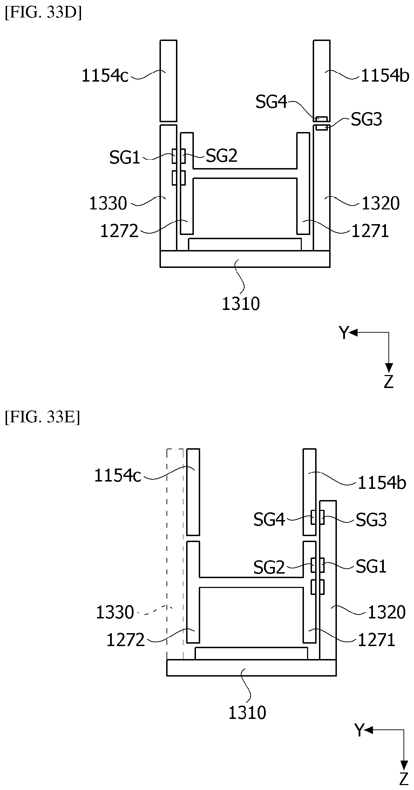

FIG. 33A is a perspective view of a circuit board, a first driving unit (excluding some parts), and a second driving unit (excluding some parts) according to an embodiment, FIG. 33B is a conceptual diagram for describing connections of the circuit board, the first driving unit (excluding some parts), and the second driving unit (excluding some parts) according to the embodiment, FIG. 33C is a conceptual diagram illustrating connections of a circuit board, a first driving unit (excluding some parts), and a second driving unit (excluding some parts) according to a modified example, FIG. 33D is a conceptual diagram illustrating connections between a circuit board, a first driving unit (excluding some parts), and a second driving unit (excluding some parts) according to another embodiment, and FIG. 33E is a conceptual diagram illustrating connections between a circuit board, a first driving unit (excluding some parts), and a second driving unit (excluding some parts) according to still another embodiment.

Referring to FIG. 33A, the main board unit (corresponding to "circuit board") 1300 according to the embodiment may surround at least a part of the side surface of the above-described second camera actuator. For example, at least a part of the main board unit 1300 may overlap the side surface of the second camera actuator or the side surface of the first camera actuator in the horizontal direction (the Y-axis direction or the second direction).

In addition, the second board unit 1270 according to the embodiment may be disposed on the side surface of the second camera actuator. For example, the second board unit 1270 may be in contact with the side surface of the second camera actuator (e.g., the second housing).

In addition, the first board part 1154 according to the embodiment may be disposed on the side surface of the first camera actuator. For example, the first board part 1154 may be in contact with the side surface of the first camera actuator (e.g., the first housing).

Specifically, the image sensor may be mounted on the main board unit 1300. The main board unit 1300 may include a first unit main board 1310 overlapping the second camera actuator (or the first camera actuator) in the optical axis direction (Z-axis direction) and a second unit main board 1320 extending to the side surface of the second camera actuator from the first unit main board 1310. Additionally, the main board unit 1300 may further include a third unit main board (not illustrated) extending to both side surfaces of the second camera actuator. The third unit main board (not illustrated) may be positioned to face the second unit main board 1320 with respect to the optical axis.

First, an image sensor and a sensor base may be disposed on the first unit main board 1310.

In addition, at least one of the second unit main board 1320 and the third unit main board (not illustrated) according to the embodiment may extend in the optical axis direction to surround the first camera actuator. For example, the second unit main board 1320 and the third unit main board (not illustrated) may at least partially overlap the first camera actuator in the horizontal direction or the second direction (Y-axis direction). Alternatively, the second unit main board 1320 and the third unit main board (not illustrated) may also overlap only the second camera actuator in the horizontal direction.

Hereinafter, the second unit main board 1320 may extend in the optical axis direction to partially surround the first camera actuator. Therefore, at least a part of the second unit main board 1320 may overlap the first camera actuator in the second direction (Y-axis direction).

Any one of the second unit main board 1320 and the third unit main board (not illustrated) may be connected to a connector unit CN. Except for FIGS. 33B to 33E, description will be made based on the main board unit 1300 including the first unit main board 1310 and the second unit main board 1320.

In addition, the second unit main board 1320 may be connected to an end of the first unit main board 1310 to extend in the optical axis direction or the third direction (Z-axis direction). That is, the second unit main board 1320 may be bent from the main board unit 1300 and may extend in the third direction. Therefore, as described above, the second unit main board 1320 may overlap the second camera actuator in the horizontal direction (Y-axis direction).

The first unit main board 1310 and the second unit main board 1320 may have an integral or separate structure. In an embodiment, the first unit main board 1310 and the second unit main board 1320 may include an integral common board (a common board FP to be described below). In addition, each of the first unit main board 1310 and the second unit main board 1320 may include individual boards RP1 to RP4.

In an embodiment, the first unit main board 1310 and the second unit main board 1320 may be formed of a plurality of layers. Furthermore, the first unit main board 1310 and the second unit main board 1320 may have holes for circuit patterns therein or may be formed of the plurality of layers. That is, the first unit main board 1310 may have a structure in which the individual board, the common board, and the individual board are stacked. That is, the second unit main board 1320 may also have a structure in which the individual board, the common board, and the individual board are stacked. In this case, the individual board and the common board may have circuit patterns therein and may be formed of a single layer or a plurality of layers.

For example, the first unit main board 1310 and the second unit main board 1320 may have the rigid PCB and the flexible PCB arranged in a plurality of layers.

As a modified example, the first unit main board 1310 may have a structure in which the flexible PCB, the rigid PCB, and the flexible PCB are sequentially stacked. In addition, in the first unit main board 1310 and the second unit main board 1320, a reinforcing material or a reinforcing plate may be additionally disposed in a region in which the flexible PCB is disposed. For example, the reinforcing plate may be additionally disposed on an upper portion or lower portion of the first unit main board 1310.

In addition, in the specification, the first unit main board and the second unit main board may include the common board that is the flexible PCB. In addition, in the first unit main board and the second unit main board, the rigid PCB may be disposed at an inner side and/or outer side of the flexible PCB.

In addition, the second board unit 1270 may include the first board 1271 and the second board 1272. The first board 1271 may face the second unit main board 1320 and overlap the second unit main board 1320 in the horizontal direction.

In addition, that is, the second camera actuator may include the first board and the second board. In this case, the first board of the second camera actuator may correspond to the main board unit 1300 to be described below. In addition, the second board of the second camera actuator may correspond to the second board unit 1270.

Therefore, in the second camera actuator, the first board may include a first unit board and a second unit board. Here, the first unit board of the first board (main board unit) may correspond to the first unit main board 1310 or the first circuit board unit. In addition, the second unit board of the first board (main board unit) may correspond to the second unit main board 1320 or the second circuit board unit.

In addition, in the second camera actuator, the second board may include the first unit board and the second unit board. Here, the first unit board of the second board (second board unit) may correspond to the "first board 1271." In addition, the second unit board of the second board (second board unit) may correspond to the "second board 1272."

Therefore, the second board may overlap in the direction perpendicular to the optical axis direction. That is, the second board may be formed of the first and second unit boards (first and second boards 1271 and 1272) overlapping each other in the direction (e.g., the second direction) perpendicular to the optical axis.

Therefore, in the second camera actuator, the first board (main board unit) may be positioned on a first side surface and a second side surface (and/or the second side surface). In addition, the second board (second board unit) may be positioned on the second side surface and a third side surface.

Furthermore, the first board 1271 and the second board 1272 may be spaced apart from the first unit main board 1310 in the optical axis direction. Therefore, it is possible to secure a size of the sensor base or the like disposed on the first unit main board 1310. Furthermore, since the sensor base becomes large, the elements mounted on the first unit main board 1310 may not be exposed to the outside. That is, it is possible to improve the reliability of the circuit elements. In addition, since the sizes of the first board 1271 and the second board 1272 can be reduced, the camera module can be reduced in size and weight.

The first board 1271 and the second board 1272 may be symmetrically disposed with respect to the optical axis or the optical axis direction. Furthermore, the first board 1271 and the second board 1272 may be electrically connected to the first coil and the second coil, respectively. In addition, the first board 1271 may be disposed on the side surface of the second camera actuator.

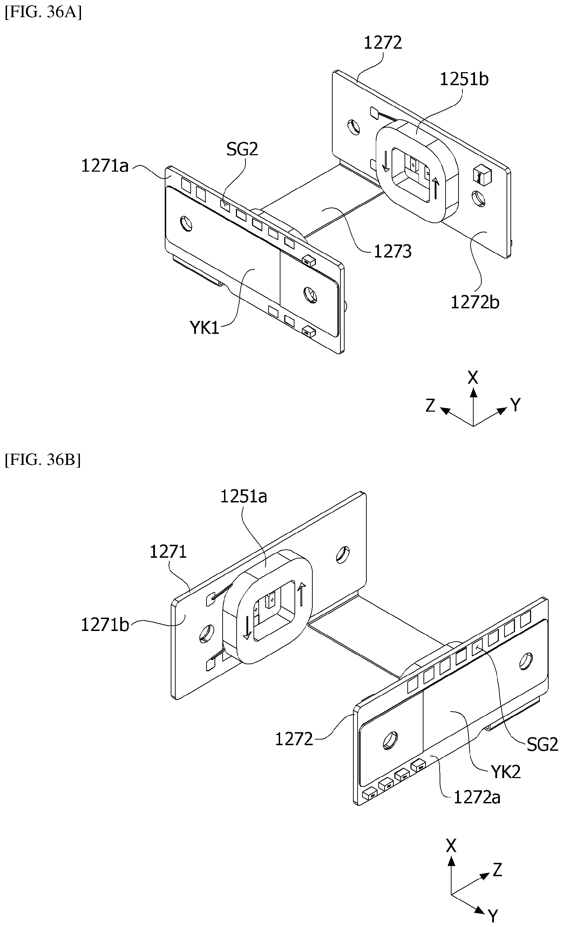

In addition, the second board unit 1270 may include a board connection member 1273 (see FIG. 36A) connecting the first board 1271 and the second board 1272. Therefore, it is possible to improve the reliability of the first board 1271 and the second board 1272.

The first board part 1154 may include a first sub-board 1154a disposed on the lower surface of the first camera actuator and a second sub-board 1154b and a third sub-board 1154c each disposed on one of the side surfaces of the first camera actuator.

As described above, the first sub-board 1154a may be disposed on the lower portion of the first camera actuator and may at least partially overlap the first camera actuator in the first direction (X-axis direction).

The second sub-board 1154b and the third sub-board 1154c may surround the side surfaces of the first camera actuator. In addition, the second sub-board 1154b and the third sub-board 1154c may be at least partially in contact with the side surface of the first camera actuator.

The second sub-board 1154b and the third sub-board 1154c may be symmetrically disposed with respect to the optical axis or the optical axis direction. The second sub-board 1154b may be disposed adjacent to the above-described first housing side portion. In addition, the third sub-board 1154c may be disposed adjacent to the above-described second housing side portion.

In addition, the second sub-board 1154b may be disposed adjacent to the first board 1271. For example, at least a part of the second sub-board 1154b may overlap the first board 1271 in the optical axis direction. Alternatively, the second sub-board 1154b may be positioned at the outer side of the first board 1271 with respect to the optical axis.

In addition, the third sub-board 1154c may be disposed adjacent to the second board 1272. For example, at least a part of the third sub-board 1154c may overlap the second board 1272 in the optical axis direction. Alternatively, the third sub-board 1154c may be positioned at the outer side of the second board 1272 with respect to the optical axis.

Furthermore, at least a part of the second sub-board 1154b may be in contact with the second unit main board 1320. In addition, the second sub-board 1154b may be surrounded by the second unit main board 1320.

Additionally, the second camera actuator may include the first board 1271 having a second terminal unit. The second terminal unit may be soldered to a first terminal unit of the second unit main board 1320 to be described below. That is, in the second camera actuator, the second board (second board unit) may have the first unit board (first board) and the second unit board (second board). In addition, a plurality of terminals (first terminal units) may be included in one region of the first board (first unit board) disposed on the second side surface. Furthermore, a plurality of pads (corresponding to the second terminal units) may be included in one region of the second board (second board of the second board unit).

Therefore, the image sensor may be positioned on the first unit board of the first board (main board). In addition, the second unit board of the first board may be connected to the first unit board and may include the plurality of terminals (first terminal units).

In addition, the first unit board of the second board (second board unit) may be positioned on the first side surface of the second actuator. In addition, the second unit board of the second board may be connected to the first unit board and may include the plurality of pads (second terminal units).

Therefore, as will be described below, the second unit board (second unit main board) of the first board and the second unit board (second board) of the second board (second board unit) may overlap each other in the direction (e.g., the second direction) perpendicular to the optical axis.

In addition, at least some of the plurality of terminals (first terminal units) on the second unit board of the first board may correspond to at least some of the plurality of pads (second terminal units) on the second unit board of the second board.

Furthermore, as disclosed herein, at least one of the first unit board and/or the second unit board of the first board and at least one of the first unit board and/or the second unit board of the second board may be coupled by soldering. Here, any one of the first unit board and/or the second unit board of the first board and any one of the first unit board and/or the second unit board of the second board may correspond to each other in position. For example, any one of the first unit board and/or the second unit board of the first board and any one of the first unit board and/or the second unit board of the second board may be positioned to face each other. For example, the first unit board (including the plurality of terminals or first terminal units) of the first board and the first unit board (including the plurality of pads or second terminal units) of the second board may be connected by soldering. Alternatively, the second unit board (including the plurality of terminals or first terminal units) of the first board and the second unit board (including the plurality of pads or second terminal units) of the second board may be connected by soldering.

That is, any one of the first board 1271 and the second board 1272 may include the second terminal unit. The second terminal unit may be disposed on each or any one of the first board 1271 and the second board 1272. For example, the first board 1271 of the second camera actuator may include the second terminal unit. In addition, the above-described plurality of sub-boards of the first actuator may include a fourth terminal unit.

Hereinafter, except for FIGS. 33B to 33E, description will be made based on the first board 1271 including the second terminal unit. In addition, hereinafter, description will be made based on any one of the plurality of first sub-boards, which is the second sub-board 1154b, and the second sub-board 1154b including the fourth terminal unit.

Furthermore, the second unit main board 1320 may include the first terminal unit and the third terminal unit. The first terminal unit may be positioned to correspond to the second terminal unit. In addition, the third terminal unit may be positioned to correspond to the fourth terminal unit. In addition, the first terminal unit may be soldered to the second terminal unit. That is, the plurality of terminals (first terminal units) disposed on one region (e.g., on the second side surface) of the first board (main board) and the plurality of pads (second terminal units) disposed on one region (e.g., on the second side surface) of the second board (second board unit) may be soldered. In an embodiment, at least some the first terminal units may be soldered to at least some of the second terminal units. In addition, the first terminal unit may be electrically connected to the second terminal unit. In addition, the third terminal unit may be soldered to the fourth terminal unit. Therefore, the third terminal unit and the fourth terminal unit may be electrically connected.

Furthermore, the second terminal unit may be disposed on at least one of the first board 1271 and the second board 1272. In various embodiments below, the second terminal unit may be disposed on the first board 1271 or the second board 1272 in various cases. Furthermore, the first board 1271 and the second board 1272 may be electrically connected through a connection board. Therefore, as illustrated in FIG. 33D or 33E, a second terminal unit SG2 may be disposed on the first board 1271 or the second board 1272. Furthermore, correspondingly, the first terminal unit SG1 may be disposed on at least one of the second unit main board 1320 and the third unit main board 1330.

Further referring to FIG. 33B, the second unit main board 1320 may extend in the optical axis direction to correspond to or face the first sub-board 1154a. At least a part of the second unit main board 1320 may overlap the first sub-board 1154b in the horizontal direction (Y-axis direction). In addition, the third unit main board 1330 may be disposed to correspond to the second board 1272. Therefore, the third unit main board 1330 may extend to a region corresponding to the second board 1272. Therefore, a length of the second unit main board 1320 in the optical axis direction may be greater than or equal to that of the third unit main board 1330.

In addition, in the embodiment, the first terminal unit SG1 and the third terminal unit SG3 may be disposed on the second unit main board 1320. In addition, the first terminal unit SG1 may also be disposed on the third unit main board 1330.

In addition, the first terminal unit SG1 may be electrically connected to the second terminal unit SG2 on the first board 1271 or the second board 1272 through soldering.

In addition, in the embodiment, at least six first terminal units and second terminal units may be formed.

Furthermore, each of the plurality of terminals may correspond to one of the plurality of pads. Therefore, the number of the plurality of terminals or plurality of pads may be equal to the number of soldering operations. Furthermore, for easy coupling or connection, cross-sectional areas of the plurality of pads may be greater than cross-sectional areas of the plurality of terminals. In addition, the plurality of terminals may include grooves formed in some regions.

In addition, at least some of the plurality of terminals may overlap the plurality of pads in the direction perpendicular to the optical axis. Therefore, it is possible to improve electrical reliability.

The plurality of terminals may be arranged in the optical axis, and the plurality of pads may be arranged along the optical axis.

In addition, as described above, the second unit main board 1320 may include the third terminal unit SG3 coupled or soldered to the fourth terminal unit SG4. In this case, at least a part of the second unit main board 1320 may overlap the first sub-board 1154b in the optical axis direction. In addition, the first sub-board 1154b may include the fourth terminal unit SG4. In addition, the third terminal unit SG3 and the fourth terminal unit SG4 may be coupled and electrically connected by soldering.

Therefore, the fourth terminal unit SG4, the third terminal unit SG3, and the first terminal unit SG1 (or the second terminal unit SG2) may be sequentially arranged in the optical axis direction (Z-axis direction).

In addition, as described above, in the specification, the first terminal unit SG1 may be electrically connected to the second terminal unit SG2, and the third terminal unit SG3 may be electrically connected to the fourth terminal unit SG4. The following description may be applied to this electrical connection.

Referring to FIG. 33C, as a modified example, the fourth terminal unit SG4 of the first sub-board 1154b may be positioned to correspond to the third terminal unit SG3 of the second unit main board 1320. In addition, the second terminal unit SG2 may be disposed on the first board 1271.

In this case, the second unit main board 1320 may be a portion bent from the first unit main board 1310 on which the image sensor is disposed and extending in the optical axis direction. Therefore, the second unit main board 1320 may be a second main board, and the first unit main board 1310 may be a first main board.

In addition, as described above, the second unit main board 1320 may include the third terminal unit SG3 formed at a position corresponding to the fourth terminal unit SG4 and the first terminal unit SG1 formed at a position corresponding to the second terminal unit SG2. That is, it is possible to simply design the main board. In the example, both the first terminal unit SG1 and the third terminal unit SG3 may be disposed on the second unit main board 1320 disposed at one side of the first unit main board 1310 without the above-described third unit main board. Therefore, it is possible to easily reduce the manufacturing cost of the main board or the like. The contents applied to the description of the specification may be applied to other contents in the same manner.

Referring to FIG. 33D, in another embodiment, the fourth terminal unit SG4 of the first sub-board 1154b may be positioned to correspond to the third terminal unit SG3 of the second unit main board 1320. In addition, the second terminal unit SG2 may be disposed on the second board 1272.

That is, the second terminal unit may not be positioned on the first board 1271. In addition, the second terminal unit SG2 may be disposed on the second board 1272, and the first terminal unit SG1 may be disposed on the third unit main board 1330. The first terminal unit SG1 may be positioned to correspond to the second terminal unit SG2.

In addition, the second terminal unit SG2 may be soldered or coupled to the first terminal unit SG1 or connected to the first terminal unit SG1 through a connector or the like. Hereinafter, the contents applied to the description of the specification may be applied to other contents in the same manner.

Referring to FIG. 33E, in still another embodiment, the fourth terminal unit SG4 of the first sub-board 1154b may be positioned to correspond to the third terminal unit SG3 of the second unit main board 1320. In addition, the second terminal unit SG2 may be disposed on the first board 1271.

That is, the second terminal unit may be positioned on the first board 1271. In addition, the second terminal unit may not be present on the second board 1272.

Furthermore, the second terminal unit SG2 may be disposed on the first board 1271, and the first terminal unit SG1 may be disposed on the second unit main board 1320. The first terminal unit SG1 may be positioned to correspond to the second terminal unit SG2.

In addition, the third terminal unit SG3 may be positioned on the first sub-board 1154b of the first actuator.

In the example, unlike FIG. 33C, the fourth terminal unit SG4 may overlap the third terminal unit SG3 in the optical axis direction. Furthermore, the second sub-board 1154b may overlap the second unit main board 1320 in the optical axis direction. At least a part of the second sub-board 1154b may be positioned outside the first board 1271 with respect to the optical axis.

Therefore, in the various embodiments described above, the first actuator may be coupled to the optical member (prism) and the second actuator may be coupled to the lens. However, conversely, depending on the structure, the first actuator may be coupled to the lens, and the second actuator may be coupled to the prism.

Furthermore, the first terminal unit SG1 may include a groove exposing a part of the second terminal unit SG2. For example, the first terminal unit SG1 may have a notch structure. Furthermore, the first terminal unit SG1 may include a conductive exposed region. The conductive exposed region may be electrically connected to the circuit patterns in the board. In addition, the exposed region may be made of metal. For example, the exposed region may be made of copper foil.

In addition, when the third terminal unit SG3 and the fourth terminal unit SG4 overlap each other in the horizontal direction (Y-axis direction), the third terminal unit SG3 may include a groove exposing a part of the fourth terminal unit SG4. Alternatively, each of the third terminal unit SG3 and the fourth terminal unit SG4 may have an exposed conductive region.

In addition, the above-described electrical connection between the terminal units may be made by a conductive member or an electrically conductive member. For example, the second terminal unit may be connected to the first terminal unit by the electrically conductive member. This may be applied to the third terminal unit and the fourth terminal unit in the same manner.

As another example, the respective terminal units may also be connected by a connector.

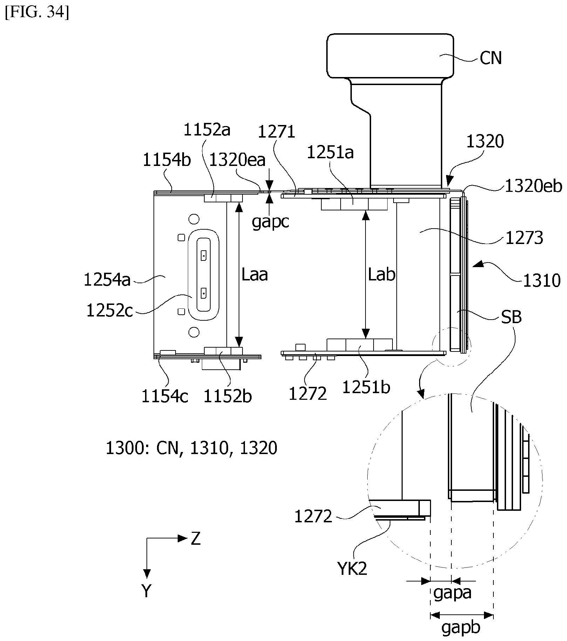

FIG. 34 is a plan view of a circuit board, a first driving unit (excluding some parts), and a second driving unit (excluding some parts) according to an embodiment.

According to the embodiment, as described above, the main board unit 1300 may include a sensor base SB disposed on the first unit main board 1310. In addition, an image sensor may be disposed in the sensor base SB. The image sensor may be mounted on the first unit main board 1310.

In addition, the second unit main board 1320 connected to the first unit main board 1310 and extending in the optical axis direction may be positioned at the outer side of the first board 1271.

In this case, the first board 1271 may be coupled to the second unit main board 1320 with the first yoke positioned at the outer side interposed therebetween. As a coupling member for such coupling, binders made of various materials such as an epoxy may be used.

In addition, the first board 1271 according to the embodiment may be disposed to be spaced apart from the sensor base SB in the optical axis direction. For example, a first separation distance gapa may be formed between the first board 1271 and the sensor base SB. In addition, the first board 1271 may be disposed to be spaced apart from the first unit main board 1310 in the optical axis direction. For example, a second separation distance gapb may be formed between the first board 1271 and the first unit main board 1310 in the optical axis direction.

In addition, the first separation distance gapa may be smaller than the second separation distance gapb.

In addition, the description of the first board 1271 may also be applied to the second board 1272 in the same manner. That is, the second board 1272 may be disposed to be spaced apart from the sensor base SB and the first unit main board 1310.

With this configuration, it is possible to easily increase a size of the sensor base SB. In addition, more circuit elements on the first unit main board 1310 may be protected by being mounted in the sensor base SB. In addition, it is possible to reduce a size of the first board (or the second board), thereby realizing miniaturization.

In addition, a part of the first board 1271 may overlap the sensor base SB in the optical axis direction. Therefore, it is possible to miniaturize the second camera actuator.

In addition, the plurality of sub-boards of the first actuator may not overlap the second unit main board 1320 in the horizontal direction (Y-axis direction).

In addition, the second unit main board 1320 and the plurality of sub-boards (hereinafter referred to as "second sub-boards 1154b") may overlap at least partially in the optical axis direction (Z axis direction). In addition, at least one of the plurality of sub-boards may have the fourth terminal unit. For example, the second sub-board 1154b may include the fourth terminal unit. Therefore, it is possible to easily couple the third terminal unit with the fourth terminal unit by soldering.

As another example, the plurality of sub-boards, that is, the second sub-boards 1154b may overlap the second unit main board 1320 in the horizontal direction (Y-axis direction). Therefore, it is possible to more easily couple the third terminal unit with the fourth terminal unit by soldering.

In this case, at least a part of the second unit main board 1320 may be positioned outside the second sub-board 1154b with respect to the optical axis.

In addition, an end 1320ea of the second unit main board adjacent to the first actuator may be positioned inside an end portion 1320eb thereof in contact with the first unit main board. For example, a distance between the end 1320ea of the second unit main board adjacent to the first actuator and the first coil 1251a may be greater than a distance between the end portion 1320eb of the second unit main board in contact with the first unit main board and the first coil 1251a. Alternatively, the end 1320ea of the second unit main board adjacent to the first actuator may have a separation distance gapc from the end portion 1320eb thereof in contact with the first unit main board in the horizontal direction.

That is, the second unit main board 1320 may have a structure of being closer to the optical axis in the direction opposite to the optical axis.

In addition, in an embodiment, the first board 1271 and the second board 1272 may be positioned in a region between the first sub-board 1154a and the second sub-board 1154b, which are the plurality of sub-boards.

Furthermore, the first board 1271 may overlap the first coil 1251a in the optical axis direction (Z-axis direction). In addition, the second board 1272 may overlap the second coil 1152b in the optical axis direction (Z-axis direction).

In addition, the first coil 1251a and the second coil 1251b may be at least partially positioned in a region between the first coil 1251a and the second coil 1152b. In addition, the first coil 1251a and the second coil 1251b may at least partially overlap the first coil 1251a and the second coil 1152b in the optical axis direction, respectively.

For example, a distance Laa between the first coil 1251a and the second coil 1152b in the horizontal direction (Y-axis direction) may be greater than a distance Lab between the first coil 1251a and the second coil 1251b in the horizontal direction.

Furthermore, the first yoke may overlap the first coil 1251a in the optical axis direction. In addition, the second yoke may overlap the second coil 1152b in the optical axis direction.

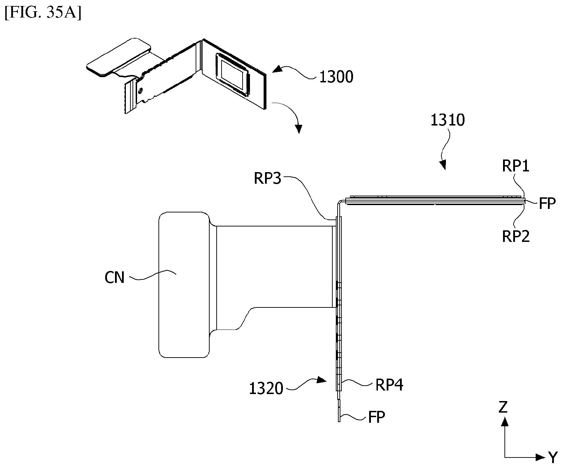

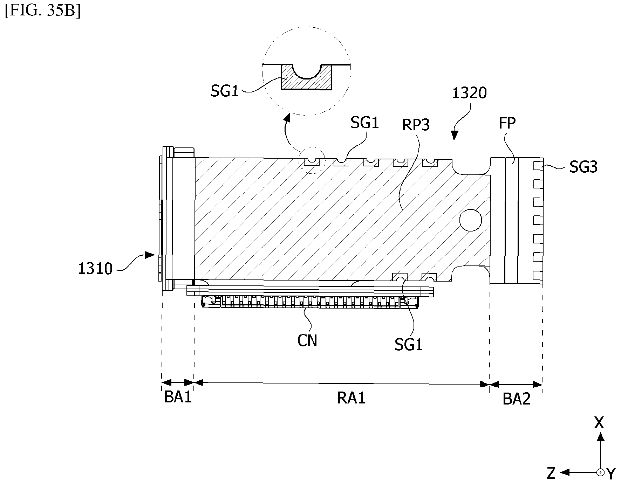

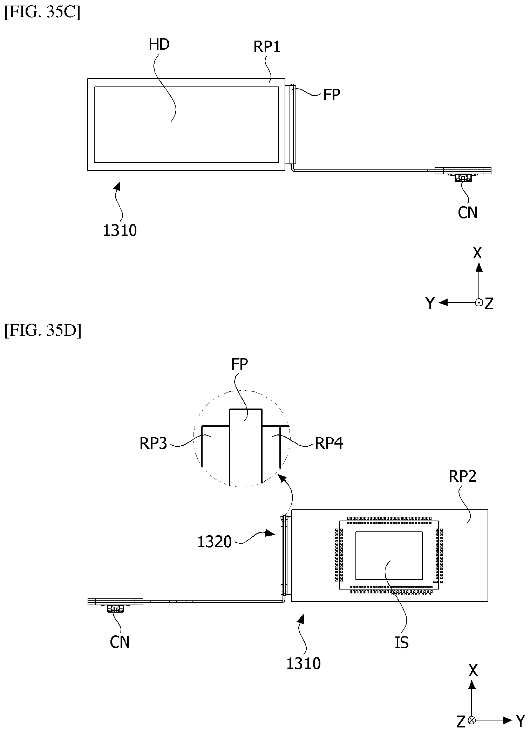

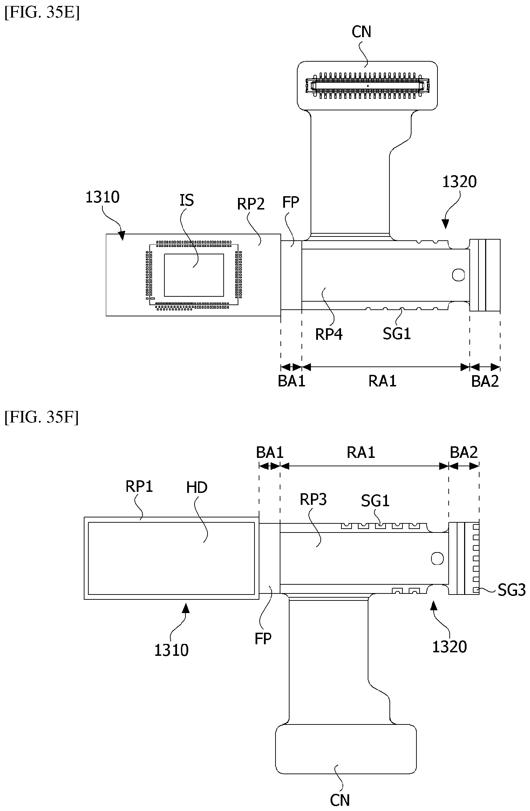

FIG. 35A shows a perspective view and a plan view of the circuit board according to the embodiment, FIG. 35B is a side view of the circuit board according to the embodiment, FIG. 35C is a rear view of the circuit board according to the embodiment, FIG. 35D is a front view of the circuit board according to the embodiment, FIG. 35E is an inner development plan view of the circuit board according to the embodiment, and FIG. 35F is an outer development plan view of the circuit board according to the embodiment.

Referring to FIG. 35A, the second unit main board 1320 may be connected to the connector unit CN. The camera module may be connected to an element (e.g., a processor) in the terminal through the connector unit CN. Connection elements of the connector unit CN may be disposed at various positions and may have various shapes.

As described above, the first unit main board 1310 may include the common board FP and the individual boards RP1 and RP2 at the inner side and/or outer side of the common board.

Hereinafter, specifically, the first individual board RP1 may be positioned at the outer side of the common board FP in the first unit main board 1310. In addition, the second individual board RP2 may be positioned at the inner side of the common board FP of the first unit main board 1310.

The first unit main board 1310 may have stiffness in a region in which the sensor base SB, the image sensor, and the like are seated by the first individual board RP1 and the second individual board RP2.

In addition, the second unit main board 1320 may include the common board FP and the individual boards RP3 and RP4 positioned at the inner side and/or outer side of the common board.

The third individual board RP3 may be positioned at the outer side of the common board FP in the second unit main board 1320. In addition, the second individual board RP4 may be positioned at the inner side of the common board FP of the second unit main board 1320.

As described above, the first unit main board 1310 and the second unit main board 1320 may include the common board FP in common. The common board may be an integrated type.

In addition, the fourth individual board RP4 may face the above-described first yoke or first board.

Referring to FIG. 35B, the second unit main board 1320 may include the first terminal unit SG1. In this case, the first terminal unit SG1 may be positioned on one layer of the second unit main board 1320. For example, the first terminal unit SG1 may be positioned on an outermost layer of the second unit main board 1320. Therefore, the first terminal unit SG1 may be positioned on the third individual board RP3. Therefore, some regions of the third individual board RP3 may be exposed. In addition, the exposed region may be made of a conductive material as described above.

In addition, lengths of the third individual board RP3 and the fourth individual board RP4 in the optical axis direction may be smaller than a length of the common board FP in the optical axis direction.

The common board FP may extend adjacent to the first actuator. In addition, the third terminal unit SG3 may be positioned on the common board FP. Therefore, the first terminal unit SG1 may be positioned outside the third terminal unit SG3 with respect to the optical axis.

In addition, each of the first terminal unit SG1 and the third terminal unit SG3 may be positioned on a different layer of the second unit main board 1320.

In addition, a plurality of first terminal units SG1 may be formed and arranged in the optical axis direction. In addition, a plurality of third terminal units SG3 may be formed and arranged in the first direction or the vertical direction (X-axis direction).

Therefore, arrangement directions of the first terminal unit SG1 and the third terminal unit SG3 may be different from each other. Therefore, each of the first terminal unit SG1 and the third terminal unit SG3 may be easily soldered.

Furthermore, since the first terminal unit SG1 is positioned at the outer side of the second unit main board 1320, a soldering operation may be easily performed. Furthermore, the first terminal unit SG1 may also be positioned at a corner of the third individual board RP3. Therefore, a soldering operation may be performed more easily.

Furthermore, the second unit main board 1320 may include a first side surface region RA1, a first connection region BA1, and a second connection region BA2. The first side surface region RA1 may correspond to the region in which the individual boards are positioned. In addition, the first connection region BA1 may be positioned between the first side surface region RA1 and the first unit main board 1310. In addition, the second connection region BA2 may be a region adjacent to the first actuator.

The first terminal unit SG1 may be position in the first side surface region RA1. In addition, the third terminal unit SG3 may be positioned in the second connection region BA2.

The first side surface region RA1 according to the embodiment may overlap the fourth and fifth coils in the second direction (Y-axis direction). In addition, the second unit main board 1320 may not overlap the first and second coils in the horizontal direction.

In addition, the first connection region BA1, the first side surface region RA1, and the second connection region BA2 may be sequentially positioned in the direction opposite to the optical axis direction.

The first side surface region RA1 may further include a material different from those of the first connection region BA1 and the second connection region BA2. Alternatively, as described above, the first connection region BA1 and the second connection region BA2 may be formed of the flexible PCB without the rigid PCB. Alternatively, the first connection region BA1 and the second connection region BA2 may be more flexible than the first side surface region RA1. A region made of the flexible board may correspond to a flexible region (or a connection region), and a region including the rigid board may correspond to a rigid region (side surface region). For example, the first connection region BA1 and the second connection region BA2 are the flexible PCBs (FPCB), and the first side surface region RA1 may be the rigid PCB (RPCB) or a region in which the RPCB is additionally disposed on the FPCB. With this configuration, since the FPCB absorbs an impact or the like, it is possible to block the above-described boards (the circuit board, the first board unit, and the second board unit) of the camera module according to the embodiment from being disconnected or separated due to movements of electronic devices, such as shaking. Furthermore, the second connection region BA2 may also have an inward stepped portion. Therefore, it is possible to increase the coupling strength between the first actuator and the second actuator and the main board (e.g., the second unit main board).

In addition, the first connection region BA1 and the second connection region BA2 according to the embodiment may have a stepped portion with the first side surface region RA1. For example, the first connection region BA1 and the second connection region BA2 may be spaced a predetermined distance from the first side surface region RA1 in the second direction (Y-axis direction).

Referring to FIG. 35C, a heat-dissipation plate HD may be additionally disposed on the first unit main board 1310. The heat-dissipation plate may be positioned at the outer side of the common board FP. For example, the heat-dissipation plate HD may be positioned at the outer side of the first individual board RP1. Therefore, the heat generated from the image sensor may be easily dissipated to the outside. In addition, the heat-dissipation plate HD may be formed in various shapes such as a quadrangle and a circle.

Referring to FIG. 35D, the image sensor IS may be positioned on the second individual board RP2 of the first unit main board 1310. The image sensor IS may be mounted on the first unit main board 1310 and electrically connected to the board (the common board or the individual board). Therefore, a terminal to be electrically connected to the image sensor IS may be present. The image sensor may be connected to the first unit main board 1310 through various methods such as wiring and soldering.

In addition, a length of the common board FP in the first direction may be greater than those of the third individual board RP3 and the fourth individual board RP4. This may also be applied to the common board FP, the first individual board, and the second individual board in the same manner.

Further referring to FIGS. 35E and 35F, the second unit main board 1320 may include a board inner side surface 1320a facing the first board and a board outer side surface 1320b that is a surface opposite to the board inner side surface 1320a. The board inner side surface 1320a corresponds to the fourth individual board. The board outer side surface 1320b corresponds to the third individual board.

In addition, the first side surface region RA1 may include a first side surface hole 1320h1. The first side surface hole 1320h1 may be coupled to the second board and the second camera actuator through the protrusion of the second camera actuator or the like.

The first terminal unit SG1 may be disposed on the board outer side surface 1320b. The first terminal unit SG1 may be disposed along an edge of the board outer side surface 1320b. In the specification, a plurality of terminal units are electrically connected regions, and electrode patterns may be exposed to the outside.

The first terminal unit SG1 may be disposed on a long side rather than a short side among edges of the first side surface region RA1. With this configuration, it is possible to easily secure an arrangement space of the electrically connected first terminal units SG1 in the second unit main board. Therefore, it is possible to easily prevent the occurrence of a short circuit and enable various electrical designs.

In addition, the third terminal unit SG3 may be disposed on the board outer surface 1320b or in the second connection region BA2 of the second unit main board 1320. In addition, the third terminal unit SG3 may be disposed on a long side rather than a short side among edges of the second connection region BA2. Therefore, it is possible to suppress the occurrence of the short circuit and facilitate the electrical design.

In addition, as described below, the first terminal unit SG1 may be disposed on the second unit main board 1310, and the second terminal unit SG2 may be disposed on the first board 1271. That is, the first terminal unit SG1 may be disposed on any one of the second unit main boards 1320. In addition, the second terminal unit may be disposed on any one of the first board 1271 and the second board 1272 of the second camera actuator.

As a modified example, the first terminal unit SG1 may be disposed on the board inner side surface 1320a. In addition, the first terminal unit SG1 may also be disposed on the long side and/or the short side of the edge of the first side surface region RA1 on the board inner side surface 1320a.

As described above, the first unit main board 1310 may be electrically connected to the first camera actuator and the second camera actuator through the second unit main board 1320 or the third unit main board. Therefore, one or more driving drivers IC may be mounted on the main board. That is, the number of mounted driving drivers may be easily adjusted. Furthermore, since one second unit main board is electrically connected to the first camera actuator and the second camera actuator, it is possible to eliminate the individual electrical connection structure, thereby simplifying the bonding process and reducing impact vulnerability due to bonding.

That is, the first terminal unit SG1 and the third terminal unit SG3 may be disposed on the board inner side surface 1320a and the board outer side surface 1320b of the second unit main board. With this configuration, the main board may be easily coupled to the first board and the second sub-board through a conductive member (or an electrically conductive member) to be described below and may provide an increased coupling strength. The conductive member to be described below may be made of various materials such as a conductive material. For example, the conductive member may be metal, and the second terminal unit SG2 may be disposed at the inner side of the first terminal unit SG1. In addition, the first yoke YK1 may be disposed on the outer surface of the first board 1271. In addition, the second yoke YK2 may be disposed on the outer surface of the second board 1272.

In addition, the first coil 1251a may be disposed on the inner surface 1271b of the first board 1271. The first coil 1251a may be mounted on and electrically connected to the inner surface 1271b of the first board 1271. In addition, the second coil 1251b may be disposed on the inner surface 1272b of the second board 1272. The second coil 1251b may be mounted on and electrically connected to the inner surface 1272b of the second board 1272.

The connection terminal between the first coil 1251a and the first board 1271 may be symmetrically positioned or misaligned (diagonal) with the connection terminal between the second coil 1251b and the second board 1272 with respect to the optical axis.

The outer surface 1271a of the first board 1271 may face the second unit main board. The outer surface 1272a of the second board 1272 may face the third unit main board (when present).

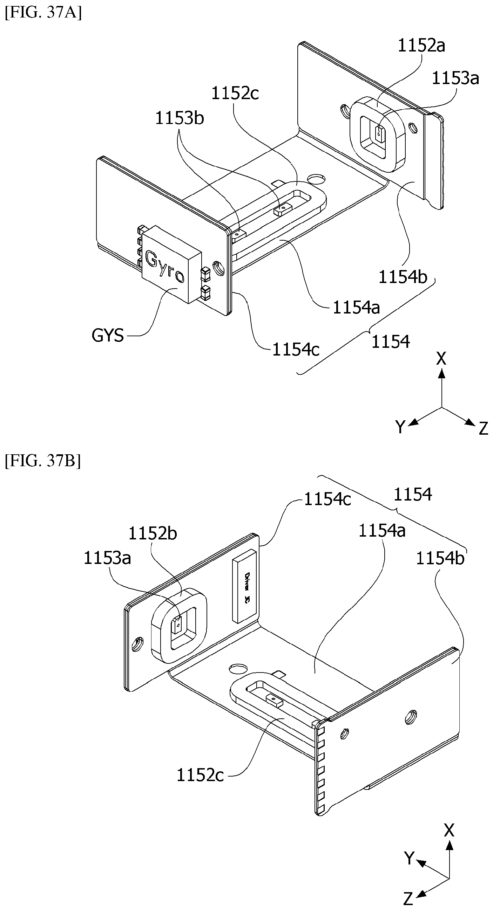

FIG. 37A is a perspective view the first driving unit (excluding some parts) in one side direction according to the embodiment, and FIG. 37B is a perspective view of the first driving unit (excluding some parts) in the other side direction according to the embodiment.

Referring to FIGS. 37A and 37B, the first sub-board 1154a may be connected to the second sub-board 1154b and the third sub-board 1154c disposed on the side surfaces of the first camera actuator. The first sub-board 1154a, the second sub-board 1154b, and the third sub-board 1154c of the first board part 1154 may be an integrated structure or separate structures. In addition, the first sub-board 1154a, the second sub-board 1154b, and the third sub-board 1154c may be connected through circuit patterns or the like. In addition, a processor, a driver IC, and the like may be disposed on any one of the first sub-board 1154a, the second sub-board 1154b, and the third sub-board 1154c. In addition, the processor and the driver IC may supply a current to each of the coils mounted on the first sub-board 1154a, the second sub-board 1154b, and the third sub-board 1154c.

The third coil 1152c may be disposed on the first sub-board 1154a according to the embodiment. In addition, the first coil 1251a may be disposed on the second sub-board 1154b. In addition, the second coil 1152b may be disposed on the first sub-board 1154a.

In addition, the outer surface of the second sub-board 1154b may be positioned to correspond to the above-described second unit main board. For example, the second sub-board 1154b may overlap the second unit main board in the optical axis direction (Z-axis direction) or overlap the second unit main board in the horizontal direction (Y-axis direction).

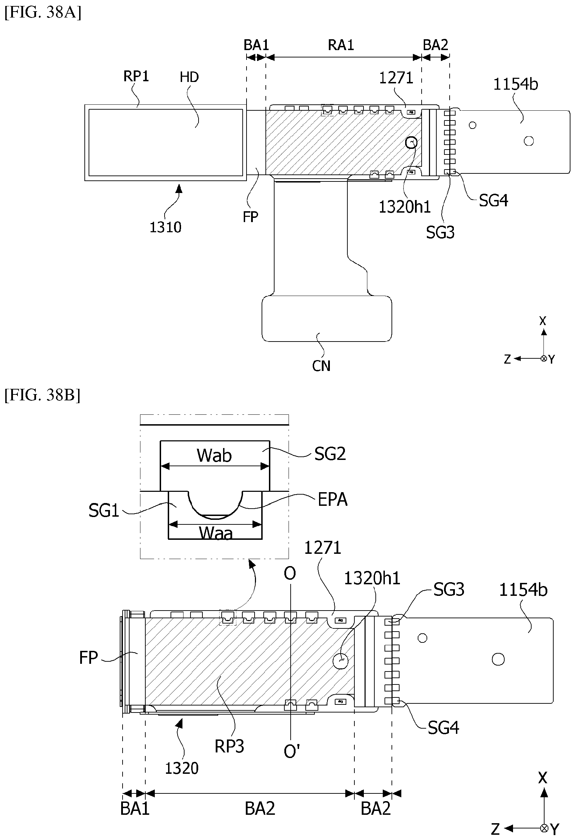

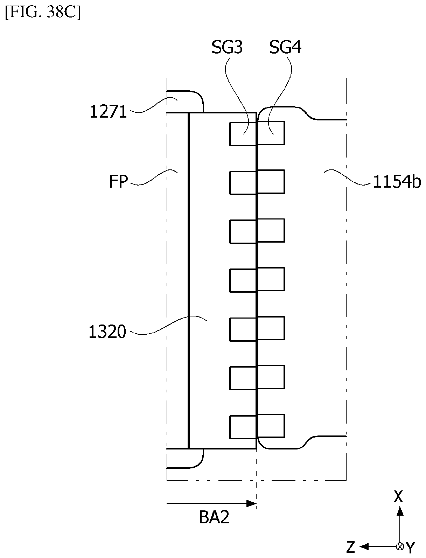

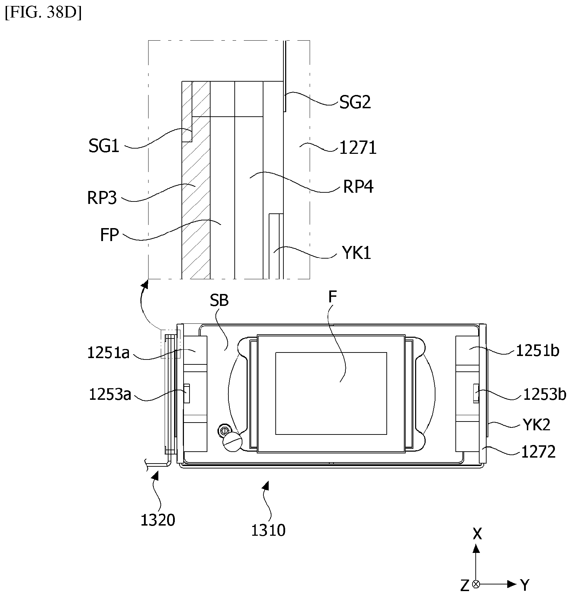

FIG. 38A is an outer development plan view of an circuit board, a first board unit, and a second board unit according to an embodiment, FIG. 38B is an enlarged view of portion K1 in FIG. 38A, FIG. 38C is an enlarged view of portion K2 in FIG. 38A, and FIG. 38d is a view of the circuit board, the first board unit, and the second board unit along line O-O' in FIG. 38B.

Referring to FIGS. 38A to 38D, the outer surface of the first terminal unit SG1 may be convex inward or concave outward. With this configuration, the conductive member may easily fill the inside of the first terminal unit SG1.

For example, the second unit main board 1320 may be positioned on the first board 1721. Based on this, the second terminal unit SG2 may be positioned under the first terminal unit SG1. The first terminal unit SG1 may overlap the second terminal unit SG2 in the second direction (Y-axis direction).

The length of the first terminal unit SG1 in the first direction (X-axis direction) may be smaller than the length of the second terminal unit SG2 in the first direction (X-axis direction). With this configuration, when the conductive member is applied to the first terminal unit SG1 and the second terminal unit SG2, the conductive member may not flow into the first board. Furthermore, the first terminal unit SG1 and the second terminal unit SG2 may be easily coupled by the conductive member.

In addition, a length Waa of the first terminal unit SG1 in the third direction or the optical axis direction may be smaller than a length Wab of the second terminal unit SG2 in the optical axis direction. Therefore, the soldered conductive member may not flow into the first board.

An area of the first terminal unit SG1 may be smaller than that of the second terminal unit SG2. Therefore, electrical connection can be made more accurately. In addition, it is possible to easily secure stiffness by soldering. Furthermore, even when there is a shift of the first board 1271 during active alignment of the first and second lens assemblies or active alignment of the sensor base SB, it is possible to easily secure a soldering region. In addition, the first board 1271 may include an exposure region EPA overlapping the hole of the first terminal unit SG1 in the horizontal direction. The exposed region EPA may be a region separated from the second terminal unit SG2. Therefore, the conductive member may be seated on the second terminal unit SG2 after flowing through the first terminal unit SG1.

In addition, the third terminal unit SG3 may be positioned to correspond to the fourth terminal unit SG4 of the second sub-board 1154b. The third terminal unit SG3 and the fourth terminal unit SG4 may at least partially overlap each other in the optical axis direction. With this configuration, it is possible to easily electrically connect the third terminal unit with the fourth terminal unit by soldering.

The first yoke YK1 disposed at the outer side of the first board 1271 may be disposed between the second unit main board 1310 and the first board 1271. Therefore, the first yoke YK1 may easily block the conductive member applied to the first terminal unit SG1 from flowing into the actuator after passing the first board 1271.

In addition, the first yoke YK1 may be coupled to the second unit main board 1310 and the first board 1271 between the second unit main board 1310 and the first board 1271. In addition, the first yoke YK1 may block a magnetic force or the like provided to the second unit main board 1310.

In addition, as described above, a part of the first board 1271 may or may not overlap the sensor base SB in the optical axis direction (Z-axis direction).

In addition, the length of the second unit main board 1320 in the vertical direction may be smaller than that of the first board 1271. Therefore, the first terminal unit SG1 and the second terminal unit SG2 may be easily soldered.

In addition, the first terminal unit SG1 may not overlap at least a part of the third terminal unit SG3 in the optical axis direction (Z-axis direction). As described above, the first terminal unit SG1 may be positioned at a first corner of the second unit main board 1320, and the third terminal unit SG3 may be positioned at a second corner perpendicular to the first corner. Therefore, the soldering work process may be performed by distinguishing each position.

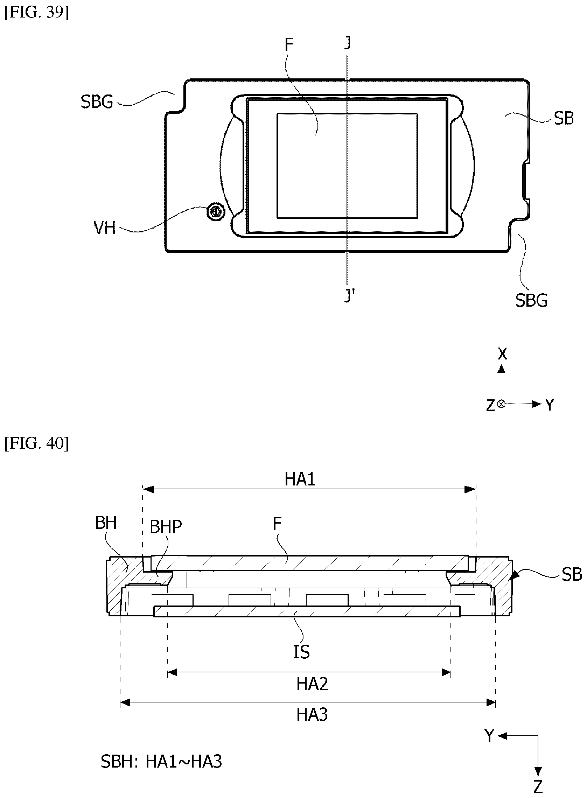

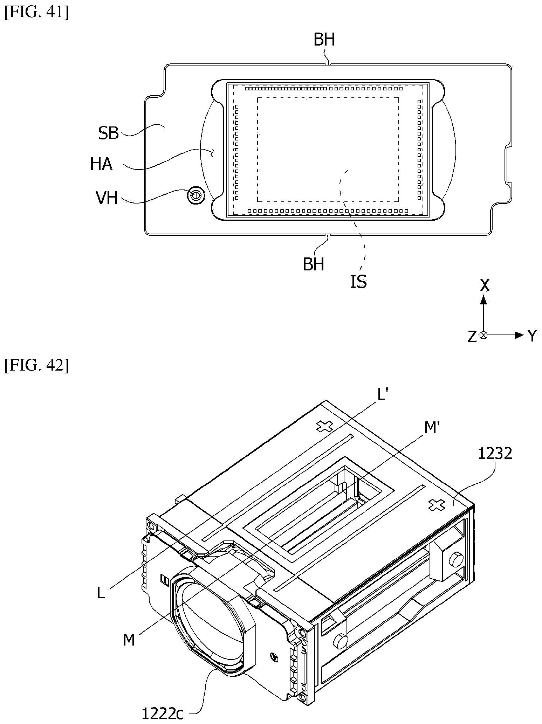

FIG. 39 is a plan view of a sensor base, a filter, and an image sensor according to an embodiment, FIG. 40 is a view of the sensor base, the filter, and the image sensor along line J-J' in FIG. 39, and FIG. 41 is a plan view of the sensor base and the image sensor according to the embodiment.

Referring to FIGS. 39 to 41, the main board or the main board unit of the camera module according to the embodiment includes the sensor base surrounding the image sensor IS as described above.

In addition, the sensor base SB may include an inflow groove BH disposed on an upper surface thereof. For example, the main board and the sensor base SB may be coupled by a bonding member such as an epoxy. In addition, the sensor base and the second actuator may also be coupled by the bonding member such as an epoxy. In this case, the bonding member may be introduced between the second camera actuator and the sensor base SB through the inflow groove BH.

In addition, the sensor base SB may include base grooves SBG formed in side surfaces thereof. A plurality of base grooves SBG may be formed and positioned to be misaligned (diagonal) with each other.

In addition, in an embodiment, the sensor base SB may be formed of a base housing BH including a base hole SBH.

The base housing BH may include a protrusion BHP extending inward. Therefore, the base hole SBH of the sensor base SB may include a first hole region HA1 positioned above the extending protrusion BHP and a third hole region HA3 positioned under the extending protrusion BHP. Furthermore, the base hole SBH may include a second hole region HA2 corresponding to the extending protrusion BHP. An area of the second hole region HA2 may be smaller than that of the first hole region HA1 or the third hole region HA3.

In addition, the main board unit or main board may include a filter F disposed above the image sensor IS. The filter F may be seated on the protrusion BHP of the base housing BH. The filter F may block or pass light in a predetermined wavelength band.

The filter F may be disposed in the first hole region HA1. In addition, the first hole region HA1 may further include a blocking structure (e.g., a groove) at an outer side of the filter F. The groove can prevent overflow of the bonding member when the bonding member is applied to mount the filter F on the sensor base SB.

The image sensor may be disposed in the third hole region HA3. Therefore, it is possible to easily block foreign substances flowing into the image sensor IS.

Specifically, after attaching the filter F to the sensor base SB, the sensor base SB and the filter F may be attached or coupled to, or disposed on the main board part (e.g., the first unit main board) through the bonding member or the coupling member. In addition, a vent hole VH connected to the third hole region HA3 may be sealed. Air or the like under the filter F or in the second hole region HA2 and the third hole region HA3 may be discharged to the outside through the vent hole VH.

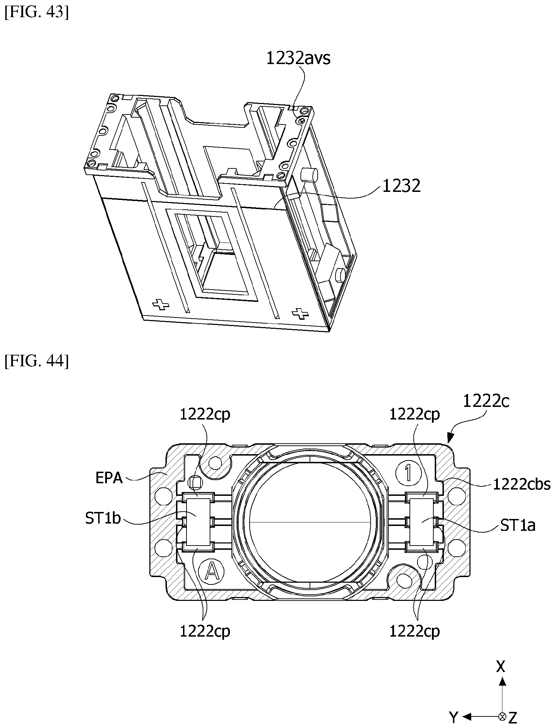

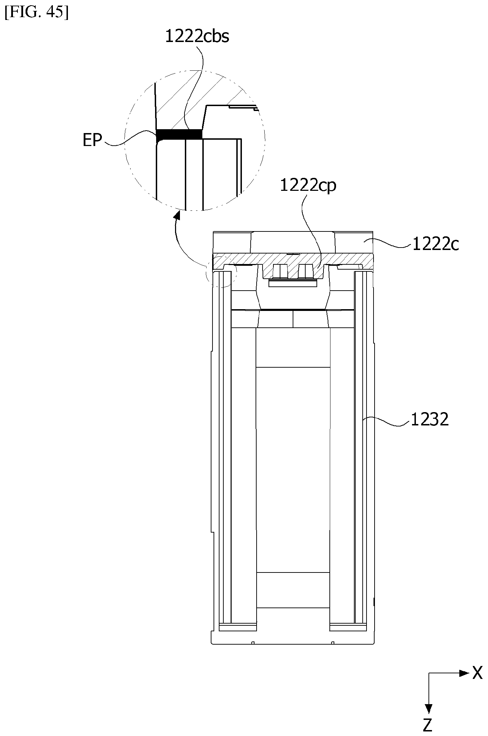

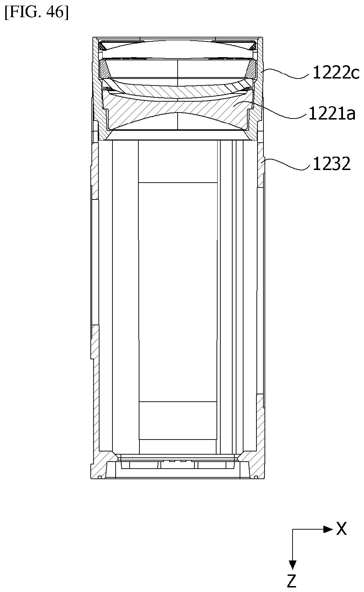

FIG. 42 is a view illustrating a second housing and a fixed lens assembly according to an embodiment, FIG. 43 is a perspective view of the second housing according to the embodiment, FIG. 44 is a view of the fixed lens assembly according to the embodiment, FIG. 45 is a view of the second housing and the fixed lens assembly along line L-L' in FIG. 42, and FIG. 46 is a view of the second housing and the fixed lens assembly along line M-M' in FIG. 42.

Referring to FIGS. 42 to 46, a third lens assembly 1222c may be positioned at front ends of the first lens assembly and the second lens assembly. Therefore, the third lens assembly 1222c, the first lens assembly, and the second lens assembly may be sequentially arranged in the optical axis direction. The third lens assembly may correspond to the 2-1 housing. In addition, a first lens group 1221a may be positioned in the third lens assembly 1222c. Hereinafter, the terms "third lens assembly" and "2-1 housing" are used interchangeably.

The third lens assembly 1222c may be positioned at a front end of the 2-2 housing 1232.

An upper surface 1232avs of the 2-2 housing 1232 may face a lower surface 1222cbs of the third lens assembly 1222c. In this case, a bonding member (e.g., an epoxy) may be disposed between the upper surface 1232avs of the 2-2 housing 1232 and the lower surface 1222cbs of the third lens assembly 1222c. Therefore, the active alignment for the first lens group 1221a may be performed. For example, after the active alignment (e.g., the optical axis alignment) is performed on the first lens group 1221a to the third lens group, the third lens assembly 1222c and the 2-2 housing 1232 may be coupled by the curing of the bonding member or the like.

The lower surface 1222cbs of the second lens assembly 1222b may include an assembly protrusion 1222cp protruding in the optical axis direction. A first stopper may be positioned on the assembly protrusion 1222cp. For example, a plurality of assembly protrusions 1222cp may be formed. In addition, a 1-1 stopper STla may be positioned at one side of the first lens group 1221a on at least one assembly protrusion 1222cp. In addition, a 1-2 stopper ST1b may be positioned on the at least one assembly protrusion 1222cp. The 1-1 stopper STla and the 1-2 stopper ST1b may be symmetrically positioned with respect to the first lens group 11221a or the optical axis.

In addition, the bonding member EP may be applied to the outer region EPA with respect to the first stopper on the lower surface 1222cbs. A plurality of grooves or the like may be present on the lower surface 1222cbs, and the lower surface 1222cbs may be coupled to the 2-2 housing 1232 through these grooves. In addition, it is possible to increase a coupling strength.

In addition, the outer region EPA may not overlap the first lens group 1221a in the optical axis direction. The outer region EPA may be positioned at the outer side of the first lens group 1221a. Therefore, it is possible to easily block the bonding member from influencing the first lens group 1221a.

Furthermore, a groove may be further formed in a region between the outer region EPA and the first lens group 1221a. Therefore, it is possible to block the bonding member from moving to the first lens group 1221a.

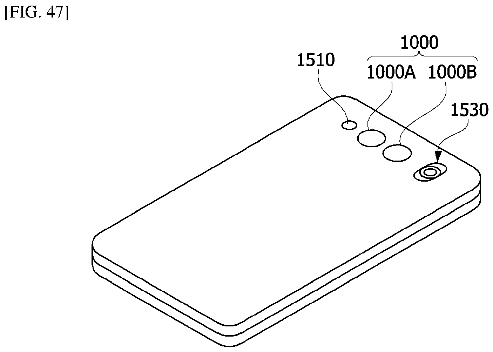

FIG. 47 is a perspective view of a mobile terminal to which the camera module according to the embodiment is applied.

Referring to FIG. 47, a mobile terminal 1500 according to the embodiment may include a camera module 1000, a flash module 1530, and an AF device 1510, which are provided on a rear surface thereof.

The camera module 1000 may include an image capturing function and an AF function. For example, the camera module 1000 may include the AF function using an image.

The camera module 1000 processes an image frame of a still image or a moving image obtained by an image sensor in a capturing mode or a video call mode.

The processed image frame may be displayed on a predetermined display and stored in a memory. A camera (not illustrated) may also be disposed on a front surface of a body of the mobile terminal.

For example, the camera module 1000 may include a first camera module 1000A and a second camera module 1000B, and the first camera module 1000A may implement an OIS function together with an AF/zooming function.

The flash module 1530 may include a light emitting device for emitting light therein. The flash module 1530 may be operated by a camera operation of the mobile terminal or the user's control.

The AF device 1510 may include one of packages of a surface light emitting laser device as a light emitting unit.

The AF device 1510 may include the AF function using a laser. The AF device 1510 may be mainly used in a condition that the AF function using the image of the camera module 1000 is degraded, for example, a proximity of 10 m or less or dark environment.

The AF device 1510 may include a light emitting unit including a vertical cavity surface emitting laser (VCSEL) semiconductor device and a light receiving unit for converting light energy into electrical energy, such as a photodiode.

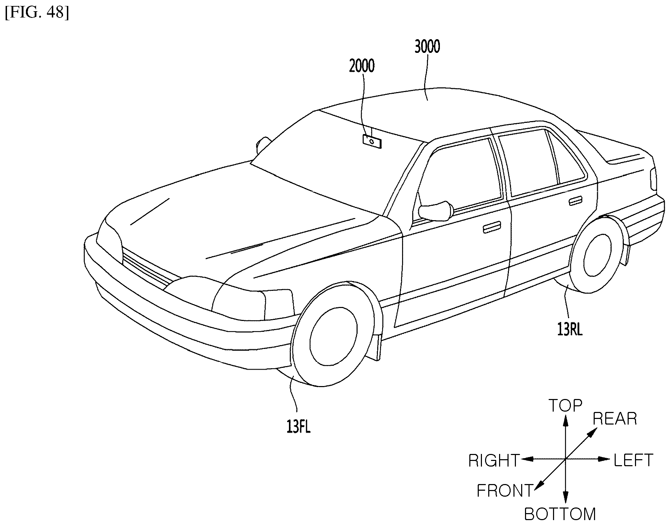

FIG. 48 is a perspective view of a vehicle to which the camera module according to the embodiment is applied.

For example, FIG. 48 is an external view of the vehicle including a vehicle driver assistance device to which the camera module 1000 according to the embodiment is applied.

Referring to FIG. 48, a vehicle 700 in the embodiment may include wheels 13FL and 13FR rotated by a power source and a predetermined sensor. The sensor may be a camera sensor 2000, but the present disclosure is not limited thereto.

The camera sensor 2000 may be a camera sensor to which the camera module 1000 according to the embodiment is applied. The vehicle 700 in the embodiment may acquire image information through the camera sensor 2000 for capturing a front image or a surrounding image, determine a situation in which a lane line is not identified using the image information, and generate a virtual lane line when the lane line is not identified.

For example, the camera sensor 2000 may acquire a front image by capturing a view in front of the vehicle 700, and a processor (not illustrated) may acquire image information by analyzing an object included in the front image.

For example, when a lane line, an adjacent vehicle, a traveling obstacle, and objects, such as a median, a curb, or a tree corresponding to an indirect road mark, are captured in the image captured by the camera sensor 2000, the processor may detect the object and include the detected object in the image information. At this time, the processor may further supplement the image information by acquiring distance information to the object detected through the camera sensor 2000.

The image information may be information on the object captured in the image. The camera sensor 2000 may include an image sensor and an image processing module.

The camera sensor 2000 may process still images or moving images obtained by the image sensor (e.g., a complementary metal-oxide semiconductor (CMOS) or a charge-coupled device (CCD)).

The image processing module may process the still images or moving images acquired through the image sensor to extract necessary information, and transmit the extracted information to the processor.

At this time, the camera sensor 2000 may include a stereo camera for improving the measurement accuracy of the object and further securing information such as a distance between the vehicle 700 and the object, but the present disclosure is not limited thereto.

Although embodiments have been mainly described above, these are only illustrative and do not limit the present disclosure, and those skilled in the art to which the present disclosure pertains will understand that various modifications and applications not exemplified above are possible without departing from the essential characteristics of the embodiments. For example, each component specifically illustrated in the embodiments may be implemented by modification. In addition, differences related to these modifications and applications should be construed as being included in the scope of the present disclosure defined in the appended claims.

## Claims

1. A camera actuator comprising:
a housing;
a first lens assembly and a second lens assembly configured to move in an optical axis direction with respect to the housing;
a first driving unit configured to move the first lens assembly;
a second driving unit configured to move the second lens assembly; and
a first yoke disposed to overlap the first driving unit in a direction perpendicular to the optical axis direction,
wherein the first yoke includes a first region and a second region having a different thickness from the first region.

2. The camera actuator of claim 1, wherein the second region is thicker than the first region.

3. The camera actuator of claim 1, wherein a length of the second region is smaller than a length of the first region in the optical axis direction.

4. The camera actuator of claim 1, wherein the first driving unit includes a first magnet, and
the first magnet includes a first pole region, a neutral region, and a second pole region sequentially disposed in the optical axis direction.

5. The camera actuator of claim 4, wherein, when the first magnet maximally moves in the optical axis direction, the first pole region of the first magnet is disposed to overlap the first region.

6. The camera actuator of claim 4, wherein, when the first magnet maximally moves in a direction opposite to the optical axis direction, the first pole region of the first magnet is disposed to overlap the second region.

7. The camera actuator of claim 4, wherein, when the first magnet maximally moves in a direction opposite to the optical axis direction, a length of the second region is greater than a length of an overlapping region between the second region and the first pole region.

8. The camera actuator of claim 5, wherein, when the first magnet maximally moves in a direction opposite to the optical axis direction, a length of the second region is smaller than a sum of a length of an overlapping region between the second region and the first pole region and a length of the neutral region.

9. The camera actuator of claim 4, wherein a length of the first pole region is different from a length of the second region.

10. The camera actuator of claim 4, wherein a length of the second region is smaller than a length of the first magnet.

11. The camera actuator of claim 4, wherein the first yoke includes a boundary region between the first region and the second region, and
when the first magnet maximally moves in a direction opposite to the optical axis direction, the boundary region overlaps the neutral region.

12. The camera actuator of claim 1, further comprising a second yoke disposed to overlap the second driving unit in the direction perpendicular to the optical axis direction,
wherein a first region of the second yoke has a different thickness from a second region of the second yoke.

13. The camera actuator of claim 1, wherein the second region and the first region of the first yoke are sequentially disposed in the optical axis direction.

14. The camera actuator of claim 1, wherein the second region of the first yoke protrudes outward or inward from the first region.

15. The camera actuator of claim 1, wherein the first driving unit includes a first magnet and a first coil facing the first magnet, and
the first coil includes a hollow.

16. The camera actuator of claim 15, wherein the second region does not overlap the hollow.

17. The camera actuator of claim 12, wherein the second region of the first yoke overlaps the second region of the second yoke.

18. The camera actuator of claim 12, wherein at least a part of the second region of the first yoke is misaligned with the second region of the second yoke.

19. The camera actuator of claim 1, wherein a length of the second region is in the range of 20% to 50% of a length of the first yoke in the optical axis direction.

20. The camera actuator of claim 1, wherein a thickness of the second region of the first yoke is 1.2 to 1.7 times a thickness of the first region thereof.

21. A camera actuator comprising:
a housing;
a first lens assembly and a second lens assembly disposed in the housing;
a first driving unit configured to move the first lens assembly in an optical axis direction; and
a first yoke disposed to overlap the first driving unit in a direction perpendicular to the optical axis direction,
wherein the first driving unit includes a first magnet,
the first magnet includes a first pole region, a second pole region, and a neutral region disposed between the first pole region and the second pole region,
the first yoke includes a first region and a second region having a different magnetic strength from the first region, and
when the first lens assembly moves to a maximum moving distance, the second region overlaps the first pole region of the first magnet in the direction perpendicular to the optical axis direction.

22. The camera actuator of claim 21, wherein, when the first lens assembly maximally moves in a direction opposite to the optical axis direction, a boundary region between the first region and the second region overlaps the neutral region.

23. The camera actuator of claim 22, wherein the second region does not overlap the second pole region in the direction perpendicular to the optical axis direction.

24. A camera actuator comprising:
a housing;
a first lens assembly and a second lens assembly configured to move in an optical axis direction with respect to the housing;
a first driving unit configured to move the first lens assembly;
a second driving unit configured to move the second lens assembly; and
a first yoke disposed to overlap the first driving unit in a direction perpendicular to the optical axis direction,
wherein the first yoke includes a first region and a second region having a different magnetic strength from the first region.
